# EUROPEAN PATENT APPLICATION

(11) **EP 2 362 393 A2**
(43) Date of publication of application: **31.08.2011**
(21) Application number: 11001273.9
(22) Date of filing: 16.02.2011
(51) Int. Cl.: G11B 20/00, G11B 20/12, G11B 27/10, G11B 27/11, G11B 27/32, G11B 27/34, G06F 21/00, H04N 7/173, G06Q 30/00, G06Q 20/00

(54) **Information storage medium, recording and reproduction apparatus, method of controlling recording and reproduction apparatus, control program, and communication system**

(30) Priority: 17.02.2010 JP 2010032405; 12.03.2010 JP 2010056683
(71) Applicant: Sharp Kabushiki Kaisha, Osaka-shi, Osaka 545-8522 (JP)
(72) Inventor: Kotani, Teruhisa, Osaka-shi Osaka 545-8522 (JP); Kitazawa, Tazuko, Osaka-shi Osaka 545-8522 (JP); Tajima, Hideharu, Osaka-shi Osaka 545-8522 (JP)
(74) Representative: Müller - Hoffmann & Partner

(57) **Abstract**

An optical disk (100) stores operation identification information which causes a recording and reproduction apparatus (1) into which the optical disk (100) is inserted to recognize the optical disk (100) as a disk causing the recording and reproduction apparatus (1) to perform a commercial transaction over a network, and which serves as a trigger for causing the recording and reproduction apparatus (1) to perform the commercial transaction. Hence, by causing the recording and reproduction apparatus (1) to recognize the operation identification information before the contents is downloaded, it is possible to prevent important information such as personal information stored in the optical disk (100) from leaking over the network via the recording and reproduction apparatus (1). This as a result allows improvement in security against information leakage.

## Description

### Technical Field

The present invention relates to providing an information storage medium which allows improvement in security against information leakage, and relates to providing a recording and reproduction apparatus, a method of controlling a recording and reproduction apparatus, a control program, and a communication system.

### Background Art

With a conventional disk that allows performing a commercial transaction over a network, a program stored in the disk cooperates with a user terminal so that contents and the like required for performing the commercial transaction is downloaded to the disk.

For example, with a prepaid disk disclosed in Patent Literature 1, a user terminal and a contents obtaining program stored in the disk cooperate with each other, to download contents information from a download server.
Citation List
Patent Literature
Patent Literature 1
Japanese Patent Application Publication, Tokukai, No. 2003-132425 A (Publication Date: May 9, 2003)

### Summary of Invention

### Technical Problem

However, with the configuration disclosed in Patent Literature 1, a network connection is initiated for downloading contents even in a case where the contents obtaining program is stored in a disk which is not a prepaid disk, caused by the contents obtaining program cooperating with the user terminal. This network connection may cause unnecessary leakage of important information (e.g., personal information) that is stored in the disk.

This problem can also occur with a disk other than the prepaid disk, as long as the disk is capable of performing commercial transaction.

The present invention is accomplished in order to solve the foregoing problem, and its object is to provide an information storage medium, a recording and reproduction apparatus, a method of controlling a recording and reproduction apparatus, a control program, and a communication system, each of which allows improvement in security against information leakage, while also allowing establishment of telecommunication with an information management server by use of a public connection network without the user having to obtain a connection right or provide their personal information to a telecommunications carrier.

### Solution to Problem

In order to attain the object, an information storage medium according to the present invention stores operation identification information causing a recording and reproduction apparatus into which the information storage medium is inserted to recognize the information storage medium as an information storage medium causing the recording and reproduction apparatus to perform a commercial transaction over a network, the operation identification information serving as a trigger for causing the recording and reproduction apparatus to perform the commercial transaction.

With a conventional information storage medium capable of causing a commercial transaction over a network, contents and the like that are required to perform the commercial transaction are downloaded to the medium, by having a contents obtaining program and a user terminal cooperate with each other.

However, with this configuration, a network connection for downloading contents becomes initiated even in a case where a contents obtaining program is stored in an information storage medium having no relation to a commercial transaction, the connection being caused by the contents obtaining program cooperating with the user terminal. This network connection may cause unnecessary leakage of useful information such as personal information, which is information stored in the information storage medium.

In comparison, an information storage medium according to the present invention is a medium that stores operation identification information. The operation identification information causes a recording and reproduction apparatus into which the information storage medium is inserted to recognize the information storage medium as an information storage medium which causes the recording and reproduction apparatus to perform a commercial transaction over a network, and serves as a trigger for causing the recording and reproduction apparatus to perform the commercial transaction.

Hence, by causing the recording and reproduction apparatus to recognize the operation identification information before the contents is downloaded, it is possible to prevent a situation where important information such as personal information stored in the information storage medium is leaked onto the network through the recording and reproduction apparatus. This improves security against information leakage.

The recording and reproduction apparatus may be set so that no downloading is carried out by an information storage medium that stores no operation identification information. This prevents any unnecessary leakage of personal information, thereby improving the security.

Furthermore, the information storage medium according to the present invention is preferably a prepaid-type information storage medium, causing a commercial transaction performed over the network to be performed after a user completes payment of prepaid charges, and the operation identification information is information causing the recording and reproduction apparatus to recognize the information storage medium as the prepaid-type information storage medium.

According to the configuration, the operation identification information causes the recording and reproduction apparatus to recognize the information storage medium storing that operation identification information as a prepaid-type information storage medium. Moreover, the operation identification information serves as a trigger for causing the recording and reproduction apparatus to perform a prepaid-type commercial transaction. In other words, unless the recording and reproduction apparatus recognizes the operation identification information, no prepaid-type commercial transaction is performed.

As a result, it is possible to prevent various information stored in the information storage medium from leaking onto the network, before the recording and reproduction apparatus is connected to the network to perform the prepaid-type commercial transaction. This prevents various information from being unnecessarily leaked, thereby improving the security against information leakage.

Furthermore, the information storage medium according to the present invention preferably stores (i) balance information related to a balance of the prepaid charges and (ii) transaction information related to a transaction target of the commercial transaction.

By having the foregoing configuration, it is possible to check the balance information and transaction information stored in the information storage medium on a display apparatus, without having to connect to the network.

Hence, there is no need to connect the recording and reproduction apparatus to the network in order to check the balance information and transaction information. This allows holding down a risk of causing leakage of various information stored on the information storage medium, to the least possible.

More specifically, the recording and reproduction apparatus causes the display apparatus to display the balance information and transaction information so that a user can check the money amount information and transaction information; thereafter, the user that has checked the information selects a preferable commercial transaction (e.g., contents, product, service). Subsequently, the recording and reproduction apparatus causes the operation identification information to serve as a trigger for establishing a connection between the recording and reproduction apparatus and the network. By having such a configuration, it is possible to prevent various information stored in the information storage medium from leaking onto the network, before the recording and reproduction apparatus is connected to the network. This as a result improves the security against information leakage.

Note that the transaction information may be a use record (downloading record) of the transaction target, a total amount of money spent, a connection record of the recording and reproduction apparatus, or like information.

Furthermore, the information storage medium according to the present invention is preferably a postpaid-type information storage medium, causing a commercial transaction performed over the network to be performed by having a user pay charges after the commercial transaction is performed, and the operation identification information is information causing the recording and reproduction apparatus to recognize the information storage medium as the postpaid-type information storage medium.

According to the configuration, the operation identification information causes the recording and reproduction apparatus to recognize the information storage medium storing that operation identification information as the postpaid-type information storage medium. Moreover, the operation identification information serves as a trigger for causing the recording and reproduction apparatus to perform the postpaid-type commercial transaction. In other words, unless the recording and reproduction apparatus recognizes the operation identification information, no postpaid-type commercial transaction is performed.

As a result, it is possible to prevent various information stored in the information storage medium from leaking onto the network, before the recording and reproduction apparatus is connected to the network to perform the postpaid-type commercial transaction. This prevents various information from being unnecessarily leaked, thereby improving the security against information leakage.

Furthermore, the information storage medium according to the present invention preferably includes a reproduction-only region from which information can only be read out, the reproduction-only region including: a specific information region storing (i) the operation identification information and (ii) medium-specific information unique to the information storage medium; and a common information region storing medium common information which is common in the information storage medium.

Conventionally, a recording region of medium-specific information that is information different per information storage medium is provided in a same region as a recording region of medium common information that is information common among information storage mediums of a same type, in a reproduction-only region of the information storage medium. Hence, the information storage medium requires storing different information in the reproduction-only region per information storage medium; this made it impossible to use bulk production means by use of a stamper or the like, to produce the reproduction-only region.

However, by configuring the information storage medium so that the reproduction-only region includes a specific information region and a common information region, in which specific information region stores the operation identification information and the medium-specific information and in which common information region stores the medium common information, use of the stamper or the like is possible in producing the common information region. Hence, it is possible to accomplish an information storage medium that is suitable for bulk production.

Furthermore, in the information storage medium according to the present invention, the specific information region is preferably stored in a BCA (Burst Cutting Area) region.

A BCA region is a region in which information is recorded one by one by use of a strong laser at a final manufacturing process of the information storage medium. As compared to a regular recording mark by which contents information is recorded, the mark in the BCA region is incomparably larger in size. Therefore, with a regular recording and reproduction apparatus, the information recorded on the BCA region is not rewritable.

Hence, by including the specific information region in the BCA region, it is possible to avoid the risk that the operation identification information and medium-specific information stored in the specific information region is rewritten.

Furthermore, a recording and reproduction apparatus according to the present invention is preferably a recording and reproduction apparatus into which any one of the foregoing information storage mediums is to be inserted, characterized in that the recording and reproduction apparatus includes: communication means communicating with the network based on the operation identification information.

According to the configuration, the communication means communicates over the network, in accordance with the operation identification information stored in the information storage medium.

Hence, when an information storage medium in which the operation identification information is stored is inserted into the recording and reproduction apparatus, the communication means communicates with the network after the communication means recognizes the operation identification information.

Accordingly, the recording and reproduction apparatus allows preventing unintentional leakage of important information stored in the information storage medium over the network without the communication means recognizing the operation identification information. Hence, this improves the security against information leakage.

Furthermore, the recording and reproduction apparatus according to the present invention preferably further includes reproduction permitting means, the communication means receiving reproduction permission information from the network, the reproduction permission information being indicative of whether or not to permit reproduction of contents downloaded from the network by means of the commercial transaction, and the reproduction permitting means permitting the reproduction of the contents in accordance with the reproduction permission information received.

With the configuration, it is possible to cause reproduction of contents that is permitted by the reproduction permitting means, from among the downloaded contents.

For instance, assume a case where the commercial transaction is a service that distributes video contents over a network, and the communication means receives, from the network, information related to a reproducible period of the video contents downloaded by a user, as reproduction permission information. At this time, the reproduction permitting means permits reproduction of the video contents if a current time is within the reproducible period, and if the current time is outside the reproducible period, the reproduction of the video contents is not permitted. This allows the recording and reproduction apparatus to accomplish reproduction of video contents in accordance with the reproduction permission information.

Alternatively, the following case may also be considered. For instance, assume a case where the commercial transaction is a service that distributes video contents over a network, and the communication means receives, from the network, information related to a reproducible number of times of the video contents downloaded by a user, as reproduction permission information. At this time, the reproduction permitting means permits reproduction of the video contents if a reproduced number of times is equal to or less than the reproducible number of times, and if the reproduced number of times exceeds the reproducible number of times, the reproduction of the video contents is not permitted. Hence, the recording and reproduction apparatus can appropriately reproduce the video contents in accordance with the reproduction permission information.

Furthermore, the recording and reproduction apparatus according to the present invention preferably further includes deletion permitting means, the communication means receiving deletion permission information from the network, the deletion permission information being indicative of whether or not to permit deletion of contents downloaded from the network by means of the commercial transaction can be deleted, and the deletion permitting means permitting the deletion of the contents in accordance with the deletion permission information received.

With such a configuration, the deletion permitting means permits deletion of contents downloaded from the network.

For instance, assume a case where the commercial transaction is a service that distributes video contents over a network, and the communication means receives, from the network, information related to a reproducible number of times of the video contents downloaded by a user, as deletion permission information. At this time, the deletion permitting means does not permit the deletion of the video contents if a reproduced number of times is within the reproducible number of times, whereas if the user attempts to reproduce the video contents regardless that the reproduced number of times is exceeding the reproducible number of times, the deletion permitting means permits the deletion of the video contents.

As such, in a case where a limit is provided to the reproducible number of times or the like, providing the deletion permitting means allows the recording and reproduction apparatus to appropriately delete the contents downloaded from the network. Hence, the contents distributor can appropriately manage use of the contents by the user.

### Advantageous Effects of Invention

As described above, an information storage medium according to the present invention stores operation identification information causing a recording and reproduction apparatus into which the information storage medium is inserted to recognize the information storage medium as a medium causing the recording and reproduction apparatus to perform a commercial transaction over a network, the operation identification information serving as a trigger for causing the recording and reproduction apparatus to perform the commercial transaction.

Hence, this provides an information storage medium and a recording and reproduction apparatus, each having improved security against information leakage.

### Brief Description of Drawings

Fig. 1

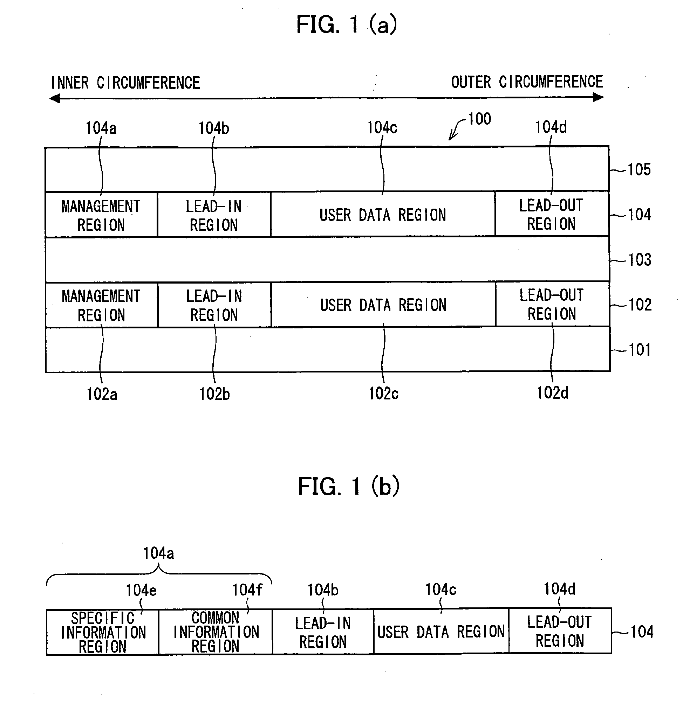

   Fig. 1 is a view illustrating an example of a configuration of each of recording layers of an optical disk of the present invention; (a) is a view schematically illustrating each of the recording layers of the optical disk, and (b) is a view specifically illustrating a BCA region of a ROM layer of the optical disk.
Fig. 2

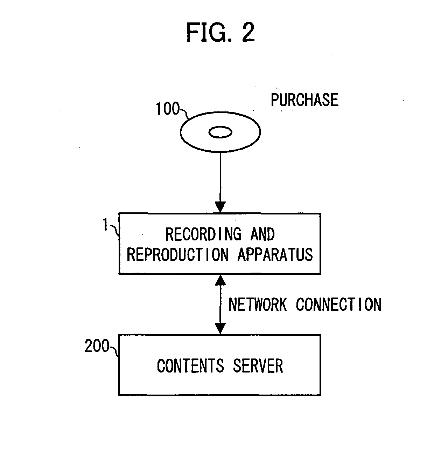

   Fig. 2 is a view schematically illustrating a contents distribution system using a prepaid-type optical disk.
Fig. 3

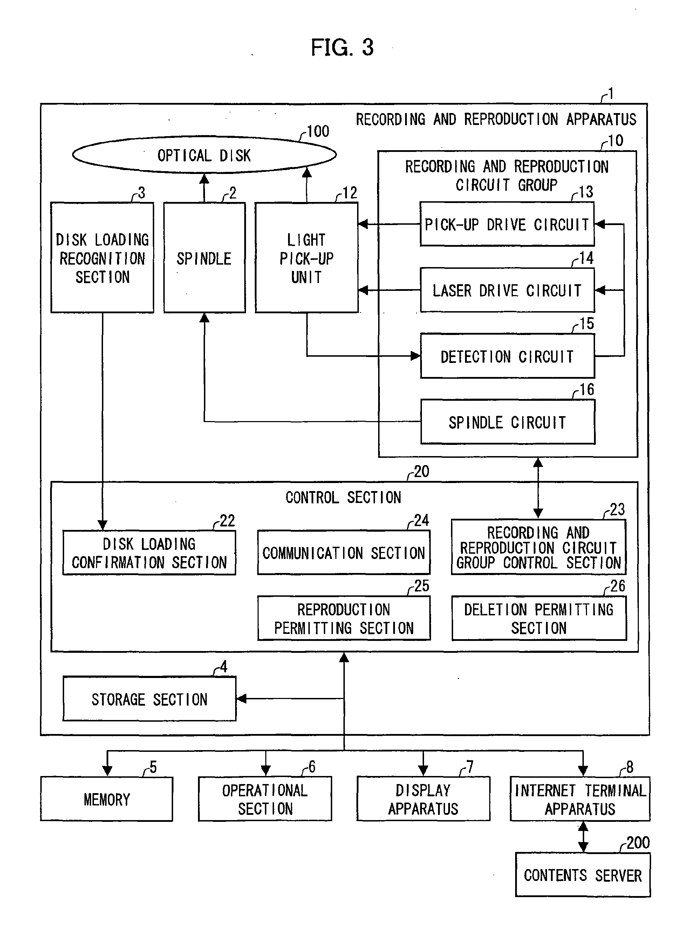

   Fig. 3 is a block diagram illustrating a configuration of main parts of a recording and reproduction apparatus of the present invention.
Fig. 4

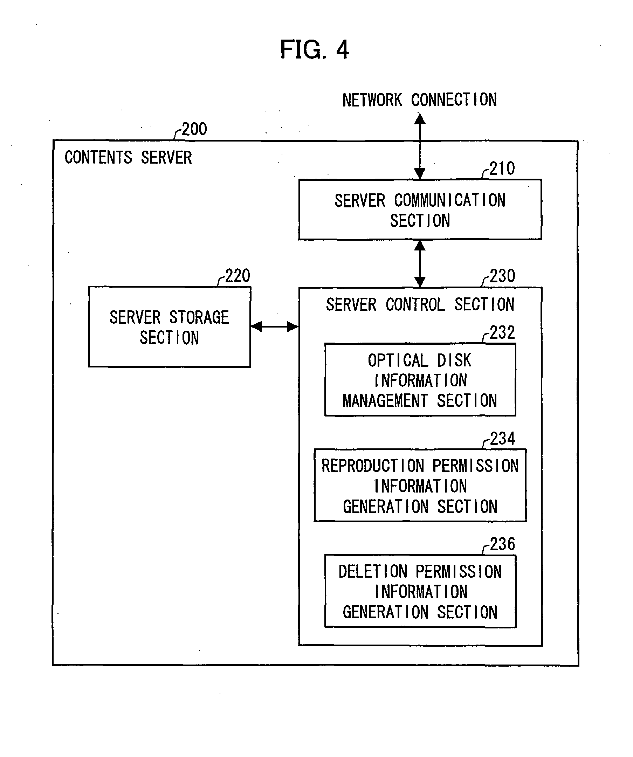

   Fig. 4 is a block diagram illustrating a configuration of main parts of a contents server of the present invention.
Fig. 5

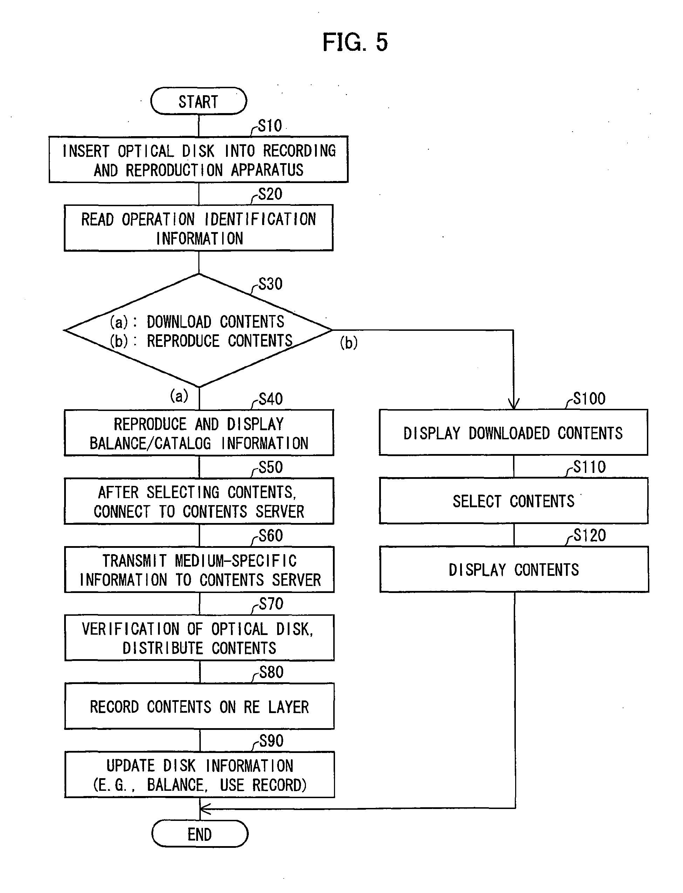

   Fig. 5 is a flowchart illustrating basic operations of a prepaid-type contents distribution system.
Fig. 6

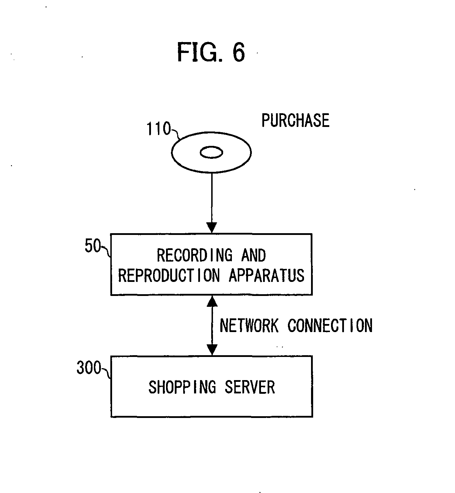

   Fig. 6 is a view schematically illustrating an online shopping system using a prepaid-type optical disk.
Fig. 7

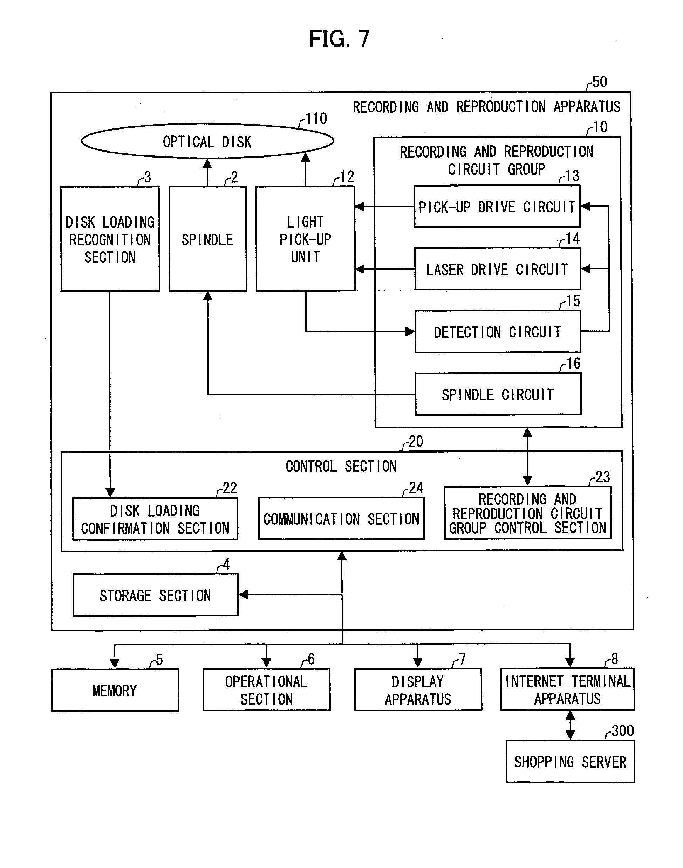

   Fig. 7 is a block diagram illustrating a configuration of main parts of a recording and reproduction apparatus which is a modification of the present invention.
Fig. 8

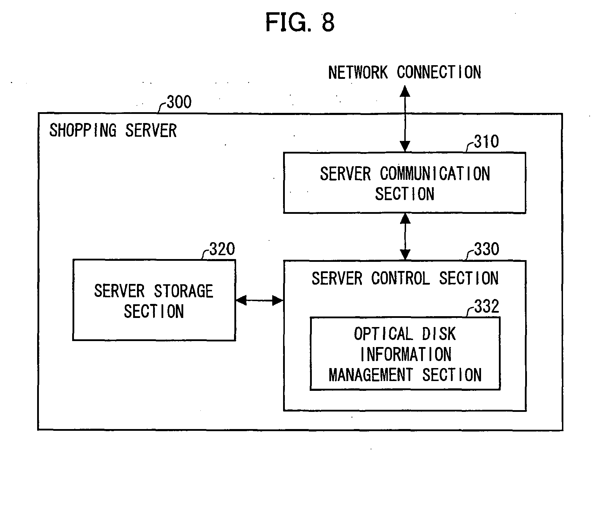

   Fig. 8 is a block diagram illustrating a configuration of main parts of a shopping server.
Fig. 9

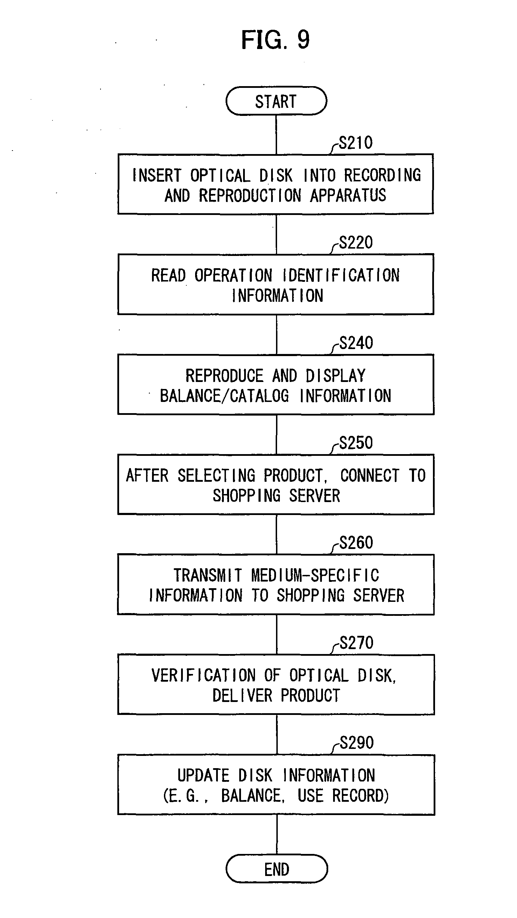

   Fig. 9 is a flowchart illustrating basic operations of an online shopping system.
Fig. 10

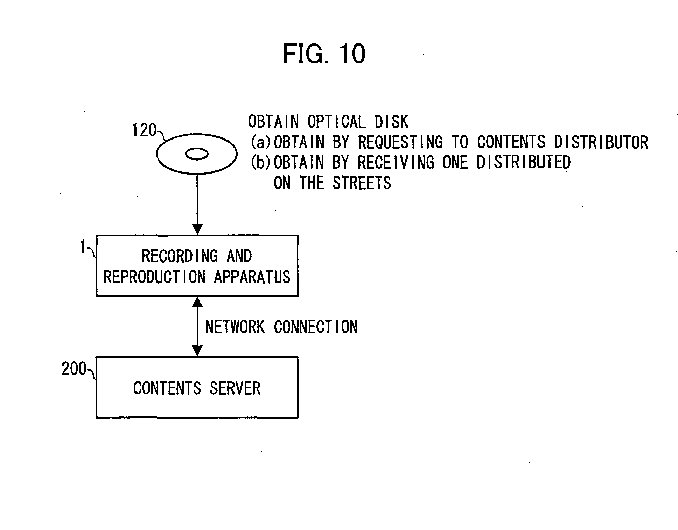

   Fig. 10 is a view schematically illustrating a contents distribution system using a postpaid-type optical disk.
Fig. 11

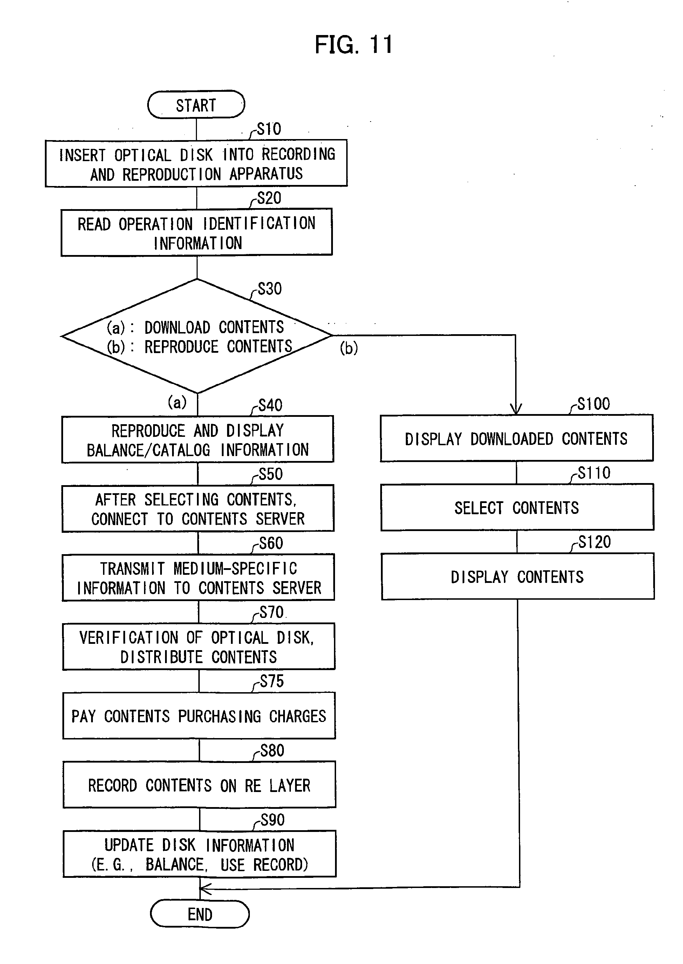

   Fig. 11 is a flowchart illustrating basic operations of a postpaid-type contents distribution system.
Fig. 12

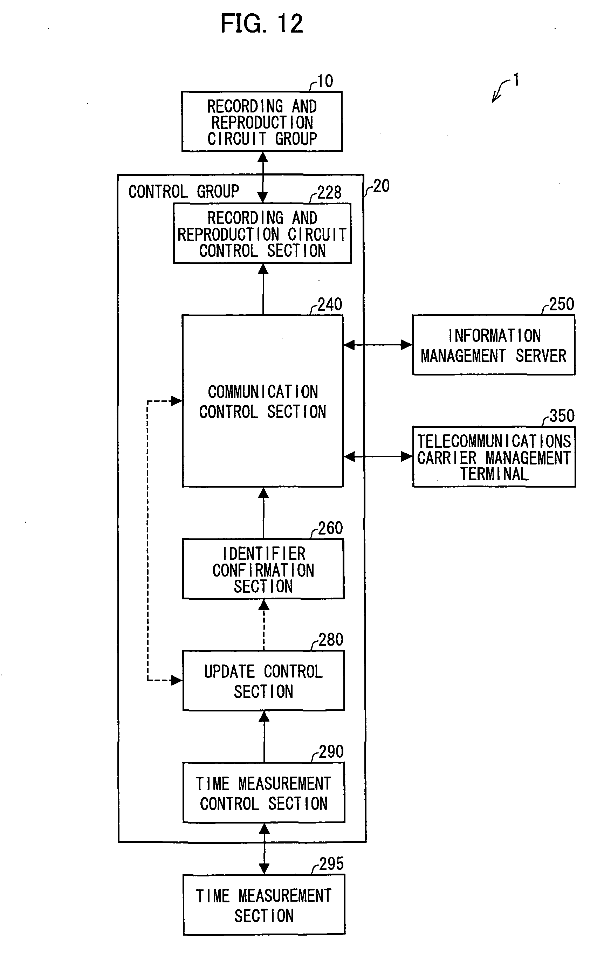

   Fig. 12 is a view illustrating one example of a configuration of main parts in a recording and reproduction apparatus according to one embodiment of the present invention.
Fig. 13

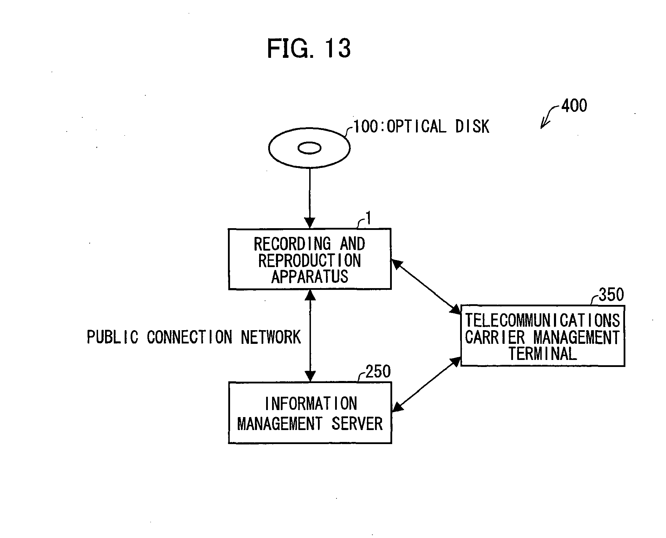

   Fig. 13 is a view schematically illustrating one example of a configuration of a communication system according to one embodiment of the present invention.
Fig. 14

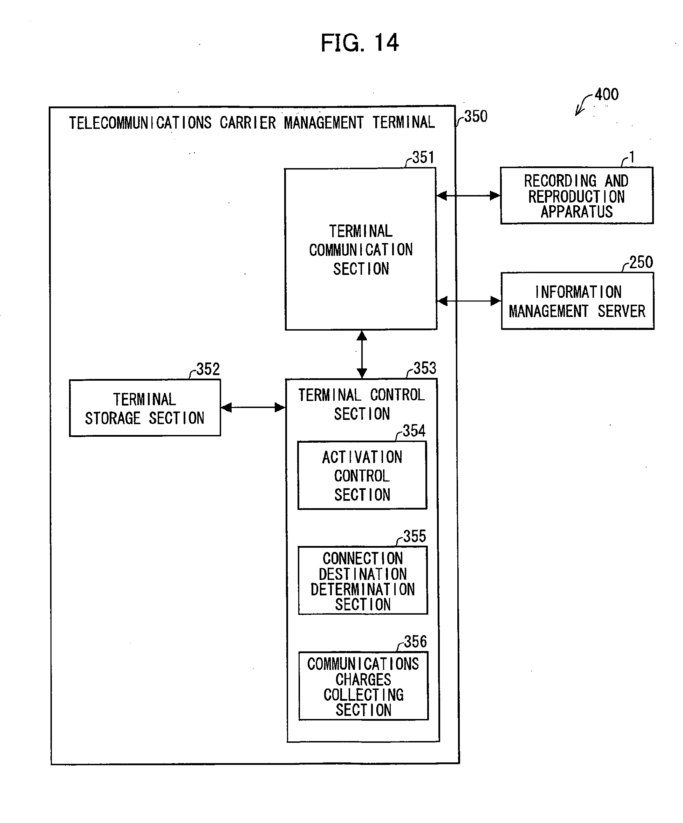

   Fig. 14 is a view schematically illustrating one example of a configuration of a telecommunications carrier management terminal according to one embodiment of the present invention.
Fig. 15

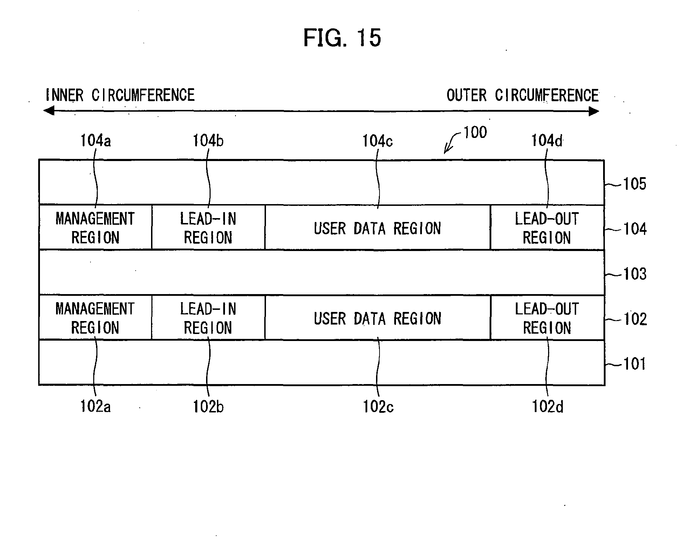

   Fig. 15 is a view schematically illustrating one example of a configuration of each of recording layers of an optical disk according to one embodiment of the present invention.
Fig. 16

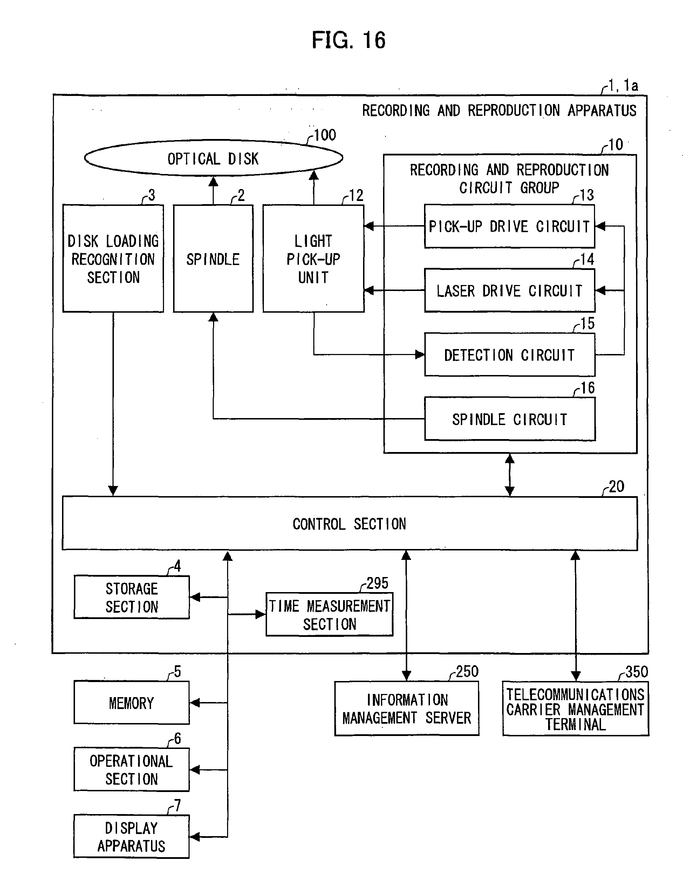

   Fig. 16 is a view schematically illustrating one example of a configuration of a recording and reproduction apparatus according to one embodiment of the present invention.
Fig. 17

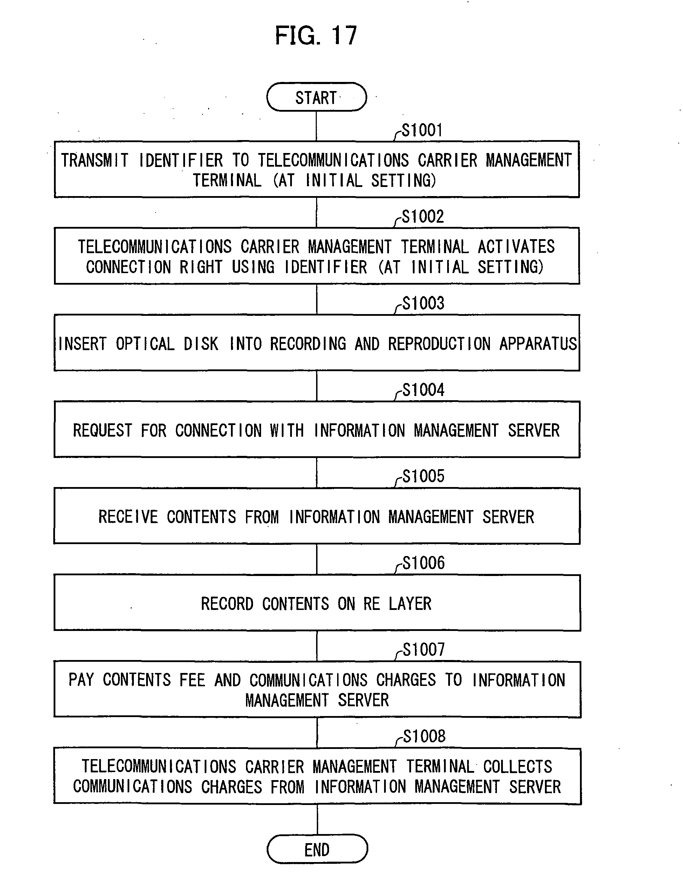

   Fig. 17 is a flowchart illustrating one example of processes carried out in a communication system according to one embodiment of the present invention, in a case where a connection right of a recording and reproduction apparatus is activated in advance.
Fig. 18

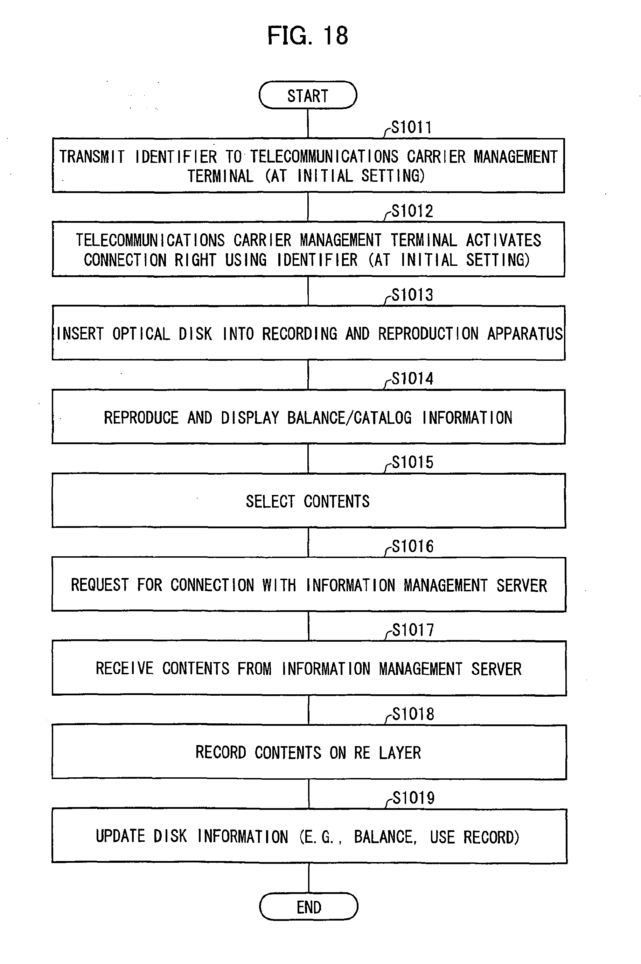

   Fig. 18 is a flowchart illustrating one example of another set of processes carried out in a communication system according to one embodiment of the present invention, in a case where a connection right of a recording and reproduction apparatus is activated in advance.
Fig. 19

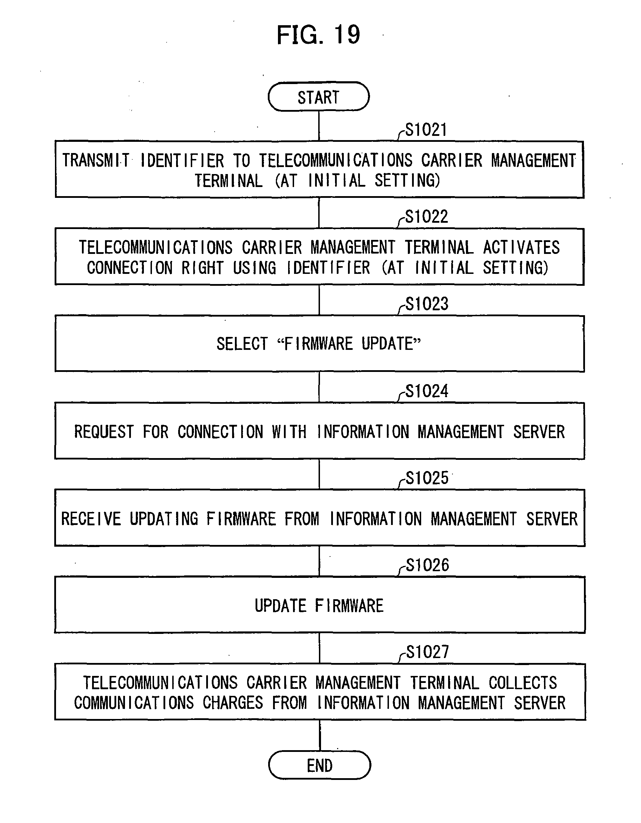

   Fig. 19 is a flowchart illustrating one example of yet another set of processes of a communication system according to one embodiment of the present invention, in a case where a connection right of a recording and reproduction apparatus is activated in advance.
Fig. 20

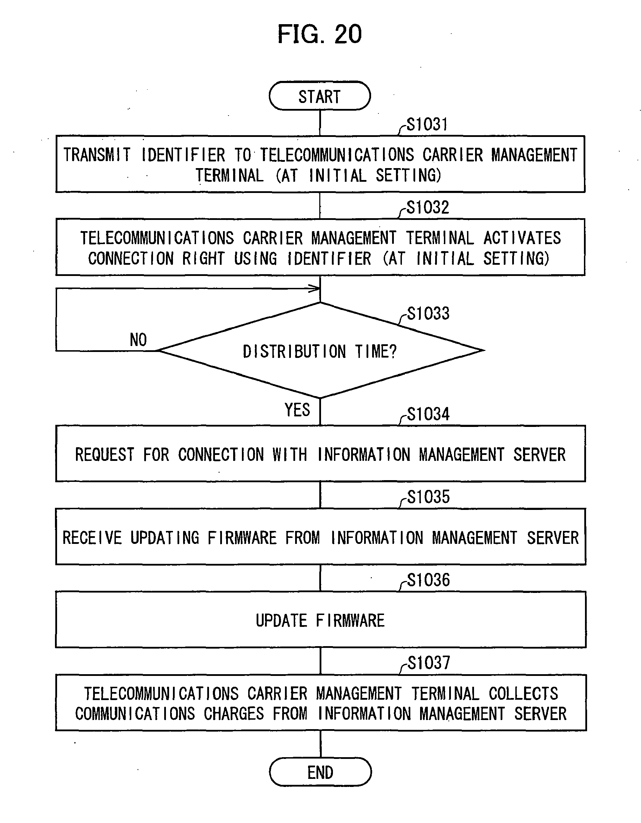

   Fig. 20 is a flowchart illustrating one example of yet another set of processes carried out in a communication system according to one embodiment of the present invention, in a case where a connection right of a recording and reproduction apparatus is activated in advance.
Fig. 21

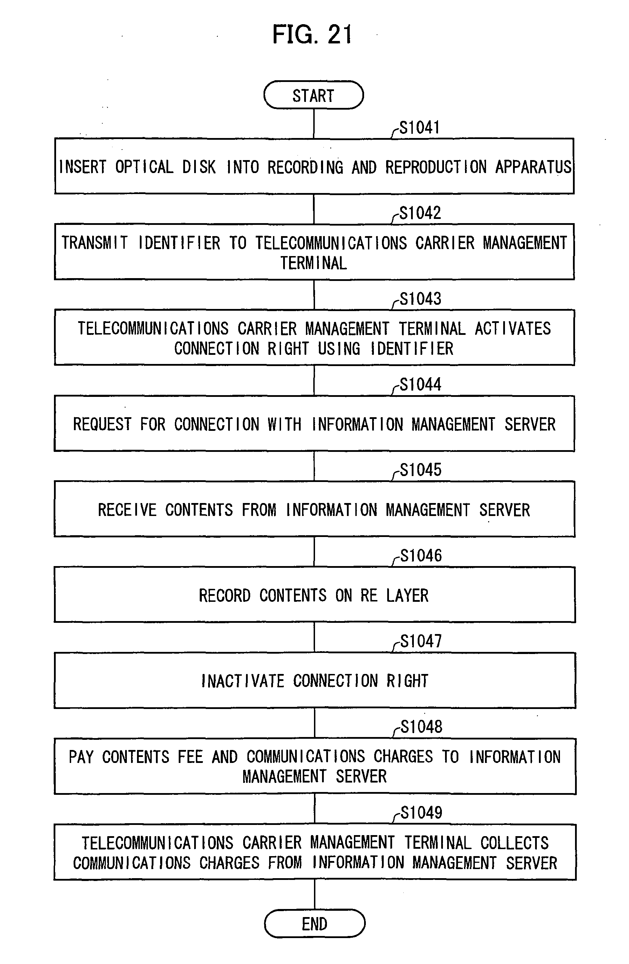

   Fig. 21 is a flowchart illustrating one example of a set of processes carried out in a communication system according to one embodiment of the present invention, in a case where a connection right of a recording and reproduction apparatus is switchable between an activated state and an inactivated state.
Fig. 22

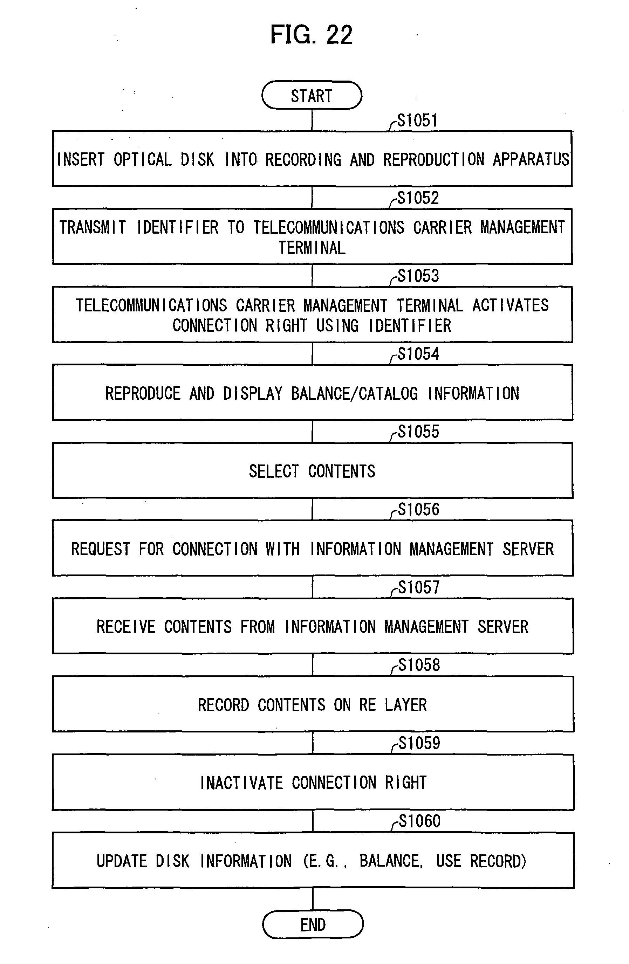

   Fig. 22 is a flowchart illustrating one example of another set of processes carried out in a communication system according to one embodiment of the present invention, in a case where a connection right of a recording and reproduction apparatus is switchable between an activated state and an inactivated state.
Fig. 23

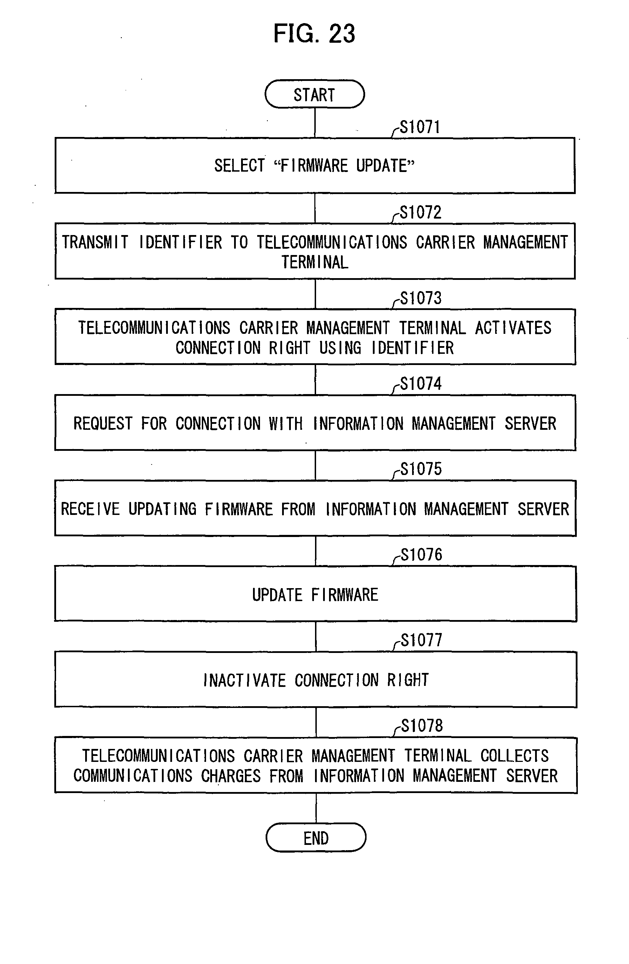

   Fig. 23 is a flowchart illustrating one example of yet another set of processes carried out in a communication system according to one embodiment of the present invention, in a case where a connection right of a recording and reproduction apparatus is switchable between an activated state and an inactivated state.
Fig. 24

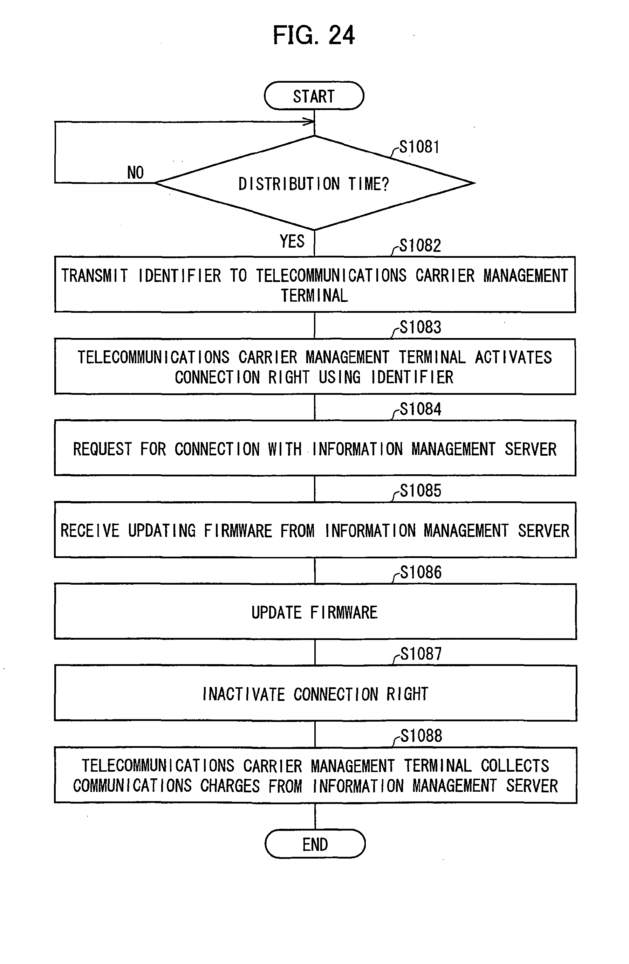

   Fig. 24 is a flowchart illustrating one example of yet another set of processes carried out in a communication system according to one embodiment of the present invention, in a case where a connection right of a recording and reproduction apparatus is switchable between an activated state and an inactivated state.
Fig. 25

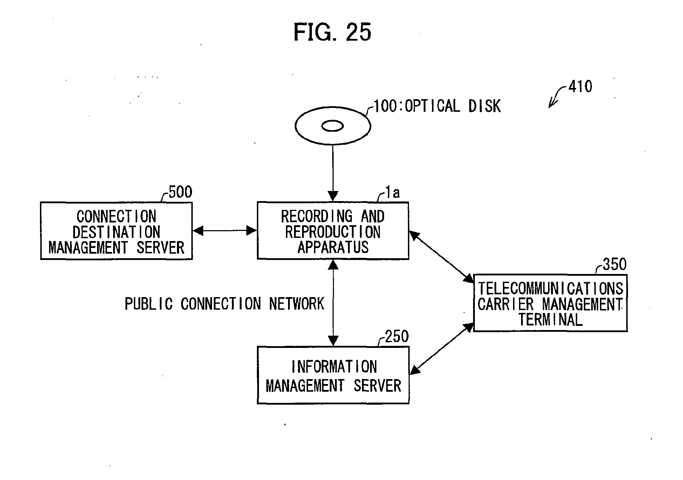

   Fig. 25 is a view schematically illustrating one example of a configuration of a communication system according to another embodiment of the present invention.
Fig. 26

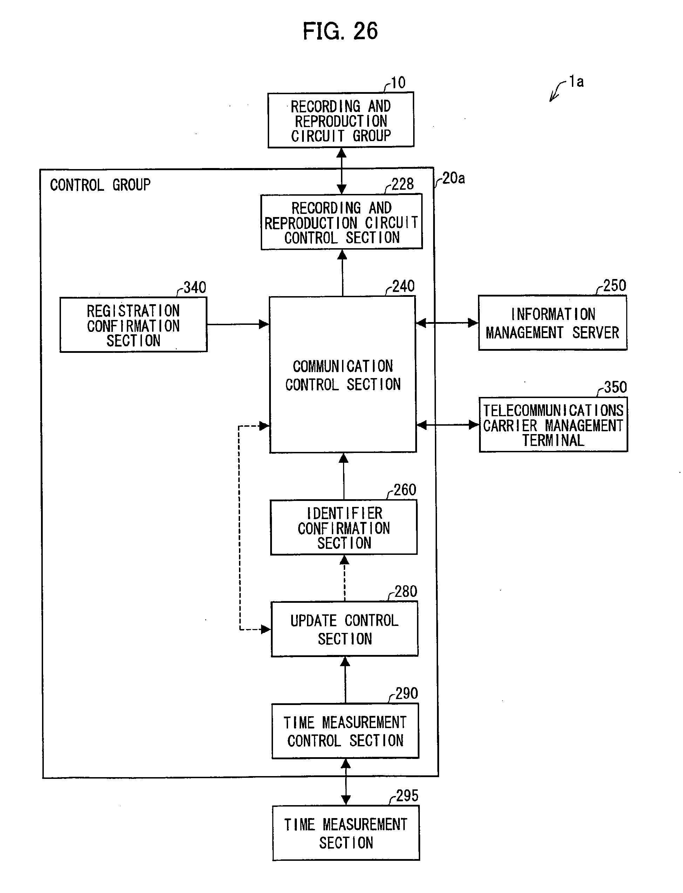

   Fig. 26 is a view illustrating a configuration of main parts of a recording and reproduction apparatus according to another embodiment of the present invention.
Fig. 27

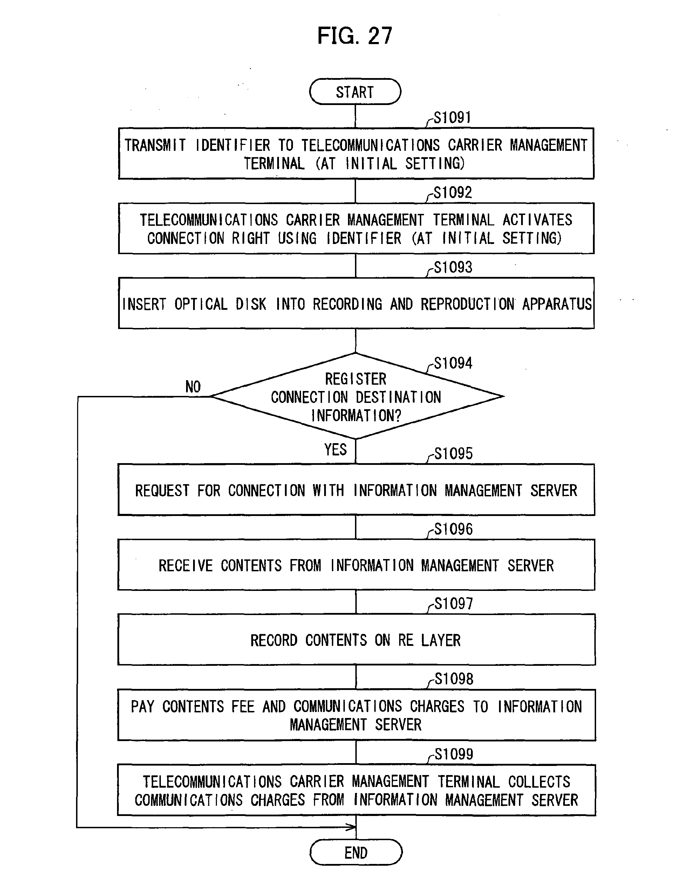

   Fig. 27 is a flowchart illustrating an example of a set of processes carried out in a communication system according to another embodiment of the present invention, in a case where a connection right of a recording and reproduction apparatus is activated in advance.

### Description of Embodiments

The following description explains the present invention, with reference to drawings. For easy description, members having functions identical to members illustrated in the drawings are provided with identical reference signs, and their descriptions have been omitted in the Embodiments.

Embodiment 1-1 (Prepaid-type Optical Disk)
Overview of Embodiment 1-1
First schematically described is a contents distribution system according to the present embodiment, with reference to Fig. 2. Fig. 2 is a view schematically illustrating a contents distribution system using a prepaid-type optical disk.

Note that "contents" in the embodiment denotes contents such as motion pictures (e.g., movies and television programs), music, games, and like contents.

First, a user of a contents distribution system (commercial transaction) purchases a prepaid-type optical disk (hereinafter referred to as "optical disk 100") (information storage medium) available in convenience stores and the like. A price of the optical disk 100 includes, in addition to a price of the actual optical disk, fees (prepaid charges) required for downloading contents stored in the contents server 200.

The optical disk 100 has two layers: a ROM layer (reproduction-only region) and a RE layer. The ROM layer stores in advance a list (catalog) of contents downloadable from the contents server 200 (transaction information). The RE layer stores no information at a time when the optical disk 100 is purchased.

How the contents distribution system is used is as follows. First, the user inserts the optical disk 100 into a recording and reproduction apparatus 1 connected to a network. At this time, the optical disk 100 stores operation identification information; this operation identification information causes the recording and reproduction apparatus 1 into which the optical disk 100 is inserted to recognize the optical disk 100 as a disk that causes the recording reproduction apparatus 1 to execute a prepaid-type contents distribution service over the network. The operation identification information also serves as a trigger for causing the recording and reproduction apparatus 1 to execute the distribution service. The recording and reproduction apparatus 1, by recognizing the operation identification information, then becomes capable of executing the contents distribution service. In other words, the recording and reproduction apparatus 1 is not capable of executing the contents distribution service unless the operation identification information is recognized.

Hence, by causing the recording and reproduction apparatus 1 to recognize the operation identification information before the contents is downloaded, it is possible to prevent information stored in the optical disk 100 from leaking over the network via the recording and reproduction apparatus 1. This improves the security against information leakage.

Once the recording and reproduction apparatus 1 recognizes the operation identification information, the contents distribution service available through the network becomes available for use. The user selects contents that the user desires to view, from the catalog stored in the ROM layer, and thereafter the contents thus selected is downloaded from the contents server 200. The downloaded contents is then recorded onto the RE layer, which RE layer stores no information at the time of purchasing the optical disk 100.

As such, in the contents distribution system according to the present embodiment, the optical disk 100 stores the operation identification information, which information causes the recording and reproduction apparatus 1 into which the optical disk 100 is inserted to recognize that the optical disk 100 is a disk causing the recording and reproduction apparatus 1 to execute a prepaid-type contents distribution service over the network, and which information serves as a trigger for causing the recording and reproduction apparatus 1 to execute the distribution service. Consequently, it is possible to prevent the information stored in the optical disk 100 from being unintentionally leaked over the network. This improves the security against information leakage.

The following description specifically explains the recording and reproduction apparatus 1, optical disk 100, and contents server 200, each according to the present embodiment, with reference to Fig. 1 and like drawings.

Overall Configuration of Recording and Reproduction Apparatus 1
Fig. 3 is a block diagram illustrating a configuration of main parts of the recording and reproduction apparatus 1 which is one embodiment of the present invention.

As illustrated, the recording and reproduction apparatus 1 chiefly includes: a spindle 2; a disk loading recognition section 3; a storage section 4; a recording and reproduction circuit group 10; a light pick-up unit 12; and a control section 20.

Moreover, the recording and reproduction circuit group 10 chiefly includes: a pick-up drive circuit 13; a laser drive circuit 14; a detection circuit 15; and a spindle circuit 16.

Moreover, the control section 20 chiefly includes: a disk loading confirmation section 22; a recording and reproduction circuit group control section 23; a communication section (communication means) 24; a reproduction permitting section (reproduction permitting means) 25; and a deletion permitting section (deletion permitting means) 26.

The spindle 2 is provided for rotating the optical disk 100 at a fixed position.

The disk loading recognition section 3 is provided for detecting the loading of the optical disk 100, and various sensors can be given as examples of the disk loading recognition section 3. However, as long as the loading of the optical disk 100 is detectable, any sensor may be used as the disk loading recognition section 3. Moreover, the disk loading recognition section 3 outputs a detected result to the disk loading confirmation section 22 of the control section 20, as a detection signal.

The storage section 4 stores (1) control programs for each section, (2) an OS program, (3) an application program, and (4) various data read out when executing these programs. The programs of (1), (2), and (3) are executed by the control section 20. The storage section 4 is a non-volatile storage device such as a ROM (Read Only Memory) flash memory.

The recording and reproduction circuit group 10 is provided for driving the spindle 2 and light pick-up unit 12, and chiefly includes: a pick-up drive circuit 13; a laser drive circuit 14; a detection circuit 15; and a spindle circuit 16.

The pick-up drive circuit 13 is provided for moving the entire light pick-up unit 12 to a desired recording/ reproducing part of the optical disk 100. Furthermore, the pick-up drive circuit 13 also causes an actuator (not illustrated) provided in the light pick-up unit 12 to operate, for controlling focusing and tracking at the recording/reproducing part.

The laser drive circuit 14 causes a laser (not illustrated) provided inside the light pick-up unit 12 to operate so that the optical disk 100 is irradiated with light having an intensity suitable for recording, reproduction, and the like.

The detection circuit 15 detects light reflected from the optical disk 100, and chiefly generates, for the focusing and tracking: a servo signal that is fed back to the pick-up drive circuit 13; and a RF signal including information of the optical disk 100. Moreover, in order to have the light emitted from the light pick-up unit 12 maintain a constant intensity, the detection circuit 15 detects light reflected from one part of the light pick-up unit 12, and generates a servo signal that is fed back to the laser drive circuit 14.

The spindle circuit 16, upon reception of an instruction to drive the spindle 2 from the disk loading confirmation section 22 or via the operational section 6, causes the spindle 2, i.e., the optical disk 100, to rotate at an optimum rotational speed.

The light pick-up unit 12 is an optical system that collects to the optical disk 100 light emitted from the laser, diverges light reflected from the optical disk 100 and guides the reflected light to the detection circuit 15.

The control section 20 generally bears control of operations within the recording and reproduction apparatus 1 and with external apparatuses such as the memory 5, the operational section 6, the display apparatus 7, and the Internet terminal apparatus 8. The control section 20 chiefly includes: a disk loading confirmation section 22; a recording and reproduction circuit group control section 23; a communication section 24; a reproduction permitting section 25; and a deletion permitting section 26.

The disk loading confirmation section 22 confirms whether or not the optical disk 100 is inserted into the recording and reproduction apparatus 1 by confirming whether or not a detection signal is received from the disk loading recognition section 3.

The recording and reproduction circuit group control section 23 controls the recording and reproduction circuit group 10, and for example, converts an instruction entered via the operational section 6 to an input signal to be inputted to the recording and reproduction circuit group 10. Moreover, the recording and reproduction circuit group control section 23 generates video signals and audio signals based on RF signals received from the recording and reproduction circuit group 10, and inputs these signals to the display apparatus 7. These operations can be carried out via the memory 5, due to issues such as processing speed, capacity, or the like. Moreover, in a case where an Internet connection is used in operating with the recording and reproduction apparatus 1, the operations are carried out via the Internet terminal apparatus 8.

The communication section 24 communicates with an external network in accordance with the operation identification information stored in the optical disk 100. More specifically, the operation identification information stored in the optical disk 100 is read out by the recording and reproduction circuit group control section 23. Thereafter, the recording and reproduction circuit group control section 23 transmits the operation identification information to the communication section 24. This allows the communication section 24 to recognize the operation identification information, and communicate with the network by having the recognition serve as a trigger.

The operation identification information in the present embodiment is information which causes the recording and reproduction apparatus 1 into which the optical disk 100 storing that operation identification information is inserted to recognize the optical disk 100 as a disk that causes the recording and reproduction apparatus 1 to execute a prepaid-type contents distribution service over the network, and which serves as a trigger for causing the recording and reproduction apparatus 1 to execute the contents distribution service.

After the communication section 24 starts to communicate with the network, the communication section 24 receives reproduction permission information and deletion permission information from the contents server 200 via the network.

The reproduction permission information is information indicative of whether or not reproduction of the contents downloaded is permitted. Moreover, the deletion permission information is information indicative of whether or not deletion of the downloaded contents is permitted.

In the present embodiment, the reproduction permission information can be information related to a reproducible period of contents that is downloaded by a user. In this case, the reproduction permission information serves as information that permits reproduction of the contents while a contents reproducing time is within the reproducible period, however if the contents reproducing time is outside the reproducible period, the reproduction permission information serves as information that does not permit the reproduction of the contents.

Alternatively, the reproduction permission information can be information related to a reproducible number of times of contents downloaded by a user. In this case, the reproduction permission information serves as information that permits reproduction of contents if a reproduced number of times of the contents is within the reproducible number of times, however if the reproduced number of times exceeds the reproducible number of times, the reproduction permission information serves as information that does not permit the reproduction of the contents.

As such, the reproduction permission information is information that can be defined by several definitions, as information indicative of whether or not reproduction of contents downloaded by the user is permitted.

Similarly, the deletion permission information can be information related to a reproducible period of the contents downloaded by a user. In this case, the deletion permission information serves as information that does not permit deletion of the contents if the contents reproducing time is within the reproducible period, however if the contents reproducing time is outside of the reproducible period, the deletion permission information serves as information that permits the deletion of the contents.

Alternatively, the deletion permission information can be information related to a reproducible number of times of the contents downloaded by a user. In this case, the deletion permission information serves as information that does not permit the deletion of the contents if a reproduced number of times is within the reproducible number of times, however if the reproduced number of times exceeds the reproducible number of times, the deletion permission information serves as information that permits the deletion of the contents.

As such, the deletion permission information can be defined by several definitions, as information indicative of whether or not deletion of contents downloaded by a user is permitted.

Next, the reproduction permitting section 25 obtains the reproduction permission information from the communication section 24. Subsequently, the reproduction permitting section 25 permits the reproduction of the contents in accordance with the received reproduction permission information.

More specifically, assume a case where the commercial transaction is a service that distributes video contents over a network, and the communication section 24 receives from the contents server 200 information related to a reproducible period of the video contents downloaded by a user as reproduction permission information. At this time, the reproduction permitting section 25 permits the reproduction of the video contents if a current time is within the reproducible period, and does not permit the reproduction of the video contents if the current time is outside of the reproducible period.

Moreover, the following case may also be assumed. For instance, assume a case where the commercial transaction is a service that distributes video contents over a network, and the communication section 24 receives from the contents server 200 information related to a reproducible number of times of the video contents downloaded by a user, as the reproduction permission information. At this time, the reproduction permitting section 25 permits the reproduction of the video contents if a reproduced number of times of the video contents is within the reproducible number of times, however if the reproduced number of times exceeds the reproducible number of times, the reproduction permitting section 25 does not permit the reproduction of the video contents.

In a case where the reproduction permitting section 25 permits the reproduction of the contents, the reproduction permitting section 25 transmits to the recording and reproduction circuit group 10 that the reproduction is permitted, so that the reproduction process of the contents is executed by the recording and reproduction circuit group 10.

The deletion permitting section 26 obtains the deletion permission information from the communication section 24. Subsequently, the deletion permitting section 26 permits the deletion of the contents in accordance with the received deletion permission information.

More specifically, assume that the commercial transaction is a service that distributes video contents over a network, and the communication section 24 receives from the contents server 200 information related to a reproducible number of times of video contents downloaded by a user, as the deletion permission information. At this time, the deletion permitting section 26 does not permit deletion of the video contents if a reproduced number of times is within the reproducible number of times, however if the user attempts to reproduce the video contents regardless that the reproduced number of times exceed the reproducible number of times, the deletion permitting section 26 permits the deletion of the contents.

In a case where the deletion permitting section 26 permits the deletion of the contents, the deletion permitting section 26 transmits to the recording and reproduction circuit group 10 that the deletion has been permitted, so that the deletion process of the contents is performed by the recording and reproduction circuit group 10.

The foregoing describes the recording and reproduction apparatus 1. Here, the recording and reproduction apparatus 1 is usually provided having a memory 5, operational section 6, display apparatus 7, Internet terminal apparatus 8, and like components. The following description explains these components. The memory 5, operational section 6, display apparatus 7, Internet terminal apparatus 8 and like components may also be accomplished by being incorporated in the recording and reproduction apparatus 1.

The memory 5 can be made up of a RAM (Random Access Memory) for example, and stores information such as information read out from the ROM layer, RE layer, or R layer of the optical disk 100 and information obtained via an external Internet terminal apparatus 8.

The operational section 6 is provided to allow a user to enter instruction signals for operating the recording and reproduction apparatus 1. For instance, the operational section 6 is made up of a remote controller for remotely controlling the recording and reproduction apparatus 1, operational buttons provided to the recording and reproduction apparatus 1 itself, or a mouse, keyboard or like device connected to the recording and reproduction apparatus 1. The instruction signals entered by the user via the operational section 6 are transmitted to each of the functional blocks through an input/output control section not illustrated. This makes it possible for the user to operate the recording and reproduction apparatus 1.

The display apparatus 7 outputs various information (data), and is made up of, for example, a display apparatus such as an LCD (liquid crystal display), PDP (plasma display panel), or CRT (cathode-ray tube) display.

The Internet terminal apparatus 8 connects the recording and reproduction apparatus 1 to the Internet. The Internet terminal apparatus 8 is connected to an external contents server 200 via the Internet.

Overall Configuration of Contents server 200
Next described with reference to Fig. 4 is the contents server 200 which is a server for distributing contents such as motion pictures (movies and television programs), music, and games. Fig. 4 is a block diagram illustrating a configuration of main parts of the contents server 200.

As illustrated in Fig. 4, the contents server 200 at least includes: a server communication section 210; a server storage section 220; and a server control section 230.

The server communication section 210 communicates with the external Internet terminal apparatus 8 over the network, based on control by the server control section 230.

The server storage section 220 stores contents information of the motion pictures (movies and television programs), music, and games to be distributed to the recording and reproduction apparatus 1. The contents information may include supplementary information such as a reproducible period and reproducible number of times of the contents.

Furthermore, the server storage section 220 stores various optical disk information related to the optical disk 100 to be inserted into the recording and reproduction apparatus 1. The optical disk information is, for example, medium-specific information unique to the optical disk 100, a use record (download record) of contents, balance of prepaid charges (balance information), total amount of money spent, and a connection record of the recording and reproduction apparatus 1.

The server control section 230 generally bears control of operations within the contents server 200 and communication with the external Internet terminal apparatus 8, and chiefly includes: an optical disk information management section 232; a reproduction permission information generation section 234; and a deletion permission information generation section 236.

The optical disk information management section 232 obtains, from the recording and reproduction apparatus 1 via the network, optical disk information such as the medium-specific information unique to the optical disk 100, the use record (download record) of the contents, the balance of prepaid charges, the total amount of money spent, and the connection record of the recording and reproduction apparatus 1. These optical disk information are stored in the server storage section 220 as the latest optical disk information.

For example, the optical disk information management section 232 causes the server storage section 220 to store the latest balance at a time when the user receives contents distribution service and a balance of prepaid charges is reduced in amount. At this time, the optical disk information management section 232 also updates the use record (download record) of the contents. As such, the optical disk information management section 232 causes the server storage section 220 to store the latest optical disk information.

The reproduction permission information generation section 234 generates the reproduction permission information in accordance with the optical disk information stored in the server storage section 220. For instance, assume a case where the reproduction permission information is information related to a reproducible period of contents downloaded by a user. At this time, the reproduction permission information generation section 234 calculates an elapsed time at present, by having a time at which the contents was downloaded serve as a starting point of time. Thereafter, the reproduction permission information generation section 234 compares the elapsed time with the reproducible period included in the supplementary information related to the contents, to generate the reproduction permission information indicative of whether or not to permit reproduction of the contents. The reproduction permission information is transmitted from the server communication section 210 to the reproduction permitting section 25 of the recording and reproduction apparatus 1, via the network.

The deletion permission information generation section 236 generates the deletion permission information, based on the optical disk information stored in the server storage section 220. For example, assume a case where the deletion permission information is information related to a reproducible number of times of the contents downloaded by the user. At this point, the deletion permission information generation section 236 checks the number of times a contents is reproduced from the use record of the contents stored in the server storage section 220. Thereafter, the deletion permission information generation section 236 compares the reproduced number of times with the reproducible number of times included in the supplementary information related to the contents, and generates the deletion permission information indicative of whether or not to permit deletion of the contents. The deletion permission information is then transmitted from the server communication section 210 to the deletion permitting section 26 of the recording and reproduction apparatus 1 , via the network.

This describes the overall configuration of the contents server 200. In the embodiment, the contents server 200 is described as a server that includes the server storage section 220. However, the server storage section 220 may be provided outside the contents server 200. Furthermore, contents information such as motion pictures (movies and television programs), music, and games, and supplementary information included in the contents information may be updated to its latest versions by a well known method.

Overall Configuration of Optical Disk 100
Fig. 1 is a view illustrating an example of a configuration of each of recording layers of the optical disk 100; Fig. 1(a) is a view illustrating an overall configuration of the recording layers of the optical disk 100, and Fig. 1 (b) is a view specifically illustrating a BCA region 104a in the ROM layer 104 of the optical disk 100.

In the following description, as the layers included in the optical disk (information storage medium) 100, a rewritable recording layer (information recording layer) is called a RE (RE-writable) layer, a reproduction-only recording layer is called a ROM (Read Only Memory) layer, and an additionally-recordable recording layer is called a R (Recordable) layer.

Fig. 1 (a) illustrates a configuration of the optical disk 100 in which a substrate 101, a RE layer 102, an intermediate layer 103 made of transparent resin, a ROM layer 104, and a cover layer 105 are stacked in this order.

The RE layer 102 has a BCA region 102a, a lead-in region 102b, a user data region 102c, and a lead-out region 102d. Similarly, the ROM layer 104 has a BCA region 104a, a lead-in region 104b, a user data region 104c, and a lead-out region 104d.

In Fig. 1 (a), the optical disk 100 is described as including one layer each of the RE layer 102 and ROM layer 104. However, the optical disk 100 can include a plurality of RE layers 102 and a plurality of ROM layers 104. Moreover, the RE layer 102 and ROM layer 104 can be stacked in any order, not limited to the order illustrated in Fig. 1 (a).

Furthermore, in Fig. 1 (a), the BCA region is provided in both the RE layer 102 and the ROM layer 104. However, the BCA region can be just provided in just one of these layers.

The BCA regions 102a and 104a are barcorde-like recording regions provided at an innermost circumference of the optical disk 100, which require no tracking control or is accessible just by focus controlling. The BCA regions 102a and 104a include marks that are incomparably larger than regular recording marks by which information such as contents or the like are recorded. In the BCA regions 102a and 104a, information cannot be rewritten by a regular recording and reproduction apparatus. Accordingly, the BCA regions 102a and 104a are regions in which information is written in only during manufacture (i.e., regions that cannot be rewritten). An order (or arrangement method) in which identification information is recorded in the BCA regions 102a and 104a are set in conformity to regular standards and the like. The recording and reproduction apparatus 1 is designed so that when the optical disk 100 is inserted, the recording and reproduction apparatus 1 first reads out the information stored in the BCA regions 102a and 104a.

The BCA regions 102a and 104a store medium common information that is common among a plurality of optical disks 100. Specific examples of the medium common information encompass: a recording layer type of the optical disk 100 (reproduction-only type, additionally-recordable type, rewritable type); a size of the optical disk 100; and a standard version of the optical disk 100. Furthermore, the BCA regions 102a and 104a store medium-specific information which is information unique to each individual optical disk 100.

Furthermore, the optical disk 100 stores operation identification information in the BCA region 104a of the ROM layer 104. The operation identification information is information that causes the recording and reproduction apparatus 1 into which the optical disk 100 is to be inserted to recognize the optical disk 100 as a disk to cause the recording and reproduction apparatus 1 to perform a commercial transaction over a network, and serves as a trigger for causing the recording and reproduction apparatus 1 to perform the commercial transaction.

In the embodiment, the BCA region 104a of the ROM layer 104 includes, as illustrated in Fig. 1 (b), at least a specific information region 104e and a common information region 104f. Of the at least two regions, the specific information region 104e records the operation identification information and the medium-specific information unique to the optical disk 100. On the other hand, the common information region 104f records the medium common information which is common between a plurality of optical disks 100.

In the optical disk 100, the specific information region 104e has an information recording format made up of stripes having a width in units of *µ*m and a length in units of *µ*m to mm, by irradiation of a pulse laser beam, whereas the common information region 104f has an information recording format of stripes having a width in units of 10 *µ*m and a length in units of 100 *µ*m. That is to say, the specific information region 104e has larger marks than those in the specific information region 104f.

Therefore, the recording and reproduction apparatus 1 can detect the operation identification information and medium-specific information stored in the specific information region 104e easier than detecting the medium common information stored in the common information region 104f. In the optical disk 100, the operation identification information and medium-specific information are more important than the medium common information. Hence, with the foregoing configuration, the recording and reproduction apparatus 1 can detect, more easily and securely, information that is more important than information relatively lower in importance.

The lead-in regions 102b and 104b are regions that are provided in each recording layer on an outer side of the BCA region 102a or 104a of the optical disk 100. Moreover, in a case where the optical disk 100 is of the additionally-recordable type or the re-writable type, the lead-in regions 102b and 104b include not just a region on which information can be written just at the time of manufacture (i.e., region not rewritable), but also includes a region in which information can be additionally recorded or rewritten after the optical disk 100 is inserted into the recording and reproduction apparatus 1. The lead-in regions 102b and 104b record, for example, a normal condition of recording onto and reproducing of the optical disk 100, information indicative of whether or not the recording and reproduction apparatus 1 is accessible to each of the layers (access restrictions), and information indicative of a position of defect made during manufacture or defect made during use.

The user data regions 102c and 104c are regions that store (or can store) various information such as: basic software for example OS (Operating System); applications; or contents; and user data accompanying the software, applications or contents. Moreover, a position and address in which these information are stored, and further management information (route of a file, directory, etc.) such as a correlation between a plurality of information is also stored in the user data regions 102c and 104c. The application is a contents obtaining program (software) in the present embodiment, and is a product purchasing program (software) by use of online shopping in a case of an embodiment later described, or a contents obtaining program using a postpaid-type contents distribution service.

For example, the user data region 104c of the ROM layer 104 stores applications, contents and the like provided by a disk supplier. Moreover, the user data region 104c can store: a connection program for connecting to the contents server 200; information indicative of connection destination; a list (catalog) of contents available from the contents server 200; or one part of the contents (sample video image or demonstration).

The list (catalog) of contents can be downloaded from the contents server 200 to the RE layer 102, via the Internet. At this time, the contents stored in the server storage section 220 and the RE layer 102 of the optical disk 100 are regularly updated to their latest versions in a case where the contents information such as motion pictures (movies and television programs), music, games and the like stored in the server storage section 220, and supplementary information included in the contents information are accomplished so that they are updated to their latest versions as required. In this case, an optical disk 100 is provided which has an extremely high usability for a user of a contents distribution system that uses a prepaid-type optical disk.

Moreover, the user data region 102c of the RE layer 102 stores: contents downloaded by a user, version upgrade information of applications, and user data accompanying the contents, by the recording and reproduction apparatus 1. Furthermore, the user data region 102c in the RE layer 102 can store the optical disk information stored in the server storage section 220, that is, information such as the use record (download record) of contents, the balance of prepaid charges, the total amount of money spent, and the connection record of the recording and reproduction apparatus 1. The optical disk information is accomplished by recording information obtained from the contents server 200 via the network to the user data region 102c of the RE layer 102, by use of the recording and reproduction apparatus 1.

The lead-out regions 102d and 104d are usually provided on an outermost circumference of each of the layers of the optical disk 100, and indicate a termination position of the recording layer.

It is also possible to have at least a part of the information stored on the BCA region of the optical disk 100 be stored in the server storage section 220 of the contents server 200. In this case, the information is sufficiently managed by the medium-specific information of the optical disk 100.

This describes the optical disk 100. In the embodiment, for example, as the optical disk 100, an optical disk which is of a DVD standard or Blu-ray (Registered Trademark) standard: a CPRM-compatible disk of a recordable disk (DVD-R, DVD-RW, DVD-RAM, DVD-R DL) of the DVD standard and a DVD-ROM disk, or a recordable disk (BD-RE, BD-R) and BD-ROM disk of the Blu-ray standard, may be used. This applies similarly to the optical disk 110 and the optical disk 120, each later described.

Basic operations of Prepaid-type contents distribution system
The following description explains basic operations of a contents distribution system according to the present embodiment, with reference to Fig. 5. Fig. 5 is a flowchart illustrating the basic operations of the prepaid-type contents distribution system.

First, the optical disk 100 is inserted into the recording and reproduction apparatus 1 in S10. The optical disk 100 stores the operation identification information in the BCA region 104a of its ROM layer 104.

Next, the operation identification information is read out by the recording and reproduction apparatus 1 in S20. Namely, the recording and reproduction apparatus 1 reproduces the BCA region 104a, and reads the operation identification information stored in the BCA region 104a. In the present embodiment, the operation identification information is information that causes the recording and reproduction apparatus 1 into which the optical disk 100 is inserted to recognize that the optical disk 100 is a disk causing the recording and reproduction apparatus 1 to execute the prepaid-type contents distribution service over the network. The operation identification information also serves as a trigger for causing the recording and reproduction apparatus 1 to execute the contents distribution service.

Therefore, the recording and reproduction apparatus 1 can recognize, by reading out the operation identification information, that the optical disk 100 inserted into the recording and reproduction apparatus 1 is a disk that causes the recording and reproduction apparatus 1 to execute the prepaid-type contents distribution service over the network. Moreover, by having the recording and reproduction apparatus 1 read out the operation identification information, the operation identification information serves as a trigger for causing the contents distribution service to be executed.

Subsequently, in S30, the user selects either to (a) download contents by use of the contents distribution service or (b) reproduce contents stored in the RE layer 102.

At this time, a selection screen of the (a) or (b) is displayed on a display apparatus 7 connected to the recording and reproduction apparatus 1, and the user is to select either one of the (a) or (b) by use of the operational section 6.

Case where (a) is selected (Downloading contents)
S40 to S90 are processes carried out when the user selects the foregoing (a).

First, in S40, the recording and reproduction apparatus 1 reproduces the RE layer 102, and causes the display apparatus 7 to display the balance of the prepaid charges. At this time, the recording and reproduction apparatus 1 may also cause the display apparatus 7 to display information such as the use record (download record) of the contents, the total amount of money spent, and the connection record of the recording and reproduction apparatus 1.

Furthermore, the recording and reproduction apparatus 1 reproduces the ROM layer 104, and causes the display apparatus 7 to display a list (catalog) of contents available from the contents server 200. At this time, the recording and reproduction apparatus 1 may also cause the display apparatus 7 to display information indicative of a connection destination, and like information.

Next, in S50, the user selects contents that they desire to view, upon confirmation of the balance and the list (catalog) of contents each displayed on the display apparatus 7. After the contents is selected, the recording and reproduction apparatus 1 connects to the contents server 200. The user data region 104c of the ROM layer 104 stores a connection program for establishing connection with the contents server 200, and information indicative of a connection destination. Hence, the recording and reproduction apparatus 1 is capable of connecting with the contents server 200 by use of the connection program and the information indicative of the connection destination.

Subsequently, in S60, the recording and reproduction apparatus 1 reads out the medium-specific information unique to the optical disk 100 from the specific information region 104e in the BCA region 104a of the ROM layer 104, and transmits the medium-specific information to the contents server 200.

In S70, the contents server 200 compares the medium-specific information received from the recording and reproduction apparatus 1 with the optical disk information registered in the contents server 200, to verify the optical disk 100 inserted into the recording and reproduction apparatus 1. Upon completion of this verification, the contents server 200 confirms that downloading of contents can be performed by use of the optical disk 100 inserted into the recording and reproduction apparatus 1. Thereafter, the contents server 200 transmits the contents selected by the user, to the recording and reproduction apparatus 1.

In S80, the recording and reproduction apparatus 1 records the downloaded contents onto the RE layer 102 of the optical disk 100. This allows the user to view the contents at any time.

Other than the RE layer 102, the downloaded contents can be stored on the memory 5 of the recording and reproduction apparatus 1, or on a cache or hard disk drive not illustrated.

After the recording and reproduction apparatus 1 finishes receiving the contents, information indicating that the reception of contents is completed is transmitted from the recording and reproduction apparatus 1 to the contents server 200, in S90. The optical disk information management section 232 of the contents server 200 determines the used charges in relation to the contents distribution, and updates the optical disk information (e.g., balance, use record) stored in the server storage section 220 of the contents server 200, to the latest information. Moreover, the contents server 200 transmits the updated optical disk information to the recording and reproduction apparatus 1.

After the recording and reproduction apparatus 1 receives the updated optical disk information from the contents server 200, the recording and reproduction apparatus 1 records the optical disk information onto the user data region 102c in the RE layer 102 of the optical disk 100. In a case where the updated optical disk information is accompanied with supplementary information such as a reproducible period or a reproducible number of times of each of the contents, such supplementary information can also be recorded on the RE layer 102 of the optical disk 100 together with the updated optical disk information.

As a result, the latest optical disk information is stored in the contents server 200 and the optical disk 100.

Subsequent to completion of the foregoing series of operations, the recording and reproduction apparatus 1 disconnects its connection with the contents server 200, and terminates the operations of (a).

Case where (b) is selected (Reproduction of Contents)
S100 to S120 are processes carried out when the user selects (b) in S30.

First, in S100. the recording and reproduction apparatus 1 reproduces a list of contents already downloaded and stored on the RE layer 102 of the optical disk 100, and causes the display apparatus 7 to display the list of contents.

At this time, in the case where the contents include supplementary information such as the reproducible period or the reproducible number of times, the recording and reproduction apparatus 1 can also reproduce the supplementary information together with the contents. Alternatively, the recording and reproduction apparatus 1 can obtain the supplementary information from the contents server 200 at a time of S100, and cause the display apparatus 7 to display the supplementary information.

Meanwhile, the communication section 24 of the recording and reproduction apparatus 1 may obtain the reproduction permission information and deletion permission information from the contents server 200. This allows the recording and reproduction apparatus 1 to cause display on the display apparatus 7 of just contents that are permitted to be reproduced by the reproduction permitting section 25 in accordance with the reproduction permission information. Alternatively, the recording and reproduction apparatus 1 may cause display on the display apparatus 7 of just contents that are not permitted to be deleted by the deletion permitting section 26 in accordance with the deletion permission information. As a result, the user can confirm on the display apparatus 7 just the viewable contents.

Next, in S110. the user selects contents that are desirably viewed from among the list of contents displayed on the display apparatus 7.

Thereafter, in S120, the contents selected by the user is displayed on the display apparatus 7.

This completes the series of operations of (b).

Modification (Prepaid-type optical disk)
Overview of Modification
First schematically described is an online shopping system according to the present modification, with reference to Fig. 6. Fig. 6 is a view schematically illustrating an online shopping system using a prepaid-type optical disk.

The online shopping system is a system for allowing a user to purchase a product online.

A user of the online shopping system purchases a prepaid-type optical disk (hereinafter referred to simply as "optical disk 110") available in convenience stores and the like. A price of the optical disk 110 includes, in addition to a price of the actual optical disk, fees (prepaid charges) required for purchasing various products stored in a shopping server 300.

The optical disk 1 10 has two layers: a ROM layer and a RE layer. The ROM layer stores in advance a list (catalog) of products that are available for purchase from the shopping server 300. The RE layer stores no information at a time when the optical disk 110 is purchased.

How the online shopping system is used is as follows. First, the user inserts the optical disk 110 into a recording and reproduction apparatus 50 connected to a network. At this time, the optical disk 110 stores operation identification information which causes the recording and reproduction apparatus 50 into which the optical disk 110 is inserted to recognize the optical disk 110 as a disk that causes the recording and reproduction apparatus 50 to execute a prepaid-type online shopping system over the network. The operation identification information also serves as a trigger for causing the recording and reproduction apparatus 50 to execute the online shopping system. The recording and reproduction apparatus 50, by recognizing the operation identification information, then becomes capable of executing the online shopping system. In other words, the recording and reproduction apparatus 50 is not capable of executing the online shopping system unless the operation identification information is recognized.

Hence, by causing the recording and reproduction apparatus 50 to recognize the operation identification information before a product is purchased, it is possible to prevent information stored in the optical disk 110 from leaking over the network via the recording and reproduction apparatus 50. This improves the security against information leakage.

Recognition of the operation identification information by the recording and reproduction apparatus 50 enables the purchasing of products over the network. The user selects a desired product to purchase from the product catalog recorded on the ROM layer; thereafter, information regarding the selected product is transmitted to the shopping server 300.

The online shopping system is systemized so that once the shopping server 300 identifies the product selected by the user, that product is organized to be delivered to the user. A conventional system is used as the system related to the delivery; detailed descriptions thereof are omitted in the embodiment.

As such, in the online shopping system according to the present modification, the optical disk 110 stores operation identification information which causes the recording and reproduction apparatus 50 into which the optical disk 110 is inserted to recognize that the optical disk 110 is a disk causing the recording and reproduction apparatus 50 to execute the prepaid-type online shopping system over the network, and which serves as a trigger for causing the recording and reproduction apparatus 50 to execute the online shopping system. Consequently, it is possible to prevent the information stored in the optical disk 110 from unintentionally leaking over the network. This improves the security against the information leakage.

Brief configuration of Recording and reproduction apparatus 50
Next specifically describes the recording and reproduction apparatus 50, optical disk 110, and shopping server 300, each according to the present modification, with reference to Fig. 7 and the like. Fig. 7 is a block diagram illustrating a configuration of main parts of the recording and reproduction apparatus 50 being one modification of the present invention. Details that are similar to the description with reference to Fig. 3 are omitted in description in this modification.

The control section 20 chiefly includes: a disk loading confirmation section 22, a recording and reproduction circuit group control section 23, and a communication section 24. Accordingly, the recording and reproduction apparatus 50 differs from the recording and reproduction apparatus 1 in that the recording and reproduction apparatus 50 does not include the reproduction permitting section 25 and the deletion permitting section 26, each of which are included in the recording and reproduction apparatus 1.

The communication section 24 communicates with an external network in accordance with the operation identification information stored in the optical disk 110. More specifically, the operation identification information stored in the optical disk 110 is read out by the recording and reproduction circuit group control section 23. Thereafter, the recording and reproduction circuit group control section 23 transmits the operation identification information to the communication section 24. This allows the communication section 24 to recognize the operation identification information, and communicate with the network by having the recognition serve as a trigger.

The operation identification information in the present modification is information which causes the recording and reproduction apparatus 50 into which the optical disk 110 is inserted to recognize the optical disk 110 as a disk that causes the recording and reproduction apparatus 50 to execute the prepaid-type online shopping system over the network, and which serves as a trigger for causing the recording and reproduction apparatus 50 to execute the online shopping system.

Moreover, the recording and reproduction apparatus 50 is provided having the memory 5, operational section 6, display apparatus 7, Internet terminal apparatus 8, and like components, and the Internet terminal apparatus 8 is connected to an external shopping server 300 over the Internet.

Brief configuration of Shopping server 300
Next described with reference to Fig. 8 is the shopping server 300 which is a server allowing a user to purchase a product online. Fig. 8 is a block diagram illustrating main parts of the shopping server 300. Details similar to the descriptions provided with reference to Fig. 4 and like drawings are omitted in explanation in the modification.

As illustrated in Fig. 8, the shopping server 300 at least includes: a server communication section 310; a server storage section 320; and a server control section 330.

The server communication section 310 communicates with an external Internet terminal apparatus 8 over the network, by being controlled by the server control section 330.

The server storage section 320 stores product information related to products that are available online. The product information includes various related information such as name, photo, serial number, and manufacturing date of the product. In principle, the products stored in the server storage section 320 are same as those recorded on the ROM layer 104 of the optical disk 110.

Furthermore, the server storage section 320 stores various types of optical disk information that are related to the optical disk 110 inserted into the recording and reproduction apparatus 50. The optical disk information includes, for example: medium-specific information unique to the optical disk 110; a use record of online shopping; a balance of prepaid charges; a total amount of money spent; and a connection record of the recording and reproduction apparatus 50.

The server control section 330 generally bears control of operations within the shopping server 300 and communication with the external Internet terminal apparatus 8, and chiefly includes the optical disk information management section 332.

The optical disk information management section 332 obtains, from the recording and reproduction apparatus 50 via the network, optical disk information such as the medium-specific information unique to the optical disk 110, the use record of online shopping, the balance of prepaid charges, the total amount of money spent, and the connection record of recording and reproduction apparatus 50. Thereafter, the optical disk information is stored in the server storage section 320 as the latest optical disk information.

For example, the optical disk information management section 332 causes the server storage section 320 to store the latest balance when a balance of prepaid charges is reduced in amount as a result of the user using the online shopping service. At this time, the optical disk information management section 332 updates other optical disk information together with the balance information. As such, the optical disk information management section 332 causes the server storage section 220 to store the latest optical disk information.

The configuration of the shopping server 300 is as briefly described above. In the foregoing description, the shopping server 300 is described as including the server storage section 320. However, the server storage section 320 can be accomplished by a configuration in which the server storage section 320 is provided outside the shopping server 300. Furthermore, products stored in the server storage section 320 and product information of those products may be achieved with a configuration in which the products and the product information are updated to their latest versions by a known method.

Brief configuration of Optical disk 110
The following describes the optical disk 110. The configuration itself of the optical disk 110 is the same as the optical disk 100 described with reference to Fig. 1. Hence, in this embodiment, descriptions are provided regarding various information stored in the regions of the optical disk 110. Details similar to the descriptions provided with reference to Fig. 1 and the like is omitted in description here.

The user data region 104c of the ROM layer 104 stores: a connection program for connecting to the shopping server 300; information indicative of a connection destination; and a list (catalog) of products or a part of products (sample video image or demonstration) that are available on the shopping server 300.

The list (catalog) of products can be entirely downloaded from the shopping server 300 via the Internet onto the RE layer 102. At this time, if the product information stored in the server storage section 320 is information which is updated to its latest version as necessary, the product information stored in the server storage section 320 and that stored in the RE layer 102 of the optical disk 110 are each regularly updated to their latest versions. In this case, it is possible to provide an optical disk 110 which is extremely useful for a user that uses the online shopping system that makes use of the prepaid-type optical disk.

Moreover, the user data region 102c in the RE layer 102 can store optical disk information stored in the server storage section 320, i.e., information such as the purchase record of products, the balance of prepaid charges, the total amount of money spent, and the connection record of the recording and reproduction apparatus 50. These optical disk information are information that are obtained from the shopping server 300 over the network and recorded on the user data region 102c in the RE layer 102 of the recording and reproduction apparatus 50.

It is also possible to have at least a part of information recorded on the BCA region of the optical disk 110 be stored in the server storage section 320 of the shopping server 300. In this case, the information is to be managed by the medium-specific information of the optical disk 1 10.

Basic operations of Online shopping system
Basic operations of the online shopping system according to the present modification is described below with reference to Fig. 9. Fig. 9 is a flowchart for describing the basic operations of the online shopping system.

First, the optical disk 110 is inserted into the recording and reproduction apparatus 50 in S210. The BCA region 104a in the ROM layer 104 of the optical disk 110 stores the operation identification information.

Next, in S220, the operation identification information is read out by the recording and reproduction apparatus 50. Namely, the recording and reproduction apparatus 50 reproduces the BCA region 104a, and reads out the operation identification information of the BCA region 104a. In the present embodiment, the operation identification information causes the recording and reproduction apparatus 50 into which the optical disk 110 is inserted to recognize the optical disk 110 as a disk that causes the recording and reproduction apparatus 50 to execute the prepaid-type online shopping service over the network, and the operation identification information further serves as a trigger for causing the recording and reproduction apparatus 50 to execute the online shopping service.

Therefore, the recording and reproduction apparatus 50, by reading out the operation identification information, can recognize the optical disk 110 inserted into the recording and reproduction apparatus 50 as a disk that causes the recording and reproduction apparatus 50 to execute the prepaid-type online shopping service over the network. Moreover, by reading out the operation identification information, the recording and reproduction apparatus 50 can serve as a trigger for executing the online shopping service.

Subsequently, in S240, the recording and reproduction apparatus 50 reproduces the RE layer 102 and causes the display apparatus 7 to display the balance of prepaid charges. At this time, the recording and reproduction apparatus 50 can cause the display apparatus 7 to display, together with the balance of prepaid charges, information such as the purchase record of products, the total amount of money spent, and the connection record of the recording and reproduction apparatus 50.

Furthermore, the recording and reproduction apparatus 50 reproduces the ROM layer 104, and causes the display apparatus 7 to display a list (catalog) of products that are available for purchase on the shopping server 300. At this time, the recording and reproduction apparatus 50 can cause the display apparatus 7 to display, together with the list, information indicative of the connection destination, and like information.

Next, in S250, the user selects a product that the user desires to purchase, upon confirmation of the balance and list (catalog) of products displayed on the display apparatus 7. Once a product is selected, the recording and reproduction apparatus 50 connects to the shopping server 300. The user data region 104c of the ROM layer 104 stores: a connection program for connecting to the shopping server 300; and information indicative of a connection destination. Hence, the recording and reproduction apparatus 50 is capable of connecting to the shopping server 300 by use of the connection program and the information indicative of the connection destination.

Subsequently, in S260, the recording and reproduction apparatus 50 reads out the medium-specific information unique to the optical disk 110 from the specific information region 104e in the BCA region 104a of the ROM layer 104, and transmits the medium-specific information to the shopping server 300.

In S270, the shopping server 300 compares the medium-specific information received from the recording and reproduction apparatus 50 with the optical disk information registered in the shopping server 300, to verify the optical disk 110 inserted into the recording and reproduction apparatus 50. Upon completion of this verification, the shopping server 300 confirms that purchasing of products is possible by use of the optical disk 110 inserted into the recording and reproduction apparatus 50. After this confirmation is completed, the product is delivered to the user.

Once the delivery process of the product is completed, information indicating that the process has completed is notified to the shopping server 300, in S290.

In a case where the shopping server 300 itself carries out the product delivery process in the online shopping system according to the present modification, the shopping server 300 determines the charge of the online shopping upon completion of the delivery process, and updates the optical disk information (balance, use record etc.) stored in the server storage section 320 of the shopping server 300.

On the other hand, in a case where a delivery process section different from the shopping server 300 carries out the product delivery process in the online shopping system according to the present modification, the delivery process section notifies the shopping server 300 at a time when the delivery process is completed that the delivery process is completed. The shopping server 300 then determines the charges of the online shopping, and updates the optical disk information (balance, use record etc.) stored in the server storage section 320 of the shopping server 300.

Alternatively, payments can be made once the shopping server 300 carries out the verification and confirms that the user can purchase the product, in S270. Accordingly, the shopping server 300 can determine the charges of the online shopping at a time when the payment is made, and update the optical disk information (balance, use record etc.) stored in the server storage section 320 of the shopping server 300.

Embodiment 1-2 (Postpaid-type Optical disk)
The following description explains a contents distribution system using a postpaid-type optical disk. Details similar to the descriptions with reference to Fig. 1 and like drawings have been omitted.

Overview of Embodiment 1-2
First schematically described is a contents distribution system according to the present embodiment, with reference to Fig. 10. Fig. 10 schematically illustrates a contents distribution system that uses a postpaid-type optical disk.

First, a user of the contents distribution system obtains a postpaid-type optical disk (hereinafter referred to simply as "optical disk 120"). The optical disk 120 can be obtained by methods such as: (a) requesting a contents distributor to send an optical disk 120; or (b) receiving an optical disk 120 being handed out on the streets.

"Postpaid-type" in the present invention denotes a system in which desired contents are downloaded by use of a contents distribution system, and thereafter the charges for the contents is to be paid.

The optical disk 120 has two layers: a ROM layer and a RE layer. The ROM layer records in advance a list (catalog) of contents downloadable from the contents server 200. The RE layer stores no information at the time when the optical disk 120 is obtained.

How the contents distribution system is used is as described below. First, the user inserts the optical disk 120 into the recording and reproduction apparatus 1 connected to a network. At this time, the optical disk 120 stores operation identification information; the operation identification information causes the recording and reproduction apparatus 1 into which the optical disk 120 is inserted to recognize that the optical disk 120 is a disk that causes the recording and reproduction apparatus 1 to execute the postpaid-type contents distribution service over the network. The operation identification information further serves as a trigger for causing the recording and reproduction apparatus 1 to execute the contents distribution service. The recording and reproduction apparatus 1 is capable of carrying out the contents distribution service by recognizing the operation identification information. In other words, the recording and reproduction apparatus 1 is not capable of executing the contents distribution service unless the operation identification information is recognized.

Consequently, by causing the recording and reproduction apparatus 1 to recognize the operation identification information before the contents is downloaded, it is possible to prevent the information recorded on the optical disk 120 from leaking over the network via the recording and reproduction apparatus 1. This improves the security against the information leakage.

Once the recording and reproduction apparatus 1 recognizes the operation identification information, the contents distribution service available over the network becomes available for use. The user then selects a contents that the user desires to view from among the catalog recorded on the ROM layer; the selected contents is then downloaded from the contents server 200. The downloaded contents is recorded onto the RE layer on which no recording is included at the time of obtainment.

As such, with the contents distribution system according to the present embodiment, the optical disk 120 stores operation identification information which causes the recording and reproduction apparatus 1 into which the optical disk 120 is inserted to recognize the optical disk 120 as a disk causing the recording and reproduction apparatus 1 to execute the postpaid-type contents distribution service over the network. This operation identification information also serves as a trigger for causing the recording and reproduction apparatus 1 to execute the contents distribution service. Hence, it is possible to prevent the information recorded on the optical disk 120 from unintentionally leaking over the network. This as a result improves security against the information leakage.

Charges of the contents may be charged by a method selected by the user (e.g., credit card, bank transfer).

Basic operations of Postpaid-type Contents distribution system
The following description deals with basic operations of the contents distribution system according to the present embodiment, with reference to Fig. 11. Fig. 11 is a flowchart illustrating the basic operations of the postpaid-type contents distribution system. Details similar to the descriptions provided with reference to Fig. 5 and like drawings are omitted in this embodiment.

First, in S10. the optical disk 120 is inserted into the recording and reproduction apparatus 1. The optical disk 120 is obtained by the user of the contents distribution system by, for example, (a) requesting the contents distributor to send an optical disk 120, or (b) receiving an optical disk 120 being handed out on the streets.

Thereafter, the processes are carried out as in the method described with reference to Fig. 5, up to S70.

Subsequently, the fee of the contents is paid in S75. The fee of the contents can be charged by a method selected by the user (credit card, bank transfer etc.). Moreover, Fig. 11 illustrates that the payment of the fee of the contents is to be made between S70 and S80. However, S75 can be carried out at any stage as long as it is carried out after the distribution of contents have terminated.

Basic operations of the postpaid-type contents distribution system are carried out as described above.

This describes the contents distribution system using the postpaid-type optical disk. However, the present embodiment is not limited to the foregoing configuration. Namely, the configuration of the present embodiment is of course applicable to an online shopping system that uses the postpaid-type optical disk. The details of the online shopping system apply correspondingly with the "Overview of Modification" with reference to Fig. 6; therefore, description thereof is omitted here.

Effect attained by Present invention
Described below are the effects attained by the present invention. The following description explains only of the recording and reproduction apparatus 1, optical disk 100, and contents server 200 described in Embodiment 1-1. However, this is only for easy explanation, and the same effects are also attained by the recording and reproduction apparatus 50, optical disk 110, and shopping server 300 which are described in Modification of Embodiment 1-1, and also by the optical disk 120 described in Embodiment 1-2.

The optical disk 100 stores operation identification information causing the recording and reproduction apparatus 1 into which the optical disk 100 is inserted to recognize the optical disk 100 as a disk causing the recording and reproduction apparatus 1 to perform a commercial transaction over a network, the operation identification information serving as a trigger for causing the recording and reproduction apparatus 1 to perform the commercial transaction.

With a conventional information storage medium that allows performing a commercial transaction over a network, a contents obtaining program stored in the medium cooperates with a user terminal so that contents and the like required for performing the commercial transaction is downloaded to the medium.

However, with such a configuration, a network connection is initiated for downloading contents even in a case where the contents obtaining program unrelated to the commercial transaction is stored in the information storage medium, caused by the contents obtaining program cooperating with the user terminal. This network connection may cause unnecessary leakage of useful information such as personal information stored that is in the information storage medium.

In comparison, the optical disk 100 is an information storage medium that stores operation identification information. This operation identification information causes the recording and reproduction apparatus 1 into which the optical disk 100 is inserted to recognize the optical disk 100 as a disk that causes the recording and reproduction apparatus 1 to perform a commercial transaction over a network, and further the operation identification information serves as a trigger for causing the recording and reproduction apparatus 1 to perform the commercial transaction.

Hence, by causing the recording and reproduction apparatus 1 to recognize the operation identification information before downloading the contents, it is possible to prevent important information such as personal information stored in the optical disk 100 from leaking over the network via the recording and reproduction apparatus 1. As a result, security against information leakage is improved.

The recording and reproduction apparatus may be set so that no downloading is carried out by use of an optical disk 100 storing no operation identification information. This prevents any unnecessary leakage of personal information, thereby improving the security.

Furthermore, with the optical disk 100, the optical disk 100 is preferably a prepaid-type information storage medium, causing a commercial transaction performed over the network to be performed after a user completes payment of prepaid charges, and the operation identification information is information causing the recording and reproduction apparatus 1 to recognize the optical disk 100 as the prepaid-type information storage medium.

According to the configuration, the operation identification information causes the recording and reproduction apparatus 1 to recognize the optical disk 100 storing that operation identification information as the prepaid-type information storage medium. Moreover, the operation identification information serves as a trigger for causing the recording and reproduction apparatus 1 to perform the prepaid-type commercial transaction.

As a result, it is possible to prevent various information stored in the optical disk 100 from leaking onto the network before the recording and reproduction apparatus 1 is connected to the network to perform the commercial transaction. This thus prevents the various information from unnecessarily leaking, thereby improving the security against information leakage.

Furthermore, with the optical disk 100, the optical disk 100 preferably stores (i) balance information related to a balance of the prepaid charges and (ii) transaction information related to a transaction target of the commercial transaction.

By having the foregoing configuration, it is possible to check the balance information and transaction information stored in the optical disk 100 on the display apparatus 7, without having to connect to the network.

As a result, there is no need to connect the recording and reproduction apparatus 1 to the network in order to check the balance information and transaction information. This allows holding down a risk of causing leakage of various information stored on the optical disk 100, to the least possible.

More specifically, the recording and reproduction apparatus 1 causes the display apparatus 7 to display balance information and transaction information so that a user can check the money amount information and transaction information; thereafter, the user that has checked the information selects a preferable commercial transaction (e.g., contents, product, or service). Subsequently, the recording and reproduction apparatus 1 causes the operation identification information to serve as a trigger for establishing a connection between the recording and reproduction apparatus 1 and the network. By having such a configuration, it is possible to prevent various information stored in the optical disk 100 from leaking onto the network, before the recording and reproduction apparatus 1 is connected to the network. This as a result improves the security against information leakage.

Furthermore, with the optical disk 100, the optical disk 100 preferably is a postpaid-type information storage medium, causing a commercial transaction over the network to be performed by having a user pay charges after the commercial transaction is performed, and the operation identification information is information causing the recording and reproduction apparatus 1 to recognize the optical disk 100 as the postpaid-type information storage medium.

According to the configuration, the operation identification information is information that causes the recording and reproduction apparatus 1 to recognize the optical disk 100 storing that operation identification information as the postpaid-type information storage medium. Moreover, the operation identification information serves as a trigger for causing the recording and reproduction apparatus 1 to perform the postpaid-type commercial transaction.

As a result, it is possible to prevent various information stored on the optical disk 100 from leaking onto the network, before the recording and reproduction apparatus 1 is connected to the network to perform the commercial transaction. Hence, it is possible to prevent various information from being unnecessarily leaked, thereby improving the security against information leakage.

Furthermore, the optical disk 100 preferably includes a reproduction-only region from which information can only be read out, the reproduction-only region including: a specific information region 104e storing (i) the operation identification information and (ii) medium-specific information unique to the optical disk 100; and a common information region 104f storing medium common information which is common in the optical disk 100.

Conventionally, a recording region of medium-specific information that is information different per optical disk 100 is provided in a same region as a recording region of medium common information that is information common among optical disks 100 of a same type, in the reproduction-only region of the optical disk 100. Hence, the optical disk 100 requires storing different information in the reproduction-only region per disk; this made it impossible to use bulk production means by use of a stamper or the like, to produce the reproduction-only region.

However, by configuring the optical disk 100 so that the reproduction-only region includes a specific information region 104e and a common information region 104f, in which specific information region 104e stores the operation identification information and medium-specific information and in which common information region 104f stores the medium common information, use the stamper or the like is possible in producing the common information region 104f. Hence, it is possible to accomplish an optical disk 100 that is suitable for bulk production.

Furthermore, in the optical disk 100, it is preferable that the specific information region 104e is stored in a BCA region 104a.

The BCA region 104a is a region in which information is recorded one by one by use of a strong laser at a final manufacturing process of the optical disk 100. As compared to a regular recording mark by which contents information is recorded, the mark in the BCA region is incomparably larger in size. Therefore, with a regular recording and reproduction apparatus, the information recorded on the BCA region is not rewritable.

Hence, by including the specific information region 104e in the BCA region 104a, it is possible to avoid the risk that the operation identification information and medium-specific information stored in the specific information region 104e is rewritten.

The specific information region 104e preferably carries out recording by use of marks of a shape larger than those of the common information region 104f.

With such a configuration, the operation identification information and medium-specific information stored in the specific information region 104e are detected more easily and positively than the medium common information stored in the common information region 104f. Further, in the optical disk 100, the operation identification information and medium-specific information is more important than the medium common information; the foregoing configuration attains an effect that the operation identification information and medium-specific information of a higher importance is detected easier and more positively than the medium-specific information of a relatively low importance.

Furthermore, the recording and reproduction apparatus 1 according to the present invention preferably is a recording and reproduction apparatus 1 into which any one of the optical disk 100 is to be inserted, wherein the recording and reproduction apparatus 1 includes: a communication section 24 communicating with the network based on the operation identification information.

According to the configuration, the communication section 24 communicates over the network, in accordance with the operation identification information stored in the optical disk 100.

Hence, when an optical disk 100 in which the operation identification information is stored is inserted into the recording and reproduction apparatus 1, the communication section 24 communicates with the network after the communication means recognizes the operation identification information.

Accordingly, the recording and reproduction apparatus 1 allows preventing unintentional leakage of important information stored in the optical disk 100 over the network without the communication section 24 recognizing the operation identification information. Hence, this improves the security against information leakage.

Furthermore, the recording and reproduction apparatus 1 according to the present invention preferably further includes a reproduction permitting section 25, the communication section 24 receiving reproduction permission information from the network, the reproduction permission information being indicative of whether or not to permit reproduction of contents downloaded from the network by means of the commercial transaction, and the reproduction permitting section 25 permitting the reproduction of the contents in accordance with the reproduction permission information received.

With the configuration, it is possible to cause reproduction of contents that is permitted by the reproduction permitting section 25, from among the downloaded contents.

For instance, assume a case where the commercial transaction is a service that distributes video contents over a network, and the communication section 24 receives, from the network, information related to a reproducible period of the video contents downloaded by a user, as reproduction permission information. At this time, the reproduction permitting section 25 permits reproduction of the video contents if a current time is within the reproducible period, and if the current time is outside the reproducible period, the reproduction of the video contents is not permitted. This allows the recording and reproduction apparatus 1 to accomplish reproduction of video contents in accordance with the reproduction permission information.

Alternatively, the following case may also be considered. For instance, assume a case where the commercial transaction is a service that distributes video contents over a network, and the communication section 24 receives, from the network, information related to a reproducible number of times of the video contents downloaded by a user, as the reproduction permission information. At this time, the reproduction permitting section 25 permits the reproduction of the video contents if a reproduced number of times is equal to or less than the reproducible number of times, and if the reproduced number of times exceeds the reproducible number of times, the reproduction of the video contents is not permitted. Hence, the recording and reproduction apparatus 1 can reproduce the video contents in accordance with the reproduction permission information.

Furthermore, the recording and reproduction apparatus 1 according to the present invention preferably further includes a deletion permitting section 26, the communication section 24 receiving deletion permission information from the network, the deletion permission information being indicative of whether or not to permit deletion of contents downloaded from the network by means of the commercial transaction, and the deletion permitting section 26 permitting the deletion of the contents in accordance with the deletion permission information received.

With such a configuration, the deletion permitting section 26 permits deletion of contents downloaded from the network.

For instance, assume a case where the commercial transaction is a service that distributes video contents over a network, and the communication section 24 receives, from the network, information related to a reproducible number of times of the video contents downloaded by a user, as deletion permission information. At this time, the deletion permitting section 26 does not permit the deletion of the video contents if the reproduced number of times is within the reproducible number of times, whereas if the user attempts to reproduce the video contents regardless that the reproduced number of times is exceeding the reproducible number of times, the deletion permitting section 26 permits the deletion of the video contents.

As such, in a case where a limit is provided to the reproducible number of times or the like, providing the deletion permitting means allows the recording and reproduction apparatus 1 to appropriately delete the contents downloaded from the network. Hence, the contents distributor can appropriately manage use of contents by the user.

Other Configuration of Present invention
Described below is yet another configuration of the present invention that can be carried out in combination with the foregoing invention.

An invention according to the another configuration relates to a communication system including: a telecommunications carrier providing a public connection network; a plurality of contents servers managing contents; and a recording and reproduction apparatus capable of controlling recording or reproduction of information stored in an information storage medium.

Conventionally, an information processing apparatus such as a portable terminal or the like downloads information desired by a user from an information management server that manages various information such as contents and software, by establishing a connection with the information management server over a public connection network provided by a telecommunications carrier. Moreover, in a case where the information processing apparatus is a recording and reproduction apparatus capable of controlling recording or reproduction of information stored in an optical disk, the information processing apparatus accomplishes information distribution from the information management server in accordance with the information stored in the optical disk.

One example of a technique related to achieving such an information distribution is Japanese Patent Application Publication, Tokukai No. 2002-245042 A (Publication Date: August 30, 2002). This Literature discloses an optical disk having a ROM region in which a specific code (e.g., URL (Uniform Resource Locator)) for accessing the information management server is stored, and an information processing apparatus using such an optical disk. After the optical disk is inserted, the information processing apparatus reads out the specific code and controls certain communication means, to receive information distribution from an information management server to which the information processing apparatus is connected, over the public connection network provided by the telecommunications carrier, which connection destination is indicated by the specific code.

In the Literature, the information processing apparatus can make use of the public connection network by providing a wireless communication unit in the information processing apparatus. However, no disclosure has been made regarding how to obtain a connection right to allow the use of the network, which connection right is required to connect the apparatus to the public connection network.

In a case where mobile phone services, fixed telephone services, Internet service and the like are provided, the telecommunications carrier usually allows use of the public connection network by a user by providing a connection right to that user. In this case, the telecommunications carrier acquires personal information in exchange of providing the connection right to the user, so that the telecommunications carrier can charge the communications charges from the user. Namely, the user requires providing their personal information to the telecommunications carrier, in order to obtain the connection right for using the public connection network.

That is to say, in view of the current use of the public connection network, with the technique disclosed in the Literature, even though the telecommunications carrier obtains personal information systematically through an established system, it is as a matter of course that personal information of the user may leak. Moreover, in the current use, installation of a connection line is required for the user to use the public connection network; much time and trouble is required in signing up for the use and installation of the connection line.

Namely, in the technique disclosed in the Literature, in order to be distributed with information from the information management server by use of the information processing apparatus, the user requires to obtain a connection right (the user requires to sign up with the telecommunications carrier in advance), and the user requires to provide their personal information to the telecommunications carrier. Due to the necessity of providing the personal information, there is the fear that the personal information may possibly leak via the telecommunications carrier.

The invention according to another configuration is accomplished to solve the foregoing problem, and its object is to provide a recording and reproduction apparatus, a method of controlling a recording and reproduction apparatus, a control program, an information storage medium, and a communication system, each of which allows a user to communicate with an information management server by use of a public connection network, without the user having to obtain a connection right or provide their personal information to a telecommunications carrier.

Embodiment
In a communication system according to the present invention, a telecommunications carrier (person administering a public connection network) determines a connection destination (information management server) for which connection with a recording and reproduction apparatus is permitted, and manages connection destination information indicative of the connection destination. Moreover, the telecommunications carrier decides together with a person administering the information management server of the destination how to pay the communications charges, and manages information in conformity with the decision. This information is communications charges information indicative of (a) whether or not the communications charges is charged to connect with an information management server indicated by the connection destination information, and (b) a billing destination of the communications charges other than the user of the recording and reproduction apparatus, in a case where the communications charges are charged.

Moreover, the telecommunications carrier allots, to a recording and reproduction apparatus, an identifier for activating a connection right which is a right required for connecting the recording and reproduction apparatus with the public connection network, by for example having the identifier be (i) stored in advance in the recording and reproduction apparatus itself, (ii) stored in advance in an information storage medium to be used by the recording and reproduction apparatus, or (iii) labeled to the recording and reproduction apparatus or to its attachments.

Hence, upon receiving from the recording and reproduction apparatus the identifier allotted by the telecommunications carrier, the telecommunications carrier activates the connection right, determines its connection destination, and in a case where the communications charges are charged, collects the communications charges. Namely, in the communication system of the present invention, a user of the recording and reproduction apparatus (i.e., a user of the public connection network) can cause activation of the connection right to connect to the public connection network by use of a recording and reproduction apparatus, without having to enter a contract for installing the connection line with the telecommunications carrier to use the public connection network.

The present invention is described below with reference to drawings. For easy explanation, members having identical functions as those illustrated in the drawings are given identical reference signs, and their descriptions are omitted below.

Embodiment 2-1
One embodiment of the present invention is described below, with reference to Fig. 12 to Fig. 17. In the present embodiment (also similarly in Embodiments 2-2 to 2-4), a recording and reproduction apparatus 1 includes a control section 20 (communication apparatus) which can connect to a public connection network whose connection right is activated. Namely, in a case where a control section 20 confirms presence of an identifier allotted to the recording and reproduction apparatus 1 at its initial settings or during manufacture of the recording and reproduction apparatus 1, the identifier is transmitted to a telecommunications carrier management terminal 350. This causes the telecommunications carrier management terminal 350 to activate the connection right and allow the recording and reproduction apparatus 1 to connect to the public connection network.

That is to say, in the present embodiment, the connection right is already activated at a time when the user of the recording and reproduction apparatus 1 uses the recording and reproduction apparatus 1. Namely, in a communication system 400 of the present embodiment, a connection right of the recording and reproduction apparatus 1 is always activated, and the recording and reproduction apparatus 1 is always connectable to the information management server 250 indicated by the connection destination information.

Moreover, the recording and reproduction apparatus 1 requests for a connection with an information management server 250 indicated by the connection destination information associated with the identifier, for instance when an instruction is entered by the user, when destination information stored in the optical disk 100 (information storage medium) is read out by the recording and reproduction apparatus 1 , or when a preset distributing time has come. As a result, the recording and reproduction apparatus 1 establishes connection with the information management server over the public connection network, to allow transmitting and receiving information with the information management server 250.

Brief configuration of Communication system 400
First described is the communication system 400 according to the present embodiment, with reference to Fig. 13. Fig. 13 is a view schematically illustrating one example of the communication system 400 according to the present embodiment. As illustrated in Fig. 13, the communication system 400 includes: the recording and reproduction apparatus 1; the information management server 250; and the telecommunications carrier management terminal 350 (telecommunications carrier).

The recording and reproduction apparatus 1 is capable of (i) controlling (a) recording of information onto a BD or DVD (information storage medium) such as an optical disk 100 (later described) or (b) reproduction of information recorded on the BD or DVD, and (ii) receiving information from and transmitting information to the information management server 250 over a public connection network that is provided by the telecommunications carrier management terminal 350. Moreover, the optical disk 100 is insertable into the recording and reproduction apparatus 1. The configuration of the recording and reproduction apparatus 1 is described later with reference to Fig. 12.

The information management server 250 manages contents or software, and provides the contents or software in accordance with a connection request of the recording and reproduction apparatus 1. The "contents" denotes, for example, motion pictures (movies and television programs), music, and games, and "software" denotes, for example, updating firmware distributed by a manufacturer of the recording and reproduction apparatus 1, to be used for updating firmware installed in the recording and reproduction apparatus 1 for controlling the recording and reproduction apparatus 1. Moreover, the information management server 250 may manage, as contents information, (i) the contents and (ii) supplementary information such as a reproducible period, a reproducible number of times or like information of the contents.

In order to enable the management of the contents or software and the receiving and transmitting of information, between (a) the recording and reproduction apparatus 1 and the telecommunications carrier management terminal 350 and (b) the information management server 250, the information management server 250 at least includes: a server communication section; a server control section; and a server storage section (all not illustrated).

Moreover, the communication system 400 includes a plurality of information management servers 250; to which of the information management servers 250 the recording and reproduction apparatus 1 is connectable is determined by the telecommunications carrier management terminal 350, in accordance with the connection destination information associated with the identifier allotted to the recording and reproduction apparatus 1. Fig. 13 illustrates one example of the information management server 250 that is connectable to the recording and reproduction apparatus 1.

The telecommunications carrier management terminal 350 provides the public connection network; by activating the connection right of the recording and reproduction apparatus 1, the telecommunications carrier management terminal 350 allows the recording and reproduction apparatus 1 to communicate with the information management server 250 which is the connection destination of the recording and reproduction apparatus 1. Moreover, the telecommunications carrier management terminal 350 manages a communications state of the recording and reproduction apparatus 1 and the information management server 250. Configuration of the telecommunications carrier management terminal 350 is described later with reference to Fig. 14.

The information management server 250 is managed by the contents distributor in a case where the information management server 250 manages the contents, and in a case where the information management server 250 manages the updating firmware, the information management server 250 is managed by the manufacturer of the recording and reproduction apparatus 1. However, the present invention is not limited to this, and the information management server 250 can also be managed by the telecommunications carrier management terminal 350.

Brief configuration of Telecommunications carrier management terminal 350
Next schematically describes the configuration of the telecommunications carrier management terminal 350 according to the present embodiment, with reference to Fig. 14. Fig. 14 is a view schematically illustrating one example of the telecommunications carrier management terminal 350 according to the present embodiment. As illustrated in Fig. 14, the telecommunications carrier management terminal 350 manages the public connection network provided by the telecommunications carrier to the recording and reproduction apparatus 1 and information management server 250, and includes: a terminal communication section 351; a terminal storage section 352; and a terminal control section 353.

The terminal communication section 351 communicates with the recording and reproduction apparatus 1 and the information management server 250, by being controlled by the terminal control section 353.

The terminal storage section 352 stores (1) control programs for each section, (2) an OS program, (3) an application program, and (4) various data read out when executing these programs, where (1), (2) and (3) are executed by the terminal control section 353. The terminal storage section 352 is made up of a storage device such as a HDD (Hard Disk Drive) or a semiconductor memory, and is made up of a non-volatile storage device such as a ROM (Read Only Memory) flash memory if necessary.

The terminal storage section 352 records, for example:
(1) an identifier for causing activation of the connection right that is a right required for the recording and reproduction apparatus 1 to connect to the public connection network;
(2) connection destination information indicating which of the information management servers 250 the information management server 250 is permitted to be connected to the recording and reproduction apparatus 1; and
(3) communications charges information indicating (a) whether or not communications charges is charged by connecting with the information management server 250 indicated by the connection destination information, and (b) a billing destination to bill the charges other than the user of the recording and reproduction apparatus 1, in a case where the communications charges are charged.

The identifier is allotted to allow the recording and reproduction apparatus 1 to use the public connection network. Accordingly, for example, the identifier is (i) stored in the recording and reproduction apparatus 1, (ii) stored in advance in the ROM layer 104 of the optical disk 100 used in the recording and reproduction apparatus 1, or (iii) labeled to a chassis of the recording and reproduction apparatus 1 or an attachment of the recording and reproduction apparatus 1.

In the case where the identifier is stored in the recording and reproduction apparatus 1, it is possible to confirm the presence of the identifier at an initially set state of the recording and reproduction apparatus 1. This allows the telecommunications carrier management terminal 350 to activate the connection right of the recording and reproduction apparatus 1 at all times. Namely, it is possible to maintain the recording and reproduction apparatus 1 in a state connectable with the information management server 250 to which the recording and reproduction apparatus 1 is connected.

In the case where the identifier is stored in the optical disk 100, the telecommunications carrier management terminal 350 activates the connection right by receiving the identifier read out from the optical disk 100. The identifier is read out by the recording and reproduction apparatus 1 upon insertion of the optical disk 100 into the recording and reproduction apparatus 1.

In a case where the identifier is labeled to the chassis of the recording and reproduction apparatus 1 or to the attachment of the recording and reproduction apparatus 1, the user enters the identifier via the operational section 6 (later described) so that the recording and reproduction apparatus 1 can confirm the presence of the identifier and transmit the identifier to the telecommunications carrier management terminal 350. Accordingly, the telecommunications carrier management terminal 350 activates the connection right upon receiving the identifier.

The connection destination information and communications charges information are managed by the telecommunications carrier management terminal 350, by storing these information in the terminal storage section 352 so that these information are associated with the identifier. Moreover, the apparatus-specific information of the recording and reproduction apparatus 1 (medium-specific information of optical disk 100) to which the identifier is allotted is stored so as to be associated with the identifier. This allows the recording and reproduction apparatus 1 to confirm the presence of the allotted identifier and to transmit the identifier, thereby making it possible for the telecommunications carrier management terminal 350 to bill the communications charges to a predetermined billing destination. Moreover, the connection destination information is provided in the recording and reproduction apparatus 1 or the optical disk 100, so that the recording and reproduction apparatus 1 can request for a connection with the information management server 250 with which the recording and reproduction apparatus 1 is to be connected.

Details indicated by the connection destination information and communications charges information (information management server 250 to which the recording and reproduction apparatus is to be connected, whether or not communications charges is charged, and billing destination of the communications charges) are determined in advance between the telecommunications carrier, manufacturer of the recording and reproduction apparatus 1, the contents distributor and the like. Moreover, in a case where the optical disk 100 is a prepaid disk (Embodiment 2-2), the telecommunications carrier decides the details with its dealing destination. In a case where the telecommunications carrier manages the information management server 250, the telecommunications carrier can determine at least the communications charges information.

Moreover, examples of the connection destination information encompass a URL or IP (Information provider) address of the information management server 250. The IP address possibly changes in passage of time, however the URL, in a case where the information management server 250 is provided on the Internet, is automatically converted to a latest IP address by a DNS (Domain Name System). In consideration of this point, it is preferable that the connection destination information is a URL.

The terminal control section 353 chiefly includes: an activation control section 354 (activation control means); a connection destination determination section 355 (connection destination determination means); and a communications charges collecting section 356 (communications charges collecting means), and the terminal control section 353 controls members included in the telecommunications carrier management terminal 350 (an entire operation of the telecommunications carrier management terminal 350) by executing the control program. The terminal control section 353 carries out various processes by reading out a program stored in the terminal storage section 352 to a primary storage section (not illustrated) such as a RAM (Random Access Memory), and executing this program.

The primary storage section is made up of a volatile storage device such as a RAM, however in the present embodiment, the terminal storage section 352 may be described as having a function of a primary storage section (buffer).

The activation control section 354 activates the connection right by use of an identifier transmitted from the recording and reproduction apparatus. For instance, after the activation control section 354 receives an identifier either (a) stored in the recording and reproduction apparatus 1 or optical disk 100 or (b) entered by the user (i.e., identifier allotted to the recording and reproduction apparatus 1) from the recording and reproduction apparatus 1, the activation control section 354 compares the received identifier with an identifier stored in the terminal storage section 352. In a case where the identifiers match each other, the activation control section 354 activates the connection right of the recording and reproduction apparatus 1.

Moreover, the activation control section 354 inactivates the activated connection right based on its own decision or in a case where inactivation of the connection right is requested from the recording and reproduction apparatus 1. An example of a case where the inactivation is carried out based on its own decision is a case where a connection time which is set upon deciding with the information management server 250 has elapsed. Moreover, examples of the case where the recording and reproduction apparatus 1 requests to inactivate the connection right include: (i) a case where an entry indicative of inactivation is received by the user via the operational section 6 (later described); or (ii) a case where a preset distributing time or distributing time period of the recording and reproduction apparatus 1 has elapsed. Processes carried out in the communication system 400 while the connection right is inactivated are described in Embodiments 2-5 to 2-8.

The connection destination determination section 355 determines an information management server indicated by the destination information as an information management server that is permitted to be connected to the recording and reproduction apparatus 1, from among the plurality of information management servers 250 provided in the communication system 400. The connection destination determination section 355, for instance as similar to the above, determines the information management server 250 to which the recording and reproduction apparatus 1 is to be connected, by comparing the identifier transmitted from the recording and reproduction apparatus 1 with the identifier stored in the terminal storage section 352. This specifies the information management server 250 that is connectable with the recording and reproduction apparatus 1, and causes the recording and reproduction apparatus 1 to be capable of using the information management server 250 in a restricted manner.

The communications charges collecting section 356 determines whether or not the communications charges are charged for connecting the information management server 250 determined by the connection destination determination section 355 with the recording and reproduction apparatus 1. In a case where the charges are being charged, the communications charges collecting section 356 charges the communications charges to a billing destination indicated by the communications charges information without obtaining personal information for specifying the user of the recording and reproduction apparatus 1. For instance, similarly to the aforementioned, the communications charges collecting section 356 specifies the billing destination by comparing the identifier transmitted from the recording and reproduction apparatus 1 with the identifier stored in the terminal storage section 352. Thereafter, for example after communication is terminated between the recording and reproduction apparatus 1 and the information management server 250, the communications charges collecting section 356 bills the communications charges to the billing destination to collect the charges from the billing destination.

Note that the communications charges collecting section 356 collects the contents fee and communications charges from the billing destination "without obtaining personal information for specifying a user of the recording and reproduction apparatus 1 ", by confirming the communications charges information (billing destination of contents fee and communications charges) associated with the identifier received from the recording and reproduction apparatus 1. Moreover, the communications charges collecting section 356 collects the contents fees and communications charges "without obtaining personal information for specifying a user of the recording and reproduction apparatus 1", by having the telecommunications carrier sell the prepaid disk of Embodiment 2-2, or further having the information management server 250 providing the updating firmware to the recording and reproduction apparatus 1 of Embodiments 2-3, 2-4, 2-7, and 2-8 serve as the billing destination.

As described above, by allotting an identifier to the recording and reproduction apparatus 1, the telecommunications carrier management terminal 350 allows the recording and reproduction apparatus 1 to be in a state capable of communicating with a specific information management server 350 by use of a public connection network, without the user having to obtain a connection right and to provide their personal information to the telecommunications carrier management terminal 350.

Brief configuration of Optical disk 100
Next schematically describes a configuration of recording layers of the optical disk 100, with reference to Fig. 15. Fig. 15 is a view schematically illustrating one example of a configuration of the recording layers of the optical disk 100. In the following description, as the layers included in the optical disk (information storage medium) 100, a reproduction-only recording layer (information recording layer) is called a ROM (Read Only Memory) layer (first information recording layer), a rewritable recording layer (information recording layer) is called a RE (RE-writable) layer (second information recording layer), and an additionally-recordable recording layer is called a R (Recordable)layer (second information recording layer).

As illustrated in Fig. 15, the optical disk 100 has a substrate 101 , a RE layer 102, an intermediate layer 103 made of transparent resin, a ROM layer 104, and a cover layer 105 stacked in this order. Usually, reproducing light is incident on the cover layer 105.

The RE layer 102 includes a BCA region (management region) 102a, a lead-in region 102b, a user data region 102c, and a lead-out region 102d. Similarly, the ROM layer 104 includes a BCA region (management region) 104a, a lead-in region 104b, a user data region 104c, and a lead-out region 104d.

In Fig. 15, the optical disk 100 is described as including one layer each of the RE layer 102 and the ROM layer 104. However, the optical disk 100 may be configured as including a plurality of RE layers 102 and ROM layers 104. In other words, the optical disk 100 at least includes the ROM layer 104 from which information can be read out, and the R layer on which information is additionally recordable or the RE layer 102 on which information is rewritable. Moreover, the RE layer 102 and ROM layer 104 can be stacked in any order, not just limited to the order illustrated in Fig. 15.

Furthermore, in Fig. 15, the BCA region is provided in both the RE layer 102 and the ROM layer 104. However, the BCA region can be provided in just one of these layers.

The BCA regions 102a and 104a are barcode-like recording regions provided at an innermost circumference of the optical disk 100, which require no tracking control or is accessible just by focusing controlling. The BCA regions 102a and 104a include marks that are incomparably larger than regular recording marks by which information such as contents or the like are recorded. In the BCA regions 102a and 104a, information cannot be rewritten by a regular recording and reproduction apparatus. Accordingly, the BCA regions 102a and 104a are regions in which information is written in only during manufacture (i.e., regions that cannot be rewritten). An order (or arrangement method) in which identification information is recorded in the BCA regions 102a and 104a are set in conformity to regular standards and the like. The recording and reproduction apparatus 1 is designed so that when the optical disk 100 is inserted, the recording and reproduction apparatus 1 first reads out the information stored in the BCA regions 102a and 104a.

The BCA regions 102a and 104a store medium common information that is common among a plurality of optical disks 100. Specific examples of the medium common information encompass: a recording layer type of the optical disk 100 (reproduction-only type, additionally-recordable type, rewritable type); a size of the optical disk 100; and a standard version of the optical disk 100. Furthermore, the BCA regions 102a and 104a store medium-specific information which is information unique to each individual optical disk 100.

The BCA region 104a of the ROM layer 104 stores an identifier to be allotted to the recording and reproduction apparatus 1 by the telecommunications carrier management terminal 350, which identifier is recorded by the telecommunications carrier management terminal 350. This allows the recording and reproduction apparatus 1 to use the public connection network for communicating with the information management server 250 to which the recording and reproduction apparatus 1 is to be connected, by transmitting the identifier of the optical disk 100 to the telecommunications carrier management terminal 350 upon inserting the optical disk 100 into the recording and reproduction apparatus 1.

Since the identifier is stored in the ROM layer 104, it is not possible to rewrite or additionally record on the identifier. This allows prevention of unauthorized use of the identifier when the optical disk 100 is used in the recording and reproduction apparatus 1, such as a use in which an identifier is rewritten and the rewritten identifier is used improperly in the communication system 400.

Moreover, the operation identification information may be stored in the BCA region 104a of the ROM layer 104. The operation identification information is information which causes the recording and reproduction apparatus 1 to recognize the optical disk 100 as a disk that causes the recording and reproduction apparatus 1 to perform a commercial transaction over the public connection network, and which serves as a trigger for causing the recording and reproduction apparatus 1 to perform the commercial transaction.

In the case where the operation identification information is stored in the optical disk 100, the control section 20 of the recording and reproduction apparatus 1 causes the recording and reproduction apparatus 1 to perform the commercial transaction (e.g., downloading of contents from the information management server 250), by reading out the operation identification information. Hence, there is no need to store, in the ROM layer 104 of the optical disk 100, the connection program that serves as a trigger for carrying out the commercial transaction, which connection program is used for connecting the recording and reproduction apparatus 1 with the public connection network. As a result, it is possible to increase the storage capacity of the optical disk 100. In this case, the connection program is stored in the recording and reproduction apparatus 1, and the control section 20 reads out the operation identification information from the optical disk 100, to activate the connection program.

The lead-in regions 102b and 104b are regions that are provided in each recording layer on an outer side of the BCA region 102a or 104a of the optical disk 100. Moreover, in a case where the optical disk 100 is of the additionally-recordable type or the rewritable type, the lead-in regions 102b and 104b include not just a region in which information can be written just at the time of manufacture (i.e., region not rewritable), but also includes a region in which information can be additionally recorded or rewritten after the optical disk 100 is inserted into the recording and reproduction apparatus 1. The lead-in regions 102b and 104b record, for instance, a normal condition of recording onto and reproducing of the optical disk 100, information indicative of whether or not the recording and reproduction apparatus 1 is accessible to each of the layers (access restrictions), and information indicative of a position of defect made during manufacture or defect made during use.

The user data regions 102c and 104c are regions that store (or can store) various information such as: basic software for example an OS (Operating System); applications; or contents; and user data accompanying the software, applications or contents. Moreover, a position and address in which these information are stored, and further management information (route of a file, directory, etc.) such as a correlation between a plurality of information is also stored in the user data regions 102c and 104c.

In the present embodiment, for example, the user data region 104c of the ROM layer 104 stores applications, contents and the like provided by the disk supplier. More specifically, the user data region 104c can store a connection program or the like for connecting the recording and reproduction apparatus 1 to the public connection network. Moreover, in Embodiment 2-2 and 2-6, the user data region 104c stores, other than the connection program or the like, a list (catalog) of contents available from the information management server 250 or a part (sample video image or demonstration) of contents, a balance for which the contents can be used, and like information.

The list (catalog) of contents can be downloaded from the information management server 250 and be recorded on the RE layer 102. At this time, the contents stored in the information management server 250 and the RE layer 102 (user data region 102c) of the optical disk 100 are regularly updated to their latest versions in a case where the contents information such as motion pictures (movies and television programs), music, games and the like stored in the information management server 250, and supplementary information included in the contents information are accomplished so that they are updated to their latest versions as required. In this case, an optical disk 100 is provided which has an extremely high usability for a user of a contents distribution system that uses a prepaid-type optical disk.

On the other hand, the user data region 102c of the RE layer 102 stores: contents downloaded by a user, version upgrade information (updating firmware) of applications, and user data accompanying the contents, by the recording and reproduction apparatus 1. Furthermore, the user data region 102c in the RE layer 102 stores information that is possibly updated when the optical disk 100 is used, such as the connection record and payment record of the recording and reproduction apparatus 1. Moreover, in Embodiments 2-2 and 2-6, the user data region 102c stores, other than the foregoing information, the use record (download record) of contents, a balance of prepaid charges (balance information), and a total amount of money spent and like information. These information are stored by recording these information obtained from the information management server 250 over the public connection network onto the user data region 102c in the RE layer 102 of the recording and reproduction apparatus 1. That is to say, these information may be managed by the information management server 250.

Namely, the contents or updating firmware (software) distributed from the information management server 250 indicated by the connection destination information is recorded by the recording and reproduction apparatus 1, onto the RE layer 102 of the optical disk 100. In this case, the contents or updating firmware can be stored in the optical disk 100 in which an identifier is stored; hence, it is possible to collectively manage the contents or updating firmware together with the identifier, in the optical disk 100.

The lead-out regions 102d and 104d are usually provided on an outermost circumference of each of the layers of the optical disk 100, and indicate a termination position of the recording layer.

It is also possible to have at least a part of the information stored in the BCA region of the optical disk 100 be stored in the information management server 250. In this case, the information is sufficiently managed by the medium-specific information of the optical disk 100. By having such a configuration, it is possible to reduce the storage capacity of the BCA region of the optical disk 100, and instead increase the storage capacity of other regions such as the user data region 102c.

This describes the optical disk 100. In the embodiment, for example, as the optical disk 100, an optical disk which is of a DVD standard or Blu-ray (Registered Trademark) standard: a CPRM-compatible disk of a recordable disk (DVD-R, DVD-RW, DVD-RAM, DVD-R DL) of the DVD standard and a DVD-ROM disk, or a recordable disk (BD-RE, BD-R) and BD-ROM disk of the Blu-ray standard may be used. Moreover, the foregoing description explains a case where the optical disk 100 includes the RE layer 102, however the present invention is not limited to this configuration and may be a disk which just includes the ROM layer 104. In this case, for example, the optical disk 100 is not a prepaid disk as in Embodiment 2-2, and the contents or updating firmware received from the information management server 250 is stored in either the storage section 4 of the recording and reproduction apparatus 1 or an external memory 5, not in the optical disk 100.

Brief configuration of Recording and reproduction apparatus 1
The following description deals with an inner configuration of the recording and reproduction apparatus 1 according to the present embodiment, with reference to Figs. 12 and 16. Fig. 12 is a view illustrating one example of main parts of the recording and reproduction apparatus 1. Moreover, Fig. 16 is a view schematically illustrating one example of a configuration of the recording and reproduction apparatus 1.

As illustrated in Fig. 16; the recording and reproduction apparatus 1 chiefly includes: a spindle 2; a disk loading recognition section 3; a storage section 4; a recording and reproduction circuit group 10; a light pick-up unit 12; a control section 20; and a time measurement section 295. Moreover, the recording and reproduction circuit group 10 chiefly includes: a pick-up drive circuit 13; a laser drive circuit 14; a detection circuit 15; and a spindle circuit 16.

The spindle 2 is provided for rotating the optical disk 100 at a fixed position.

The disk loading recognition section 3 is provided for detecting the loading of the optical disk 100, and various sensors can be given as examples of the disk loading recognition section 3. However, as long as the loading of the optical disk 100 is detectable, any sensor may be used as the disk loading recognition section 3. Moreover, the disk loading recognition section 3 outputs a detected result to the control section 20, as a detection signal.

The storage section 4 stores (1) control programs for each section, (2) an OS program, and (3) an application program, and (4) various data read out when executing these programs. The programs of (1), (2), and (3) are executed by the control section 20. The storage section 4 is a non-volatile storage device such as a ROM (Read Only Memory) flash memory. The storage section 4 stores, for example, an identifier provided from the telecommunications carrier management terminal 350 and a distributing time and distributing time period of the updating firmware, and moreover stores the contents or updating firmware distributed from the information management server 250.

The recording and reproduction circuit group 10 is provided for driving the spindle 2 and light pick-up unit 12, and chiefly includes: a pick-up drive circuit 13; a laser drive circuit 14; a detection circuit 15; and a spindle circuit 16.

The pick-up drive circuit 13 is provided for moving the entire light pick-up unit 12 to a desired recording/reproducing part of the optical disk 100. Furthermore, the pick-up drive circuit 13 also causes an actuator (not illustrated) provided in the light pick-up unit 12 to operate, for controlling focusing and tracking at the recording/reproducing part.

The laser drive circuit 14 causes a laser (not illustrated) provided in the light pick-up unit 12 to operate so that the optical disk 100 is irradiated with light having an intensity suitable for recording, reproduction, and the like.

The detection circuit 15 detects light reflected from the optical disk 100, and chiefly generates, for the focusing and tracking: a servo signal that is fed back to the pick-up drive circuit 13; and a RF signal including information of the optical disk 100. Moreover, in order to have the like emitted from the light pick-up unit 12 maintain a constant intensity, the detection circuit 15 detects light reflected from one part of the light pick-up unit 12, and generates a servo signal that is fed back to the laser drive circuit 14.

The spindle circuit 16, upon reception of an instruction to drive the spindle circuit 16 is received from the control section 20, causes the spindle 2, i.e., optical disk 100, to rotate at an optimum rotational speed. More specifically, the control section 20 instructs the spindle circuit 16 to be driven in a case where, for example, a detection signal is received from the disk loading recognition section 3, or in a case where an instruction entry is received via the operational section 6 (e.g., reproduction instruction).

The light pick-up unit 12 is an optical system that collects to the optical disk 100 light emitted from the laser, diverges light reflected from the optical disk 100 and guides the reflected light to the detection circuit 15.

The time measurement section 295 measures a time or time period by being controlled by the time measurement control section 290.

Moreover, the control section 20 chiefly includes, as illustrated in Fig. 12: a recording and reproduction circuit control section 228 (recording control means); a communication control section 240 (communication control means); an identifier confirmation section 260 (identifier confirmation means); an update control section 280, and a time measurement control section 290. The control section 20 controls the members that construct the recording and reproduction apparatus 1 (whole operation of the recording and reproduction apparatus 1), for instance by executing the control program. The control section 20 carries out various processes by reading out to a primary storage section (not illustrated), as necessary, programs stored in the storage section 4 provided in the recording and reproduction apparatus 1, which primary storage section is made up of for example a RAM (Random Access Memory) or the like, and thereafter executing the programs. The main configuration of the control section 20 is as described below.

The recording and reproduction circuit control section 228 controls the recording and reproduction circuit group 10, and for example, converts an instruction entered by a user via the operational section 6 to an input signal to be inputted to the recording and reproduction circuit group 10. Moreover, the recording and reproduction circuit control section 228 generates video signals and audio signals based on the RF signal received from the recording and reproduction circuit group 10, and inputs these signals to the display apparatus 7. These operations can be carried out via the memory 5, due to issues such as processing speed, capacity, or the like. Moreover, in a case where the Internet connection is used in operating with the recording and reproduction apparatus 1, the operations are carried out via an Internet terminal apparatus (not illustrated).

The recording and reproduction circuit control section 228, by carrying out the foregoing operations, stores, for example, the contents or updating firmware received from the information management server 250 by the communication control section 2400 into the optical disk 100, upon receiving an instruction from the communication control section 240. In this case, the contents or updating firmware received from the information management server 250 received by the communication control section 240 is stored in the optical disk 100 in which the identifier is stored. Hence, it is possible to collectively manage the contents or updating firmware and the identifier, in the optical disk 100.

The communication control section 240, after the identifier confirmation section 260 confirms that an identifier is present, receives the identifier from the identifier confirmation section 260, and transmits the identifier to the activation control section 354 of the telecommunications carrier management terminal 350. As a result, the activation control section 354 activates the connection right upon receiving an instruction from the recording and reproduction apparatus 1, and establishes a connection of the recording and reproduction apparatus 1 with the public connection network.

The communication control section 240 transmits the identifier to the activation control section 354 by having, for example, the instruction entry by the user (e.g., clicking a connection/disconnection switching icon), or a reading out operation of the identifier in a case where the identifier is recorded on the optical disk 100, to serve as a trigger.

For example, in a case where the instruction entry by the user or insertion of the optical disk 100 is to serve as the trigger, the identifier is transmitted to the activation control section 354 just in a case where the user desires the use of the public connection network (a case where the user determines the activation of the connection rights as necessary), to establish the connection with the public connection network.

Moreover, the communication control section 240 requests for a connection with the information management server 250 indicated by the connection destination information. In the case where the connection right is activated, the information management server 250 receives this connection request; as a response to this connection request, the information management server 250 transmits the contents or updating firmware managed by the information management server 250, to the recording and reproduction apparatus 1. That is to say, the recording and reproduction apparatus 1 receives, as a response to the transmitted connection request, the contents or updating firmware from the information management server 250.

Moreover, for example in a case where contents is distributed and payment records of its contents fee and communications charges are managed by the information management server 250, the communication control section 240 transmits information indicating the payment records to the information management server 250.

That is to say, in the case where the connection right is activated, the communication control section 240 requests for a connection to the information management server 250 indicated by the connection destination information, to establish a connection with the information management server 250, and allow transmitting information to and receiving information from the information management server 250.

The communication control section 240 requests for the connection by having, for example, (i) an instruction entry (e.g., clicking an icon indicating contents) by the user, (ii) elapse of the distributing time period, or (iii) in a case where the destination information is recorded on the optical disk 100, reading out operation or discharge operation of the connection destination information, to serve as a trigger.

In the case where the instruction entry by the user, or insertion or discharge of the optical disk 100 is to serve as the trigger for the connection request, the user can determine whether or not to connect to the information management server 250 which is the connection destination of the connection. Therefore, for example, in a case where a plurality of contents or updating firmware are obtainable, the user can select their desired contents or the like by confirming the details of the contents or the like.

On the other hand, in a case where the elapse of the distributing time period serves as the trigger (in a case where the information management server 250 automatically distributes the updating firmware), a connection with the information management server 250 is positively established at a time when the updating firmware is automatically distributed, by having the communication control section 240 request for a connection with the information management server 250 indicated by the connection destination information after elapse of a set time period.

Moreover, the communication control section 240 instructs the recording and reproduction circuit control section 228 to store data received from outside (contents or updating firmware received from the information management server 250) into the optical disk 100.

The communication control section 240 may be connected to the public connection network by wireless communication. One example in this case of the hardware (not illustrated) controlled by the communication control section 240 is an antenna module for receiving and transmitting for example an RF (Radio Frequency) signal. Moreover, in order to have the communication control section 240 control the antenna module, the storage section 4 stores controlling procedures, signal processing procedures, and like procedures of the receiving and transmitting of the RF signals and the like. The wireless communication used may be, other than the communication using radio waves, an optical wireless communication or the like using light.

By having such a configuration, the user can provide the recording and reproduction apparatus 1 at any position, as long as the recording and reproduction apparatus 1 is located within a range connectable with the public connection network. Namely, in comparison to the wired connection, the recording and reproduction apparatus 1 can be more freely determined in regards to positioning. For example, in a case where a 3G (third generation mobile phone) network is used in wireless communication of a mobile phone for connecting to the public connection network, it is possible to locate the recording and reproduction apparatus 1 at any position within a building.

The identifier confirmation section 260 confirms whether or not the identifier is present. More specifically, the identifier confirmation section 260 confirms whether or not the identifier is present, by confirming whether the identifier is stored in the storage section 4 (including a case where the identifier is stored temporarily in the storage section 4 by entry of a user), or whether the identifier is stored in the optical disk 100 in the case where the optical disk 100 is inserted into the recording and reproduction apparatus 1. In the case where the identifier confirmation section 260 confirms that the identifier is stored in the storage section 4 or the optical disk 100, the identifier confirmation section 260 transmits the identifier to the communication control section 240.

In the present embodiment (similarly, in Embodiments 2-2 to 2-4), in a case where the identifier confirmation section 260 confirms the presence of the identifier when the recording and reproduction apparatus 1 is initially set, the identifier is transmitted to the activation control section 354. Not limited to this, the foregoing confirmation and transmission to the telecommunications carrier management terminal 350 can also be carried out in a manufacturing stage of the recording and reproduction apparatus 1. Namely, it is sufficient as long as the recording and reproduction apparatus 1 is in a state connectable to the public connection network provided by the telecommunications carrier management terminal 350 at a point in time when the user starts using the recording and reproduction apparatus 1 or at a point in time when the recording and reproduction apparatus 1 is purchased.

The update control section 280 carries out control when the updating firmware is received from the information management server 250. The update control section 280, after receiving an instruction entry via the operational section 6 to obtain the updating firmware, instructs the communication control section 240 to communicate with the information management server 250 (server managing the updating firmware). Alternatively, the update control section 280 provides this instruction to the communication control section 240 in a case where the update control section 280 receives a notification from the time measurement control section 290.

The time measurement control section 290 controls measurement of time or a time period obtained by the time measurement section 295. The time measurement control section 290, in a case where for example a distributing time of the updating firmware stored in the storage section 4 has come, notifies the update control section 280 that the time has come, or alternatively, in a case where a distributing time period stored in the storage section 4 has elapsed, notifies the update control section 280 that the time period has elapsed. The distributing time period denotes a period of time during which the updating firmware is distributed. The distributing time and the distributing time period may be set for example at the time of manufacture of the recording and reproduction apparatus 1, or the storage section 4 may store a distributing time and distributing time period notified from the information management server 250.

The update control section 280 and time measurement control section 290 of the control section 20, the time measurement section 295, and the distributing time and distributing time period stored in the storage section 4 are used when the updating firmware is distributed from the information management server 250. Hence, the foregoing configuration and information are not essential in a case where the recording and reproduction apparatus 1 is configured in such a manner that no updating firmware is downloaded from the information management server 250 (e.g., a configuration which downloads the contents).

The foregoing describes the recording and reproduction apparatus 1. Here, the recording and reproduction apparatus 1 is usually provided having the memory 5, operational section 6, display apparatus 7, Internet terminal apparatus (not illustrated), and like components. In this case, the control section 20 generally bears control of operations not just within the recording and reproduction apparatus 1 but also with external apparatuses such as the memory 5, operational section 6, display apparatus 7 and like apparatuses. The following description explains these components. The memory 5, operational section 6, display apparatus 7 and like apparatuses may also be accomplished by being incorporated into the recording and reproduction apparatus 1.

The memory 5 functions as an external (detachable) auxiliary storage device such as a USB (Universal Serial Bus) memory or a HDD, and is capable of partially storing various programs and data stored in the storage section 4. The memory 5 is not limited to this, and can be made up of for example a RAM or the like, and may temporarily store information such as information read out from the ROM layer, RE layer, R layer, or the like of the optical disk 100 and information obtained from outside.

The operational section 6 is provided to allow a user to enter instruction signals for operating the recording and reproduction apparatus 1. For instance, the operational section 6 is made up of a remote controller for remotely controlling the recording and reproduction apparatus 1, operational buttons provided to the recording and reproduction apparatus 1 itself, or a mouse, keyboard or like device connected to the recording and reproduction apparatus 1. The instruction signals entered by the user via the operational section 6 are transmitted to each of the functional blocks through an input/output control section not illustrated. This makes it possible for the user to operate the recording and reproduction apparatus 1.

The display apparatus 7 outputs various information (data), and is made up of, for example, a display apparatus such as an LCD (liquid crystal display), PDP (plasma display panel), or CRT (cathode-ray tube) display.

In a case where the recording and reproduction apparatus 1 is connectable to the Internet, the recording and reproduction apparatus 1 can be provided having an Internet terminal apparatus that is controlled by the control section 20.

In a case where the information management server 250 manages the reproduction permission information indicative of permission for reproducing the contents so that the reproduction permission information is associated with the contents, the communication control section 240 may receive the reproduction permission information together with the contents and permit the reproduction of the contents in accordance with the reproduction permission information. This limits the target for reproduction to just the contents that have been permitted by the communication control section 240.

Furthermore, in the case where the information management server 250 manages the deletion permission information indicative of permission for deleting contents so that the deletion permission information is associated with the contents, the communication control section 240 may receive the deletion permission information together with the contents and permit the deletion of the contents in accordance with the deletion permission information. This allows deletion of the contents downloaded from the information management server 250.

The reproduction permission information is information indicative of whether or not reproduction of the contents downloaded is to be permitted. Moreover, the deletion permission information is information indicative of whether or not deletion of the contents downloaded is to be permitted.

In the embodiment, the reproduction permission information can be information related to a reproducible period of the contents that is downloaded by a user. In this case, the reproduction permission information serves as information that permits reproduction of the contents while a contents reproducing time is within a reproducible period, however if the contents reproducing time is outside the reproducible period, the reproduction permission information serves as information that does not permit the reproduction of the contents.

Alternatively, the reproduction permission information can be information related to a reproducible number of times of contents downloaded by the user. In this case, the reproduction permission information serves as information permitting reproduction of contents if a reproduced number of times of the contents is within the reproducible number of times, however if the reproduced number of times exceeds the reproducible number of times, the reproduction permission information serves as information not permitting the reproduction of the contents.

As such, the reproduction permission information is information that can be defined by several definitions, as information indicative of whether or not reproduction of contents downloaded by the user is permitted.

Similarly, the deletion permission information can be information related to a reproducible period of the contents downloaded by a user. In this case, the deletion permission information serves as information not permitting deletion of the contents if the contents reproducing time is within the reproducible period, however if the contents reproducing time is outside of the reproducible period, the deletion permission information serves as information permitting the deletion of the contents.

Alternatively, the deletion permission information can be information related to a reproducible number of times of the contents downloaded by a user. In this case, the deletion permission information serves as information not permitting the deletion of the contents if a reproduced number of times is within the reproducible number of times, however if the reproduced number of times exceeds the reproducible number of times, the deletion permission information serves as information permitting the deletion of the contents.

As such, the deletion permission information can be defined by several definitions as information indicative of whether or not deletion of contents downloaded by a user is permitted.

Processes carried out in Communication system 400 (No. 1)
Next described, with reference to Fig. 17, is a set of processes carried out in the communication system 400, particularly processes carried out in the recording and reproduction apparatus 1 in a case where the connection right has been activated in advance. Fig. 17 is a flowchart illustrating one example of the set of processes carried out in the communication system 400 in the case where the connection right is activated in advance.

Described below is a set of processes carried out in the communication system 400 in a case where the information management server 250 manages the contents and the recording and reproduction apparatus 1 downloads contents from the information management server 250 (contents fee and communications charges are charged), which information management server 250 is its connection destination. In the present embodiment, a billing destination of the contents fee and communications charges is determined as a manager (contents distributor) of the information management server 250 which is its connection destination.

Moreover, in this process, the ROM layer 104 of the optical disk 100 records at least connection destination information and a connection program each of which is provided from the telecommunications carrier management terminal 350, and the RE layer 102 of the optical disk 100 records at least the connection record and payment record. Moreover, the storage section 4 stores the identifier provided from the telecommunications carrier management terminal 350.

First, the identifier confirmation section 260 of the recording and reproduction apparatus 1 confirms whether the identifier is stored in the storage section 4. When the identifier is confirmed as being stored in the storage section 4, the identifier is read out from the storage section 4 and is transmitted to the communication control section 240. The communication control section 240 transmits the received identifier to the telecommunications carrier management terminal 350 (S1001).

In the telecommunications carrier management terminal 350, after the identifier is received via the terminal communication section 351, the activation control section 354 of the terminal control section 353 compares the received identifier with an identifier stored in the terminal storage section 352. If it is confirmed that the received identifier and the stored identifier match each other, the connection right of the recording and reproduction apparatus 1 is activated (S1002). Meanwhile, after the received identifier is verified, the connection destination determination section 355 determines the information management server 250 which is to serve as the connection destination, and the communications charges collecting section 356 determines whether or not the communications charges is charged and if so, determines its billing destination.

In the present embodiment, the processes of S1001 and S1002 are carried out at the time of initially setting the recording and reproduction apparatus 1, at the latest. This makes it possible in the present embodiment to always have the connection right of the recording and reproduction apparatus 1 in an active state.

If the optical disk 100 is inserted into the recording and reproduction apparatus 1 in such a state (S1003), the recording and reproduction circuit control section 228, by controlling the recording and reproduction circuit group 10, reads out the connection destination information and the connection program and transmits the destination information and the connection program to the communication control section 240. The communication control section 240 runs the connection program, and requests for a connection with the information management server 250 indicated by the connection destination information, over the public connection network (S1004). At this time, the communication control section 240 also transmits data to specify which contents the recording and reproduction apparatus 1 is to receive. This data, for example, is recorded on the optical disk 100 or the recording and reproduction apparatus 1. If a plurality of contents is specifiable as contents downloadable, the contents to be downloaded by the recording and reproduction apparatus 1 can be specified by having the control section 20 cause the display apparatus 7 to display a list of those contents, and allow a user to select a desired content via the operational section 6, so that the selected content serves as the specified contents.

Upon receiving the request for connection, the information management server 250 serving as the connection destination of the recording and reproduction apparatus 1 transmits the contents requested by the recording and reproduction apparatus 1 as a response to the recording and reproduction apparatus 1. Accordingly, the communication control section 240 of the recording and reproduction apparatus 1 receives their requested contents from the information management server 250 (S1005).

After the communication control section 240 receives the contents from the information management server 250, the communication control section 240 instructs the recording and reproduction circuit control section 228 to record the contents onto the optical disk 100. The recording and reproduction circuit control section 228, after receiving this instruction, records the contents onto the RE layer 102 of the optical disk 100 by controlling the recording and reproduction circuit group 10 (S1006). This allows the user to view the downloaded contents at any time. In a case where no recording region such as the RE layer 102 of the optical disk 100 for example does not exist, the communication control section 240 may store the contents in the storage section 4, memory 5, or a cache or HDD not illustrated.

The communication control section 240, after completing recording the contents onto the optical disk 100 by the recording and reproduction circuit control section 228, notifies the information management server 250 that the recording is completed. The information management server 250 calculates fees related to the contents distribution (contents fee and communications charges), and transmits the charges to the recording and reproduction apparatus 1.

With the recording and reproduction apparatus 1, in order to cause a user to pay the contents fee and communications charges calculated by the information management server 250, the control section 20 causes the display apparatus 7 to display (i) the charges and (ii) methods for paying the charges. After the user enters their personal information and selects how to pay the charges via the operational section 6, the charges are paid by the method thus selected for paying the charges (e.g., credit card, bank transfer) to the information management server 250 (contents distributor managing this server) (S1007).

Moreover, the communication control section 240 transmits the information related to the communications charges entered by the user (e.g., the personal information and the method for paying the charges) to the information management server 250. This makes it possible for the contents distributor managing the information management server 250 to collect the contents fee and communications charges that are charged when the user obtains the contents. Note that although the user provides their personal information to the contents distributor, their personal information is not provided to the telecommunications carrier management terminal 350.

On the other hand, the communication control section 240, after receiving the contents from the information management server 250 in S1005, notifies the telecommunications carrier management terminal 350 that the communication control section 240 has received the contents. This notification can be carried out by the communication control section 240 or by the information management server 250.

In the telecommunications carrier management terminal 350, after receiving such a notification from the communication control section 240 or the information management server 250, the communications charges collecting section 356 refers to the communications charges information associated with the identifier to collect the contents fee and communications charges from the specified billing destination of the communications charges (in the present embodiment, being the contents distributor managing the information management server 250 which is the connection destination) (S1008).

After the charges are collected, the telecommunications carrier management terminal 350 notifies the information management server 250 that the charges have been collected. The information management server 250, after receiving this notification, updates the connection record and payment record, and transmits the updated records to the communication control section 240 of the recording and reproduction apparatus 1. The communication control section 240 instructs the recording and reproduction circuit control section 2288 to store the received connection record and the payment record in the optical disk 100. The recording and reproduction circuit control section 2288, after receiving this instruction, records the updated connection record and payment record onto the RE layer 102 of the optical disk 100.

In a case where the information management server 250 does not manage the updated connection record and payment record by use of the optical disk 100, these information can be managed by the information management server 250 itself or the recording and reproduction apparatus 1. Moreover, the order in which S1006 to S1008 are processed is not limited to the foregoing order, and as long as the process of S1008 is carried out after the process of S1007. the processes can be carried out in any order.

As described above, the example of the communication system 400 of Embodiment 2-1 describes a set of processes carried out by the recording and reproduction apparatus 1 and the telecommunications carrier management terminal 350, in a case where the connection right of the recording and reproduction apparatus 1 is always active, the recording and reproduction apparatus 1 downloads contents from the information management server 250, and its contents fee and communications charges are paid by a method selected by the user.

More specifically, the telecommunications carrier management terminal 350 allots to the recording and reproduction apparatus 1 an identifier for activating the connection right of the recording and reproduction apparatus 1, and manages (i) the connection destination information indicative of the connection destination of the information management server 250 and (ii) communications charges information indicative of a billing destination of the communication charges other than the user of the recording and reproduction apparatus 1, so that (i) and (ii) are associated with the identifier. Moreover, the telecommunications carrier management terminal 350 includes: an activation control section 354 activating the connection right by use of the identifier; a connection destination determination section 355 determining an information management server 250 for which connection with the recording and reproduction apparatus 1 is permitted; and a communications charges collecting section 356 collecting communications charges from a billing destination indicated by the communications charges information. On the other hand, the recording and reproduction apparatus 1 (its control method) includes an identifier confirmation section 260 (identifier confirming step) confirming whether or not an identifier is present inside an optical disk 100 or the recording and reproduction apparatus 1; and a communication control section 240 (communication control step) transmitting the identifier to the activation control section 354, in a case where presence of the identifier is confirmed.

This allows the recording and reproduction apparatus 1 to be in a state capable of communicating with a specific information management server 250 by use of the public connection network, without the user having to obtain the connection right and to provide their personal information to the telecommunications carrier. Moreover, since there is no need for the user to provide their personal information to the telecommunications carrier, it is possible to prevent the occurrence of any leakage of personal information via the telecommunications carrier.

Usually, in a case of a mobile phone, the telecommunications carrier manages personal information of its user (signee) and permits use of that mobile phone by the user by mounting an SIM card into the mobile phone. Note that the SIM card is attached with its respective mobile telephone number. This allows the telecommunications carrier to provide an appropriate communications business, where the telecommunications carrier is capable of billing the user the communications charges and interrupting the offering of the service to a user that has not paid the communications charges.

On the other hand, the communication system 400 of the present embodiment allows the telecommunications carrier to bill the communications charges to a billing destination different from the user of the recording and reproduction apparatus 1, by allotting the identifier to which the communications charges information is associated to the recording and reproduction apparatus 1. That is to say, contrary to the case where the SIM card is inserted into the mobile phone, in the case where an optical disk is inserted into the recording and reproduction apparatus 1, the user of the recording and reproduction apparatus 1 is not identified by the information on the optical disk; consequently, no billing of the communications charges is carried out to the user. Hence, the communication system 400 is capable of causing the telecommunications carrier to provide appropriate communications business as similar as the conventional communication system, even without the use of means for managing personal information, such as the SIM card.

Moreover, in a system in which prepaid-type mobile phones are distributed, the telecommunications carrier allows the user to use the public connection network by having the user pay the communications charges in advance. In this case, the prepaid-type mobile phones can be freely connected to a connection destination that can utilize the public connection network.

On the other hand, in the communication system 400 of the present embodiment, the recording and reproduction apparatus 1 is permitted in a restricted manner to connect to a specific information management server 250 even while the connection right is activated by the telecommunications carrier, by the telecommunications carrier allotting an identifier to the recording and reproduction apparatus 1, which identifier is associated with the connection destination information. Hence, in the communication system 400, contrary to the case where the prepaid-type mobile phone is purchased, it is possible to restrict the connection from being freely established even in a case where the user of the recording and reproduction apparatus 1 purchases a prepaid disk. That is to say, in the communication system 400, it is possible to manage the connection of the recording and reproduction apparatus 1 with the information management server 250 by use of the identifier provided by the telecommunications carrier. Hence, it is possible to carry out communication in a restricted manner by the recording and reproduction apparatus 1, so as to communicate with just a specific information management server 250.

Embodiment 2-2
Described below is one embodiment of the present invention, with reference to Fig. 12 and Fig. 18. The present embodiment describes processes carried out in the communication system 400 in a case where the connection right is activated in advance and a prepaid disk is used as the optical disk 100. That is to say, as described in Embodiment 2-1, the ROM layer 104 of the optical disk 100 stores, other than the connection program, a list (catalog) of contents available from the information management server 250 or a part (sample video image or demonstration) of contents, a balance for which the contents can be used, and like information. Moreover, the RE layer 102 of the optical disk 100 records, other than the connection record and payment record, the use record (download record) of contents, the balance of prepaid charges, the total amount of money spent, and the like.

In a case where the optical disk 100 is the prepaid disk, the telecommunications carrier management terminal 350 sets the price of the optical disk 100 so that the price includes the contents fee and the communications charges. Hence, the telecommunications carrier management terminal 350 sets the billing destination included in the communications charges information associated with the identifier provided to the recording and reproduction apparatus 1 as a dealer of the optical disk 100.

Similarly with Embodiment 2-1, the connection right of the recording and reproduction apparatus 1 is always activated, and the recording and reproduction apparatus 1 is always connectable to the information management server 250 indicated by the connection destination information. The following description deals with the processes carried out in the communication system 400 in a case where the information management server 250 manages the contents similarly with Embodiment 2-1 and the recording and reproduction apparatus 1 downloads the contents from the information management server 250, which information management server 250 is its connection destination (no that contents fee and communications charges are charged).

Processes carried out in Communication system 400 (No. 2)
Described below with reference to Fig. 18 is another set of processes carried out in the communication system 400, particularly, processes carried out by the recording and reproduction apparatus 1 in a case where the connection right is made activated in advance and the inserted optical disk 100 is a prepaid disk. Fig. 18 is a flowchart illustrating an example of another set of processes carried out in the communication system 400 in a case where the connection right is made activated in advance.

In S1011 and S1012, processes similar to S1001 and S1002 are carried out at a time when the recording and reproduction apparatus 1 is initially set. Hence, the connection right of the recording and reproduction apparatus 1 is always made active also in the present embodiment.

After the optical disk 100 is inserted into the recording and reproduction apparatus 1 at this state (S1013), the recording and reproduction circuit control section 2288 reads out from the RE layer 102 the balance of prepaid charges and the list (catalog) of contents available from the information management server 250 serving as the connection destination of the recording and reproduction apparatus 1, so that the control section 20 can cause the display apparatus 7 to display these information (S1014). At this time, the control section 20 may read out the use record (download record) of the contents, the total amount of money spent, the connection record of the recording and reproduction apparatus 1, the connection destination information (i.e., URL of the information management server 250) and like information together with the balance of prepaid charges and the list (catalog) of contents, and cause these information to be displayed as well on the display apparatus 7.

Next, the user confirms the balance and the list (catalog) of contents displayed on the display apparatus 7, and then selects the contents that the user wants to view (S1015). After the contents is selected via the operational section 6, the recording and reproduction circuit control section 2288 reads out a connection program from the ROM layer 104, and transmits the connection program to the communication control section 240. The communication control section 240 runs this connection program, and requests for a connection over the public connection network to an information management server 250 indicated by the connection destination information (S1016).

Note that the communication control section 240 can read out the medium-specific information unique to each individual optical disk 100 from the BCA region 104a of the ROM layer 104 and transmit the medium-specific information to the information management server 250; thereafter the information management server 250 can compare the medium-specific information with medium-specific information registered in the information management server 250, to carry out verification of the optical disk 100 inserted into the recording and reproduction apparatus 1. In this case, upon completion of the verification and after the information management server 250 confirms that contents is downloadable by use of the optical disk 100 inserted into the recording and reproduction apparatus 1, the contents selected by the user is transmitted to the recording and reproduction apparatus 1.

Thereafter, similarly with S1005, the communication control section 240 receives the contents from the information management server 250 (S1017), and similarly with S1006, the recording and reproduction circuit control section 2288 subsequently records the contents onto the RE layer 102 of the optical disk 100 (S1018).

After the recording and reproduction circuit control section 2288 completes recording the contents onto the optical disk 100, the recording and reproduction circuit control section 2288 notifies the information management server 250 that the recording has completed. The information management server 250 then calculates fees related to the contents distribution (contents fee and communications charges), and updates disk information (e.g., balance, use record) managed by the information management server 250 itself to the latest information (S1019). Moreover, the information management server 250 transmits the updated disk information to the recording and reproduction apparatus 1.

In the recording and reproduction apparatus 1, after the communication control section 240 receives the updated disk information from the information management server 250, the communication control section 240 instructs the recording and reproduction circuit control section 2288 to store this disk information into the optical disk 100. The recording and reproduction circuit control section 2288, after receiving this instruction, records the disk information onto the RE layer 102 of the optical disk 100. If supplementary information such as the reproducible period and reproducible number of times of each of the contents is provided, the supplementary information may also be recorded on the RE layer 102 of the optical disk 100.

The latest optical disk information is recorded on the information management server 250 and optical disk 100, thereby completing the process.

The foregoing description described a case where the list of contents is stored in the optical disk 100. The present invention is not limited to this example, and the list of contents may be managed by the information management server 250. In this case, the information management server 250 manages the list of contents in such a manner that the list of contents is associated with the medium-specific information of the optical disk 100. Moreover, the recording and reproduction apparatus 1 is capable of obtaining the list of contents from the information management server 250 by carrying out the process of S1016 after the process of S1013; the processes of S1014 and S1015 are to be processed after these processes. Furthermore, the order in which the processes S1018 and S1019 are carried out is not limited to the above, and the process of S 1018 may be carried out after the process of S1019.

As described above, the example of the communication system 400 of Embodiment 2-2 describes a set of processes carried out by the recording and reproduction apparatus 1 and telecommunications carrier management terminal 350, in a case where the user purchases a prepaid disk and the recording and reproduction apparatus 1 downloads the contents from the information management server 250 while the connection right of the recording and reproduction apparatus 1 is always active. In this case also, the recording and reproduction apparatus 1 is allowed to be in a state capable of communicating with a specific information management server 250 by use of the public connection network, without the user having to obtain the connection right and provide their personal information to the telecommunications carrier. Moreover, since there is no need for the user to provide their personal information to the telecommunications carrier, it is possible to prevent the occurrence of any leakage of personal information via the telecommunications carrier.

Embodiment 2-3
One embodiment of the present invention is described below with reference to Fig. 12 and Fig. 19. The present embodiment describes a set of processes carried out in the communication system 400 in a case where the connection right is activated in advance and a manufacturer of the recording and reproduction apparatus 1 updates a firmware incorporated into the recording and reproduction apparatus 1.

In the present embodiment, the information management server 250 manages updating firmware used for updating firmware, and the information management server 250 is managed by the manufacturer of the recording and reproduction apparatus 1. This updating firmware is distributed free of charge (communications charges are separately required). Moreover, the storage section 4 of the recording and reproduction apparatus 1 stores in advance, as connection destination information, a URL of the information management server 250 that manages the updating firmware. The destination information is provided by the telecommunications carrier management terminal 350 or the information management server 250 (manufacturer of recording and reproduction apparatus 1). Moreover, the storage section 4 also stores a connection program in advance.

Note that, as similar to Embodiment 2-1, the connection right of the recording and reproduction apparatus 1 is always active, and the recording and reproduction apparatus 1 can connect to the information management server 250 indicated by the connection destination information, at any time.

Processes carried out in Communication system 400 (No. 3)
With reference to Fig. 19, the following description deals with yet another set of processes in the communication system 400, particularly a set of processes carried out in the recording and reproduction apparatus 1 in a case where the updating firmware is downloaded while the connection right is activated in advance. Fig. 19 is a flowchart illustrating one example of yet another set of processes carried out in the communication system 400, in a case where the connection rights is activated in advance.

In S1021 and S1022, processes similar to S1001 and S1002 are carried out respectively, when the recording and reproduction apparatus 1 is initially set. Hence, the connection right of the recording and reproduction apparatus 1 is always activated in the present embodiment.

In this state, the update control section 280 causes the display apparatus 7 to display a menu screen based on an instruction entered by the user. The user selects "firmware update" from among the menu items, to cause updating of the firmware (S1023). The update control section 280, after receiving an instruction entry indicating this selection via the operational section 6, instructs the communication control section 240 to obtain the updating firmware from the information management server 250.

The communication control section 240, after receiving this instruction, runs the connection program stored in the storage section 4, and requests for a connection over the public connection network to an information management server 250 indicated by the connection destination information stored in the storage section 4 (S1024).

As a response to the connection request, the information management server 250 serving as the connection destination of the recording and reproduction apparatus 1 transmits to the recording and reproduction apparatus 1 an updating firmware requested by the recording and reproduction apparatus 1, after receiving the connection request. This allows the communication control section 240 of the recording and reproduction apparatus 1 to receive the updating firmware requested by the communication control section 240 itself from the information management server 250 (S1025). The communication control section 240, after receiving the updating firmware, notifies the update control section 280 that the updating firmware has been received.

The update control section 280, after receiving this notification, confirms whether or not the received updating firmware is of a version newer than the version of the firmware stored in the storage section 4. This confirmation is made, for example, by referring to properties of the firmware.

In the case where the update control section 280 confirms that the updating firmware is of a newer version, the update control section 280 instructs the communication control section 240 to download the updating firmware. The communication control section 240, upon reception of this instruction, downloads the updating firmware from the information management server 250. On the other hand, if the update control section 280 confirms that the version of the updating firmware is older, no downloading of the updating firmware is carried out, and the process illustrated in Fig. 19 is terminated.

The communication control section 240 stores the obtained updating firmware in the storage section 4; once the downloading is completed, the communication control section 240 notifies the update control section 280 that the downloading is completed. The updating firmware can be stored in an information storage medium such as the optical disk 100 that includes a recordable region in which information is recordable, or a cache or HDD (not illustrated).

The update control section 280, after receiving the notification, updates the firmware by use of the obtained updating firmware (S1026). After the update is completed, the update control section 280 transmits to the communication control section 240 that the update is completed.

On the other hand, the communication control section 240, after downloading the updating firmware from the information management server 250 in S1025. notifies the telecommunications carrier management terminal 350 that the downloading is completed. This notification can be carried out by the information management server 250 instead of the communication control section 240.

After the telecommunications carrier management terminal 350 receives this notification from the communication control section 240 or information management server 250, the communications charges collecting section 356 collects the communications charges from the billing destination of communications charges (in the present embodiment, being a manufacturer of the recording and reproduction apparatus 1 managing the information management server 250 which serves as the connection destination) specified by referring to the communications charges information being associated with the identifier (S1027). The order in which S1026 and S1027 are processed is not limited to the foregoing order, and the process of S1026 may be carried out after carrying out the process of S1027.

As described above, the example of the communication system 400 of Embodiment 2-3 describes a set of processes carried out by the recording and reproduction apparatus 1 and telecommunications carrier management terminal 350, in a case where the recording and reproduction apparatus 1 downloads updating firmware from the information management server 250 at a timing preferred by the user while the connection right of the recording and reproduction apparatus 1 is always active. In this case also, the recording and reproduction apparatus 1 is allowed to be in a state capable of communicating with a specific information management server 250 by use of the public connection network, without the user having to obtain the connection right and provide their personal information to the telecommunications carrier. Moreover, since there is no need for the user to provide their personal information to the telecommunications carrier, it is possible to prevent the occurrence of any leakage of personal information via the telecommunications carrier.

Embodiment 2-4
One embodiment of the present invention is described below with reference to Fig. 12 and Fig. 20. The present embodiment describes a set of processes carried out in the communication system 400 in a case where the connection right is activated in advance and a manufacturer of the recording and reproduction apparatus 1 updates a firmware incorporated in the recording and reproduction apparatus 1 at a time programmed (set) in advance in the recording and reproduction apparatus 1.

In the present embodiment, the storage section 4 of the recording and reproduction apparatus 1 stores, for example, a distributing time or distributing time period of the updating firmware. Moreover, the present embodiment differs from Embodiment 2-3 in that reception of the updating firmware is started not in accordance with an instruction entered by the user but automatically when a distributing time comes (a distributing time period elapses). Processes other than this are the same as Embodiment 2-3.

Processes carried out in Communication system 400 (No. 4)
With reference to Fig. 20, the following description deals with yet another set of processes carried out in the communication system 400, particularly, a set of processes carried out in the recording and reproduction apparatus 1 in a case where the connection right is activated in advance and the updating firmware is downloaded at a preset time. Fig. 20 is a flowchart illustrating one example of yet another set of processes carried out in the communication system 400, in a case where the connection right is activated in advance.

In S1031 and S1032, processes similar to S1001 and S1002 are carried out respectively, at a time when the recording and reproduction apparatus 1 is initially set. Hence, the connection right of the recording and reproduction apparatus 1 is always activated also in the present embodiment.

The time measurement control section 290 determines whether a time measured by the time measurement section 295 is a distributing time stored in the storage section 4 (S1033). The time measurement control section 290, in a case where the current time is determined as the distributing time (YES in S1033), notifies the communication control section 240 that the current time is the distributing time. On the other hand, if the current time is not the distributing time (NO in S1033), no particular process is carried out until the distributing time comes. The time measurement control section 290 may be configured to determine whether or not the distributing time period has elapsed, by managing the distributing time period stored in the storage section 4.

If YES in S1033, the communication control section 240 instructs to obtain the updating firmware from the information management server 250. The subsequent processes of S1034 to S1037 are the same as the processes of S1024 to S1027 illustrated in Fig. 19, respectively; hence, the descriptions are omitted here.

As described above, the example of the communication system 400 of Embodiment 2-4 describes a set of processes carried out by the recording and reproduction apparatus 1 and telecommunications carrier management terminal 350, in a case where the recording and reproduction apparatus 1 downloads the updating firmware from the information management server 250 per set distributing time or distributing time period while the connection right of the recording and reproduction apparatus 1 is always active. In this case also, the recording and reproduction apparatus 1 is allowed to be in a state capable of communicating with a specific information management server 250 by use of the public connection network, without the user having to obtain the connection right and provide their personal information to the telecommunications carrier. Moreover, since there is no need for the user to provide their personal information to the telecommunications carrier, it is possible to prevent the occurrence of any leakage of personal information via the telecommunications carrier.

Embodiment 2-5
One embodiment of the present invention is described below with reference to Fig. 12 and Fig. 21. In the present embodiment (similarly with Embodiment 2-6 to 2-8), the recording and reproduction apparatus 1 includes a control section 20 (communication apparatus) connectable to the public connection network in which the connection right is temporarily activated. Namely, the control section 20 requests the telecommunications carrier management terminal 350 to activate the connection right by use of an identifier which is managed by the telecommunications carrier management terminal 350, and is, for instance, (i) stored in the recording and reproduction apparatus 1 in advance, (ii) stored in the optical disk 100 to be used by the recording and reproduction apparatus 1, or (iii) labeled on a chassis of the recording and reproduction apparatus 1 or on an attachment of the recording and reproduction apparatus 1. Moreover, the control section 20 requests to inactivate the connection right, by having (i) an instruction entered by the user, (ii) ejection of the optical disk 100, or (iii) elapse of a preset distributing time or a distributing time period, to serve as a trigger. This temporarily activates the connection right by the telecommunications carrier management terminal 350.

Moreover, while the telecommunications carrier management terminal 350 temporarily activates the connection right, the recording and reproduction apparatus 1 requests for connection with the information management server 250 indicated by the connection destination information associated with the identifier in accordance with an instruction entered by a user for example, based on connection destination information stored in the optical disk 100 to be inserted into the recording and reproduction apparatus 1 or based on a preset distributing time period. This makes it possible to establish a connection with the information management server over the public connection network while the public connection network is temporarily activated, to allow reception and transmission of information.

Moreover, the present embodiment (similarly with Embodiments 2-6 to 2-8) describes a configuration of a case where the connection right of the recording and reproduction apparatus 1 is: inactivated when the recording and reproduction apparatus 1 is initially set; activated while the recording and reproduction apparatus 1 is to download contents or updating firmware; and is inactivated again after the downloading is completed, for example.

Brief configuration of Recording and reproduction apparatus 1
With reference to Fig. 12, the following description deals with an inner configuration of the recording and reproduction apparatus 1 according to the present embodiment. Configurations other than the communication control section 240 are identical to Embodiment 2-1; hence, their description are omitted here.

The communication control section 240 requests the activation control section 354 to inactivate the connection right, after the connection right has been activated by the activation control section 354 of the telecommunications carrier management terminal 350. This makes it possible for the activation control section 354 to inactivate the activated connection right in accordance with an instruction from the recording and reproduction apparatus 1, and disconnect the connection between the recording and reproduction apparatus 1 and the public connection network. Moreover, since the activated connection right can be inactivated, it is possible to prevent a situation where information stored in the recording and reproduction apparatus 1 or optical disk 100 inserted into the recording and reproduction apparatus 1 leaks over the public connection network, in a state where there is no need to keep the connection right activated (e.g., a state where no downloading of contents or updating firmware is carried out).

The communication control section 240 requests the activation control section 354 to inactivate the connection right by having, for example, (i) an instruction entered by the user (e.g., clicking of connection/disconnection switching icon), (ii) ejection of the optical disk 100, (iii) completion of downloading contents or updating firmware, or (iv) elapse of a distributing time period, serve as a trigger.

In the case where the instruction entered by the user or the ejection of the optical disk 100 is used as the trigger, and the user does not desire to use the public connection network (the user determines that there is no need to keep the connection right activated), disconnection from the public connection network is possible by requesting the inactivation. Moreover, it is possible to disconnect the connection from the public connection network even in the case where the user determines that no downloading of the contents or updating firmware is required after the downloading of contents or updating firmware has started.

In a case where the completion of downloading the contents or updating firmware serves as the trigger, the inactivation request is carried out to the activation control section 354 automatically after the downloading has completed. Hence, allows the establishment of the connection with the public connection network just when downloading the contents or updating firmware, without the user having to carry out an operation to request for the inactivation.

In a case where the elapse of the distributing time period serves as the trigger (in a case where the information management server 250 automatically distributes the updating firmware), the inactivation request is automatically carried out to the activation control section 354 after elapse of a set time. Hence, it is possible to establish the connection with the public connection network just during a time period necessary for automatic distribution, without having the user carrying out any operations for requesting the inactivation.

Moreover, after the activation control section 354 inactivates the connection right, the communication control section 240 transmits the identifier stored in the storage section 4 or optical disk 100 for example to the activation control section 354. Hence, the activation control section 354 can again activate the connection right in accordance with the instruction by the recording and reproduction apparatus 1 even in a case where the connection right is inactivated, and again establish connection between the recording and reproduction apparatus 1 and the public connection network. Namely, the recording and reproduction apparatus 1, even if the connection right is inactivated, can again have the connection right be activated. This as a result makes it possible to use the public connection network even after the connection right is inactivated. The trigger for activating the connection right is as described in Embodiment 2-1.

That is to say, the communication control section 240 instructs the activation control section 354 to switch over the activation/inactivation of the connection right.

Processes carried out in Communication system 400 (No. 5)
Next described with reference to Fig. 21 is a set of processes carried out in the communication system 400, particularly processes carried out in the recording and reproduction apparatus 1 in a case where the connection right can be switched over between the active state and the inactive state. Fig. 21 is a flowchart illustrating one example of a set of processes carried out in the communication system 400 in a case where the connection right can be switched over between the active state and the inactive state. Note that before this set of processes is carried out, the connection right is made inactive.

This embodiment, as similar to Embodiment 2-1, provides a description of a set of processes in the communication system 400 in which the information management server 250 manages the contents and the recording and reproduction apparatus 1 downloads contents from the information management server 250 to which the recording and reproduction apparatus 1 is connected (the contents fee and communications charges are charged). In the present embodiment, the billing destination of the contents fee and communications charges is preset as being the manager (contents distributor) of the information management server 250 serving as the destination to which the recording and reproduction apparatus 1 is connected.

Moreover, in this process, the ROM layer 104 of the optical disk 100 stores at least the identifier, connection destination information, and connection program, each of which are provided from the telecommunications carrier management terminal 350, and the RE layer 102 of the optical disk 100 stores the connection record and the payment record.

First, after the optical disk 100 is inserted into the recording and reproduction apparatus 1 (S1041), the identifier confirmation section 260 confirms whether or not the optical disk 100 stores an identifier. Hence, the identifier confirmation section 260 instructs the recording and reproduction circuit control section 228 to read out an identifier from the optical disk 100. The recording and reproduction circuit control section 228 reads out the identifier from the optical disk 100 by controlling the recording and reproduction circuit group 10.

In the case where the identifier is stored in the optical disk 100, the recording and reproduction circuit control section 228 transmits the identifier thus read out to the communication control section 240. The communication control section 240, after receiving the identifier thus read out, transmits the identifier to the telecommunications carrier management terminal 350 (S1042). At this time, the recording and reproduction circuit control section 228 reads out a connection program together with the identifier from the optical disk 100, and transmits this to the communication control section 240.

In the case where no identifier could be read out by the recording and reproduction circuit control section, the control section 20 for example causes the display apparatus 7 to display that no identifier has been read out, and requests the user to insert an optical disk 100 in which an identifier is stored.

In the telecommunications carrier management terminal 350, similarly with S1002, the activation control section 354 activates the connection right of the recording and reproduction apparatus 1 by receiving the identifier from the communication control section 240 (S1043). As such, by carrying out the processes of S1041 to S1043, the connection right is activated by having the insertion of the optical disk 100 serve as a trigger. Thereafter, the communication control section 240, similarly with S1004, runs the connection program thus read out, to request over the public connection network for connecting to the information management server 250 indicated by the connection destination information (S1044). Subsequent processes of S1045 and S1046 are the same as the processes of S1005 and S1006, respectively; hence, explanation thereof is omitted here.

After the contents is recorded on the optical disk 100 by the recording and reproduction circuit control section 228 in S1046, the communication control section 240 transmits a request to inactivate the connection right to the telecommunications carrier management terminal 350. In the telecommunications carrier management terminal 350, after the inactivation request is received, the activation control section 354 inactivates the activated connection right of the recording and reproduction apparatus 1 (S1047). Namely, the recording and reproduction apparatus 1 can inactivate the connection right by having the completion of downloading contents serve as the trigger.

Moreover, after the contents is recorded to the optical disk 100 by the recording and reproduction circuit control section 228, the communication control section 240 notifies the information management server 250 that the contents have been recorded. The information management server 250 calculates fees related to the contents distribution (contents fee and communications charges), and transmits the fees to the recording and reproduction apparatus 1.

Subsequent processes S1048 and S1049 are identical to the processes of S1007 and S1008, respectively. Hence, descriptions thereof are omitted here.

The foregoing description is provided under a condition that the identifier is stored in the optical disk 100; the present invention is not limited to this, and the identifier may be stored in the storage section 4. In this case, whether or not the identifier is stored in the storage section 4 is confirmed in S1042 by having the insertion of the optical disk 100 serve as the trigger. Moreover, the order in which the processes S1046 to S1049 are carried out is not limited to the order described in the foregoing description. As long as the process S1049 is carried out after the process S1048. the processes may be carried out in any order.

As described above, the example of the communication system 400 of Embodiment 2-5 describes a set of processes carried out by the recording and reproduction apparatus 1 and telecommunications carrier management terminal 350, in a case where the activation and inactivation of the connection right of the recording and reproduction apparatus 1 can be switched over at a preferable timing, and the recording and reproduction apparatus 1 downloads contents from the information management server 250 and its contents fee and communications charges are paid via a payment method selected by the user. In this case also, the recording and reproduction apparatus 1 is allowed to be in a state capable of communicating with a specific information management server 250 by use of the public connection network, without the user having to obtain the connection right and provide their personal information to the telecommunications carrier. Moreover, since there is no need for the user to provide their personal information to the telecommunications carrier, it is possible to prevent the occurrence of any leakage of personal information via the telecommunications carrier.

Embodiment 2-6
One embodiment of the present invention is described below with reference to Fig. 12 and Fig. 22. The present embodiment describes a set of processes carried out in the communication system 400 in a case where the activation and inactivation of the connection right can be switched over and a prepaid disk is used as the optical disk 100. Note that the connection right is made inactive prior to this process.

In the present embodiment, the ROM layer 104 of the optical disk 100 which is a prepaid disk stores an identifier provided from the telecommunications carrier management terminal 350, in addition to the information described in Embodiment 2-2. Moreover, as similar to Embodiment 2-2, the telecommunications carrier management terminal 350 sets a dealer of the optical disk 100 as the billing destination included in the communications charges information associated with the identifier provided from the recording and reproduction apparatus 1.

Moreover, as with Embodiment 2-5, the following description deals with a set of processes in the communication system 400 in which the information management server 250 manages contents and the recording and reproduction apparatus 1 downloads contents from the information management server 250 to which the recording and reproduction apparatus 1 is connected (contents fee and communications charges are charged).

Processes carried out in Communication system 400 (No. 6)
With reference to Fig. 22, the following description deals with yet another set of processes carried out in the communication system 400, particularly processes carried out in the recording and reproduction apparatus 1 in a case where the activation and inactivation of the connection right can be switched over and the optical disk 100 thus inserted is a prepaid disk. Fig. 22 is a flowchart illustrating one example of the another set of processes carried out in the communication system 400 in a case where the activation and inactivation of the connection right can be switched over.

First, processes identical to S1041 to S1043 are carried out in S1051 to S1053, respectively. This activates the connection right, by having the insertion of the optical disk 100 serve as the trigger.

After the connection right is activated, as with S1014, the recording and reproduction circuit control section 228 reads out from the RE layer 102 of the optical disk 100 the balance of prepaid charges and the list (catalog) of contents available from the information management server 250 serving as the connection destination. This causes the control section 20 to cause the display apparatus 7 to display the information (S1054). Subsequent processes S1055 to S1058 are identical to the processes S1015 to S1018, respectively; hence, the descriptions thereof are omitted here.

After the communication control section 240 completes recording of the contents onto the optical disk 100 by the recording and reproduction circuit control section 228 in S1058, as with S1047, the activation control section 354 inactivates the activated connection right of the recording and reproduction apparatus 1(S1059). That is to say, the recording and reproduction apparatus 1 can inactivate the connection right by having the completion of downloading the contents serve as the trigger.

Moreover, after the contents is recorded onto the optical disk 100 by the recording and reproduction circuit control section 228, the process as in S1019 is carried out upon notification to the information management server 250 that the recording is completed (S1060). The order in which the processes S1058 to S1060 are processed is not limited to this, and the processes may be carried out in any order.

As described above, the example of the communication system 400 of Embodiment 2-6 describes a set of processes carried out by the recording and reproduction apparatus 1 and telecommunications carrier management terminal 350, in a case where the activation and inactivation of the connection right of the recording and reproduction apparatus 1 can be switched over at a preferable timing, and a user purchases a prepaid disk to cause the recording and reproduction apparatus 1 to download contents from the information management server 250. In this case also, the recording and reproduction apparatus 1 is allowed to be in a state capable of communicating with a specific information management server 250 by use of the public connection network, without the user having to obtain the connection right and provide their personal information to the telecommunications carrier. Moreover, since there is no need for the user to provide their personal information to the telecommunications carrier, it is possible to prevent the occurrence of any leakage of personal information via the telecommunications carrier.

Embodiment 2-7
One embodiment of the present invention is described below with reference to Fig. 12 and Fig. 23. The present embodiment describes a set of processes carried out in the communication system 400 in a case where the activation and inactivation of the connection right can be switched over, and the manufacturer of the recording and reproduction apparatus 1 updates the firmware incorporated in the recording and reproduction apparatus 1. Note that the connection right is made inactive prior to this process.

In the present embodiment, as with Embodiment 2-3, the information management server 250 manages the updating firmware, which information management server 250 is managed by the manufacturer of the recording and reproduction apparatus 1. This updating firmware is distributed free of charge (communications charges are separately required). Moreover, the storage section 4 of the recording and reproduction apparatus 1 stores a URL of the information management server 250 that manages the updating firmware, as the connection destination information. The connection destination information is provided by the telecommunications carrier management terminal 350 or the information management server 250 (manufacturer of the recording and reproduction apparatus 1). Moreover, the storage section 4 stores an identifier and a connection program in advance.

Processes carried out in Communication system 400 (No. 7)
With reference to Fig. 23, the following description deals with yet another set of processes carried out in the communication system 400, particularly processes carried out in the recording and reproduction apparatus 1 in a case where the activation and inactivation of the connection right can be switched over and when the updating firmware is to be downloaded. Fig. 23 is a flowchart illustrating one example of yet another set of processes carried out in the communication system 400 in the case where the activation and inactivation of the connection right can be switched over.

First, the update control section 280 causes the display apparatus 7 to display a menu screen in accordance with an instruction entered by the user. The user selects "firmware update" from among the menu items, in order to cause the updating of the firmware (S1071). After the update control section 280 receives via the operational section 6 the instruction entered, which instructions is indicative of this selection, the update control section 280 instructs the identifier confirmation section 260 to confirm whether or not the storage section 4 stores the identifier.

The identifier confirmation section 260, after receiving this instruction, reads out the identifier from the storage section 4, and transmits the identifier to the communication control section 240. The communication control section 240, after receiving the identifier thus read out, transmits the identifier to the telecommunications carrier management terminal 350 (S1072). At this time, the identifier confirmation section 260 reads out a connection program together with the identifier from the storage section 4, and transmits the connection program to the communication control section 240.

In the case where no identifier could be read out by the identifier confirmation section 260, the control section 20 causes the display apparatus 7 to display that no identifier could be read out for example, and requests the user to enter the identifier.

In the telecommunications carrier management terminal 350, as with S1043, the activation control section 354 activates the connection right of the recording and reproduction apparatus 1 by receiving the identifier from the communication control section 240 (S1073). Subsequent processes S1074 to S1076 are identical to the processes S1024 to S1026, respectively. Hence, descriptions thereof are omitted here.

After the communication control section 240 completes the downloading of the updating firmware from the information management server 250 in S1075, as with S1047, the activation control section 354 inactivates the connection right of the recording and reproduction apparatus 1 (S1077). In other words, the recording and reproduction apparatus 1 is capable of inactivating the connection right by having the completion of downloading the updating firmware serve as the trigger. Moreover, at this time, the telecommunications carrier management terminal 350 is notified of the inactivation of the connection right, thereby causing a process as with S1027 to be carried out (S1078). The order in which the processes S1076 to S1078 is carried out is not limited the above, and these processes may be processed in any order.

As described above, the example of the communication system 400 of Embodiment 2-7 describes a set of processes carried out by the recording and reproduction apparatus 1 and telecommunications carrier management terminal 350, in a case where the activation and inactivation of the connection right of the recording and reproduction apparatus 1 can be switched over at a preferable timing and the recording and reproduction apparatus 1 downloads the updating firmware from the information management server 250 at a timing preferable for the user. In this case also, the recording and reproduction apparatus 1 is allowed to be in a state capable of communicating with a specific information management server 250 by use of the public connection network, without the user having to obtain the connection right and provide their personal information to the telecommunications carrier. Moreover, since there is no need for the user to provide their personal information to the telecommunications carrier, it is possible to prevent the occurrence of any leakage of personal information via the telecommunications carrier.

Embodiment 2-8
One embodiment of the present invention is described below, with reference to Fig. 12 and Fig. 24. The present embodiment describes a set of processes carried out in the communication system 400 in a case where the activation and inactivation of the connection right can be switched over, and the manufacturer of the recording and reproduction apparatus 1 updates the firmware incorporated in the recording and reproduction apparatus 1 at a time programmed (set) in advance in the recording and reproduction apparatus 1.

In the present embodiment, the storage section 4 of the recording and reproduction apparatus 1 stores, for example, a distributing time or a distributing time period of the updating firmware. Moreover, in the present embodiment, as with Embodiment 2-4, when the distributing time comes (when a distributing time period elapses), reception of the updating firmware or the like is automatically started.

Processes carried out in Communication system 400 (No. 8)
With reference to Fig. 24, the following description deals with yet another set of processes carried out in the communication system 400, particularly, processes carried out in the recording and reproduction apparatus 1 in a case where the activation and inactivation of the connection right can be switched over and the updating firmware is downloaded at a preset time. Fig. 24 is a flowchart illustrating yet another set of processes carried out in the communication system 400 in a case where the activation and inactivation of the connection rights can be switched over. Note that before this set of processes is carried out, the connection right is made inactive.

In this set of processes, the time measurement control section 290, as with S1033, determines whether or not the time measured by the time measurement section 295 is the distributing time stored in the storage section 4 (S1081). If YES in S1081, the communication control section 240 instructs to obtain the updating firmware from the information management server 250. On the other hand, if the current time is not the distributing time (NO in S1081), no process is carried out until the distributing time comes. Subsequent processes S1082 to S1088 are identical to the processes S1072 to S1078 illustrated in Fig. 23, respectively. Hence, descriptions thereof are omitted here.

As described above, the example of the communication system 400 of Embodiment 2-8 describes a set of processes carried out by the recording and reproduction apparatus 1 and telecommunications carrier management terminal 350, in a case where the activation and inactivation of the connection right of the recording and reproduction apparatus 1 can be switched over at a preferable timing and the recording and reproduction apparatus 1 downloads the updating firmware of the information management server 250 at a set distributing time or per distributing time period. In this case also, the recording and reproduction apparatus 1 is allowed to be in a state capable of communicating with a specific information management server 250 by use of the public connection network, without the user having to obtain the connection right and provide their personal information to the telecommunications carrier. Moreover, since there is no need for the user to provide their personal information to the telecommunications carrier, it is possible to prevent the occurrence of any leakage of personal information via the telecommunications carrier.

Embodiment 2-9
One embodiment of the present invention is described below, with reference to Figs. 25 to 27.

Brief configuration of Communication system 410
First described is a communication system 410 according to the present embodiment, with reference to Fig. 25. Fig. 25 is a view schematically illustrating one example of a configuration of the communication system 410 according to the present embodiment. As illustrated in Fig. 25, the communication system 410 includes: a recording and reproduction apparatus 1a; an information management server 250; a telecommunications carrier management terminal 350; and a connection destination management server 500.

Other than that the recording and reproduction apparatus 1a includes a registration confirmation section 340 (registration confirmation means), the configuration of the recording and reproduction apparatus 1a is similar to that of the recording and reproduction apparatus 1. The registration confirmation section 340 is described later with reference to Fig. 26.

The connection destination management server 500 can communicate with the recording and reproduction apparatus 1a, and manages the connection destination information provided to the recording and reproduction apparatus 1a, optical disk 100, and the like from the telecommunications carrier management terminal 350. Namely, the telecommunications carrier management terminal 350 also provides the connection destination information that is self-managed to the connection destination management server 500, and causes the connection destination management server 500 to manage the information.

Moreover, the connection destination management server 500 receives the connection destination information from the recording and reproduction apparatus 1a, and after receiving an instruction to confirm whether or not this connection destination information is registered, confirms whether or not this connection destination information is registered in the managed connection destination information, and transmits the confirmation result to the recording and reproduction apparatus 1a.

In order to carry out operations such as managing the connection destination information, confirming the registration of the connection destination information, and transmitting information to and receiving information from the recording and reproduction apparatus 1a, the information management server 250 at least includes: a management server communication section; a management server control section; and a management server storage section (all not illustrated).

The telecommunications carrier management terminal 350 manages management server connection destination information indicative of a connection of the connection destination management server 500, so that the management server connection destination information is associated with an identifier. A URL or IP address of the connection destination management server 500 is an example of the management server connection destination information, similarly with the connection destination information.

Brief configuration of Recording and reproduction apparatus 1a
Next described are main parts of the recording and reproduction apparatus 1a according to the present embodiment, with reference to Fig. 26. Fig. 26 is a view illustrating one example of main parts of the recording and reproduction apparatus 1a. The brief configuration of the recording and reproduction apparatus 1 is identical to the recording and reproduction apparatus 1 illustrated in Fig. 16, so therefore descriptions thereof are omitted here.

The recording and reproduction apparatus 1a includes a control section 20a which additionally includes a registration confirmation section 340 in the control section 20. The storage section 4 or optical disk 100 records the management server connection destination information and connection destination information, each of which is provided from the telecommunications carrier management terminal 350.

The registration confirmation section 340 confirms whether or not the connection destination management server 500 indicated by the management server connection destination information registers the connection destination information. More specifically, the registration confirmation section 340 reads out the management server connection destination information and the connection destination information from the storage section 4 or the optical disk 100, transmits the connection destination information to the connection destination management server 500 indicated by the management server connection destination information, and instructs the connection destination management server 500 to confirm whether the connection destination information is registered in the server. Thereafter, the registration confirmation section 340 receives a confirmation result by the connection destination management server 500, to confirm whether the connection destination information transmitted to the connection destination management server 500 is registered in the server. In a case where the registration confirmation section 340 confirms that the connection destination information is registered in the connection destination management server 500, the registration confirmation section 340 notifies the communication control section 240 that the connection destination information is registered in the connection destination management server 500, and in a case where no registration of the connection destination information is confirmed, no particular process is taken.

In the case where the registration of the connection destination information is confirmed by the registration confirmation section 340, the communication control section 240 requests for a connection with the information management server 250 by receiving a notification from the registration confirmation section 340.

Hence, the recording and reproduction apparatus 1a makes no request for a connection with the information management server 250 indicated by the connection destination information unless the connection destination information is registered in the connection destination management server 500, even if the recording and reproduction apparatus 1 is available for use over the public connection network. This prevents any unauthorized connections from being established, for example which causes an identifier to be rewritten and its information be used wrongly in the communication system 410.

Processes carried out in Communication system 400 (No. 9)
Next described with reference to Fig. 27 is a set of processes carried out in a communication system 410, particularly processes carried in the recording and reproduction apparatus 1 in a case where the connection right is activated in advance. Fig. 27 is a flowchart illustrating one example of a set of processes carried out in the communication system 410, in the case where the connection right is activated in advance. The processes S1091 to S1093 and the processes S1095 to S1099 are identical to respective processes illustrated in Fig. 17; hence, the explanations thereof have been omitted.

After the optical disk 100 is inserted into the recording and reproduction apparatus 1 in S1093. the recording and reproduction circuit control section 228 controls the recording and reproduction circuit group 10 to read out the connection destination information and connection program, and transmits this connection destination information to the registration confirmation section 340.

The registration confirmation section 340, after receiving the connection destination information, instructs the connection destination management server 500 to confirm whether or not the destination information is registered, and confirms whether or not the destination information is present in the server by receiving this confirmation result from the connection destination management server 500 (S1094).

In a case where the registration confirmation section 340 confirms that the connection destination information is registered in the connection destination management server 500 (YES in S1094), the registration confirmation section 340 notifies the communication control section 240 that the connection destination information is registered. The communication control section 240, after receiving this notification, runs the connection program read out by the recording and reproduction circuit control section 228 similarly to S1004, and requests for a connection with an information management server 250 indicated by the connection destination information, over the public connection network (S1095). On the other hand, in the case where the registration confirmation section 340 confirms that no connection destination information is registered on the destination management server 500 (NO in S1094), no particular process is carried out.

Fig. 27 illustrates that the registration confirmation section 340 confirms whether or not the destination information is registered in the destination management server 500, in a case where the processes illustrated in Fig. 18 are carried out in the communication system 410. However, the present invention is not limited to this case, and is also applicable in any of the set of processes described in Embodiments 2-2 to 2-8. In this case also, the registration confirmation section 340 is to confirm whether or not the connection destination information is registered in the connection destination management server 500 before the communication control section 240 requests for a connection with the information management server 250.

As described above, in the communication system 410 of Embodiment 2-9, the recording and reproduction apparatus 1a requests for a connection with the information management server 250 just in a case where the recording and reproduction apparatus 1a confirms that the connection destination information is registered in the connection destination management server 500, when downloading the contents or updating firmware of various cases in Embodiments 2-1 to 2-8. Hence, the recording and reproduction apparatus 1a is capable of preventing establishment of an unauthorized connection, such as a use in which an identifier is rewritten and the rewritten identifier is used improperly in the communication system 410.

In order to attain the object, a recording and reproduction apparatus according to the present invention is a recording and reproduction apparatus being used in a communication system including a telecommunications carrier providing a public connection network and a plurality of information management servers managing contents or software, the recording and reproduction apparatus being capable of controlling recording of information onto or reproduction of information stored on an information storage medium, characterized in that: the telecommunications carrier allots an identifier to the recording and reproduction apparatus, the identifier being used for activating a connection right being a right required by the recording and reproduction apparatus to connect with the public connection network, the telecommunications carrier manages (i) connection destination information indicative of a connection destination of an information management server for which connection with the recording and reproduction apparatus is permitted and (ii) communications charges information indicative of (a) whether or not communications charges is charged due to the connection with the information management server indicated by the connection destination information and (b) a billing destination of the communications charges in a case where the communications charges is charged, the billing destination being a destination other than a user of the recording and reproduction apparatus, the (i) and (ii) being managed to be associated with the identifier, the telecommunications carrier including: activation control means activating the connection right by use of the identifier; connection destination determination means determining an information management server indicated by the connection destination information from among the plurality of information management servers as an information management server for which connection with the recording and reproduction apparatus is permitted; and communications charges collecting means determining, while the activation control means activates the connection right, whether or not the communications charges is charged for the connection between the information management server determined by the destination determination means and the recording and reproduction apparatus, and collecting the communications charges from the billing destination indicated by the communications charges information in a case where the charges is charged, without having to obtain personal information that specifies a user of the recording and reproduction apparatus, the recording and reproduction apparatus including: identifier confirmation means confirming whether or not the identifier is present in the information storage medium or the recording and reproduction apparatus itself; and, communication control means, in a case where the identifier confirmation means confirms the presence of the identifier, transmitting the identifier to the activation control means.

In order to attain the object, a method of controlling a recording and reproduction apparatus according to the present invention is a method of controlling a recording and reproduction apparatus used in a communication system, the communication system including a telecommunications carrier providing a public connection network and a plurality of information management servers managing contents or software, the recording and reproduction apparatus being capable of controlling recording of information onto or reproduction of information stored on an information storage medium, characterized in that: the telecommunications carrier allots an identifier to the recording and reproduction apparatus, the identifier being used for activating a connection right being a right required by the recording and reproduction apparatus to connect with the public connection network, the telecommunications carrier manages (i) connection destination information indicative of a connection destination of an information management server for which connection with the recording and reproduction apparatus is permitted and (ii) communications charges information indicative of (a) whether or not communications charges is charged due to the connection with the information management server indicated by the connection destination information and (b) a billing destination of the communications charges in a case where the communications charges is charged, the billing destination being a destination other than a user of the recording and reproduction apparatus, the (i) and (ii) being managed to be associated with the identifier, the telecommunications carrier further including: activation control means activating the connection right by use of the identifier; connection destination determination means determining an information management server indicated by the connection destination information from among the plurality of information management servers as an information management server for which connection with the recording and reproduction apparatus is permitted; and communications charges collecting means determining, while the activation control means activates the connection right, whether or not the communications charges is charged for the connection between the information management server determined by the destination determination means and the recording and reproduction apparatus, and collecting the communications charges from the billing destination indicated by the communications charges information in a case where the charges is charged, without having to obtain personal information that specifies a user of the recording and reproduction apparatus, the method including: an identifier confirmation step for confirming whether or not the identifier is present in the information storage medium or the recording and reproduction apparatus itself; and a communication control step for transmitting the identifier to the activation control means, in a case where the identifier confirmation step confirms the presence of the identifier.

In order to attain the object, a communication system according to the present invention is a communication system including: a telecommunications carrier providing a public connection network; a plurality of information management servers managing contents or software; and a recording and reproduction apparatus being capable of controlling recording of information onto or reproduction of information stored on an information storage medium, characterized in that: the telecommunications carrier allots an identifier to the recording and reproduction apparatus, the identifier being used for activating a connection right being a right required by the recording and reproduction apparatus to connect with the public connection network, the telecommunications carrier manages (i) connection destination information indicative of a connection destination of an information management server for which connection with the recording and reproduction apparatus is permitted and (ii) communications charges information indicative of (a) whether or not communications charges is charged due to the connection between the recording and reproduction apparatus and the information management server indicated by the connection destination information and (b) a billing destination of the communications charges in a case where the communications charges is charged, the billing destination being a destination other than a user of the recording and reproduction apparatus, the (i) and (ii) being managed to be associated with the identifier, the telecommunications carrier including: activation control means activating the connection right by use of the identifier; connection destination determination means determining an information management server indicated by the connection destination information from among the plurality of information management servers as an information management server for which connection with the recording and reproduction apparatus is permitted; and communications charges collecting means determining, while the activation control means activates the connection right, whether or not the communications charges is charged for the connection between the information management server determined by the destination determination means and the recording and reproduction apparatus, and collecting the communications charges from the billing destination indicated by the communications charges information in a case where the charges is charged, without having to obtain personal information that specifies a user of the recording and reproduction apparatus, and the recording and reproduction apparatus including: identifier confirmation means confirming whether or not the identifier is present in the information storage medium or the recording and reproduction apparatus itself; and communication control means, in a case where the identifier confirmation means confirms the presence of the identifier, transmitting the identifier to the activation control means.

According to the configuration, in order for the recording and reproduction apparatus to obtain contents or software from the information management server, the telecommunications carrier allots an identifier to the recording and reproduction apparatus, which identifier is used for activating a connection right required to connect the recording and reproduction apparatus with the public connection network. Moreover, the telecommunications carrier manages (i) connection destination information indicative of a connection destination of the information management server and (ii) communications charges information indicative of (a) whether or not communications charges is charged for the connection with the information management server and (b) a billing destination (other than a user of the recording and reproduction apparatus) of the communications charges in a case where the charges is billed, so that the (i) and (ii) are associated with the identifier.

In the telecommunications carrier, the connection destination determination means determines an information management server indicated by connection destination information associated with the identifier, as an information management server for which connection with the recording and reproduction apparatus is permitted. This allows the telecommunications carrier to connect a specific information management server determined by the connection destination determination means with the recording and reproduction apparatus, thereby making it possible to cause the recording and reproduction apparatus to communicate with the specific information management server over the public connection network.

Moreover, in the telecommunications carrier, the communications charges control means confirms whether or not the communications charges are charged for the connection between the recording and reproduction apparatus and the specific information management server. Therefore, it is possible to appropriately collect the communications charges even in a case where the public connection network is provided free of charge. Moreover, in the case where the communications charges is charged, the communications charges control means bills the communications charges to a billing destination indicated by the communications charges information, without obtaining personal information for specifying a user of the recording and reproduction apparatus. Hence, in the case where the communications charges is charged due to the connection, the telecommunications carrier can bill the communications charges without obtaining personal information of the user to a billing destination other than the user of the recording and reproduction apparatus. Namely, the telecommunications carrier can positively collect the charged communications charges even if no personal information is provided from the user.

As described above, the telecommunications carrier manages the destination information and communications charges information so as to be associated with the identifier, and based on these information, (i) activates the connection right of the recording and reproduction apparatus, (ii) determines the information management server serving as a connection destination, and (iii) collects the communications charges in a case where fees are charged always or depending on cases. This configuration allows the telecommunications carrier to appropriately carry out the processes even if no personal information of the user is received. As a result, management of the communication system including the recording and reproduction apparatus and the information management server is appropriately carried out.

Meanwhile, in the recording and reproduction apparatus (and its control method), in a case where the identifier confirmation means (identifier confirming step) confirms presence of an identifier of an information storage medium or of the recording reproduction apparatus, the communication control means (communication control step) transmits the identifier to the activation control means. This allows the telecommunications carrier to activate the connection right of the recording and reproduction apparatus from which the identifier is transmitted, and determines the information management server that is allowed to connect with the recording and reproduction apparatus. Further, if any communications charges are charged due to this connection, the telecommunications carrier may also specify a destination to collect the communications charges. The confirmation of the presence of the identifier by the identifier confirmation means and the transmission of the identifier by the communication control means (i.e., activation of the connection right by the activation control section) may be carried out when the recording and reproduction apparatus is initially set or during manufacture of the recording and reproduction apparatus (when the user first purchases the apparatus), or may be carried out just when necessary.

That is to say, in view of the current use of the public connection network, in a case where the recording and reproduction apparatus establishes a connection with the information management server over the public connection network in the conventional communication system, the user of the recording and reproduction apparatus required to provide their personal information to the telecommunications carrier in advance to obtain the connection right from the telecommunications carrier, before using the recording and reproduction apparatus. Therefore, there was the fear of leakage of the personal information if some kind of trouble occurs to the management of the telecommunications carrier.

Alternatively, with the recording and reproduction apparatus used in the communication system of the present invention, the telecommunications carrier allots an identifier to the recording and reproduction apparatus. Hence, there is no need for the user itself to obtain the connection right before using the public connection network. Moreover, in the case where the telecommunications carrier activates the connection right by receiving the identifier from the recording and reproduction apparatus, the telecommunications carrier can establish a connection between the recording and reproduction apparatus and a specific information management server connectable to the recording and reproduction apparatus, so that even if the user has not provided their personal information to the telecommunication carrier, it is possible to collect the communications charges charged due to the connection from another destination other than the user. Namely, in the communication system of the present invention, the telecommunications carrier allotting an identifier to the recording and reproduction apparatus allows the recording and reproduction apparatus to be communicable with a specific information management server, without the user of the recording and reproduction apparatus (public connection network) having to obtain the connection right or provide their personal information to the telecommunications carrier.

Therefore, use of the communication system and recording and reproduction apparatus (its control method) of the present invention allows the recording and reproduction apparatus to be capable of communicating with a specific information management server by use of the public connection network, without the user having to obtain the connection right and provide their personal information to the telecommunications carrier. Moreover, since there is no need for the user to provide their personal information to the telecommunications carrier, it is possible to prevent the occurrence of leakage of personal information via the telecommunications carrier.

Note that the "telecommunications carrier" denotes an apparatus, terminal or like component that includes the activation control means, connection destination determination means, and communications charges collecting means.

The personal information is information that allows specification of a user, and examples of such personal information encompass: name, address, telephone number, credit card number, and bank account, each of the user. On the other hand, the medium-specific information of the information storage medium thus inserted, apparatus-specific information of the recording and reproduction apparatus, and antenna position of the public connection network to which the recording and reproduction apparatus is connected (is only specifiable at least within a range of a radius of several hundred meters from its position) is not relevant as the personal information in the invention. Note that, in this case, no registration of personal information is required to the telecommunications carrier at a time when the information storage medium and recording and reproduction apparatus are purchased.

With the recording and reproduction apparatus according to the present invention, it is preferable that the activation control means inactivate the connection right, and the communication control means, after the connection right is activated by the activation control means, requests the activation control means to inactivate the connection right.

According to the configuration, the recording and reproduction apparatus requests to inactivate the connection right in the case where the connection right is in an activated state. By receiving this request, the telecommunications carrier inactivates the connection right, and disconnects the connection between the recording and reproduction apparatus and the public connection network.

Moreover, since the activated connection right can be inactivated, it is possible to prevent a situation where information stored in the recording and reproduction apparatus or stored in the information storage medium (in a case where the medium is inserted into the recording and reproduction apparatus) leaks via the public connection network, in a state where there is no need to keep the connection right activated (e.g., a state where no contents or software is distributed from the information management server).

In the recording and reproduction apparatus according to the present invention, it is preferable that the communication control means, after the connection right is inactivated by the activation control means, transmits the identifier to the activation control means.

According to the configuration, the recording and reproduction apparatus transmits the identifier allotted to the recording and reproduction apparatus itself while the connection right is inactivated. The telecommunications carrier, by receiving the identifier, can again activate the connection right even if the connection right is made inactivate, and again establish connection between the recording and reproduction apparatus and the public connection network. Namely, the recording and reproduction apparatus, even if the connection right is inactivated, can again have the connection right be activated. This as a result makes it possible to use the public connection network even after the connection right is inactivated.

In the recording and reproduction apparatus according to the present invention, it is preferable that the communication control means sends a connection request to the information management server indicated by the connection destination information.

According to the configuration, the recording and reproduction apparatus, by requesting for a connection with an information management server indicated by the connection destination information, can establish a connection with the information management server and receive information from and transmit information to the information management server. For example, the recording and reproduction apparatus receives contents or software from the information management server, as a response to the request for connection that is transmitted from the communication control means.

With the recording and reproduction apparatus according to the present invention, the communication system includes a connection destination management server managing the connection destination information, the telecommunications carrier manages management server connection destination information indicative of a connection destination of the connection destination management server so that the management server connection destination information is associated with the identifier, the telecommunications carrier further includes registration confirmation means confirming whether or not the connection destination information is registered on the connection destination management server indicated by the management server connection destination information, and in a case where the registration confirmation means confirms the registration of the connection destination information, the communication control means sends a connection request to the information management server indicated by the connection destination information.

According to the configuration, in the case where the recording and reproduction apparatus confirms that the destination information is registered in the destination management server, the recording and reproduction apparatus requests for a connection with an information management server indicated by the connection destination information. That is to say, unless the connection destination information is registered in the destination management server, the recording and reproduction apparatus does not request for a connection with the information management server indicated by the connection destination information even in a state where the recording and reproduction apparatus is available for use in the public connection network.

Therefore, the recording and reproduction apparatus is capable of preventing establishment of an unauthorized connection such as a use in which an identifier is rewritten and the rewritten identifier is used improperly in the communication system.

The recording and reproduction apparatus according to the present invention is preferably configured so as to further include recording control means, the communication control means receiving contents or software distributed from the information management server determined by the connection destination determination means, and the recording control means recording the contents or software received by the communication control means onto the information storage medium.

According to the configuration, the contents or software received from the information management server by the communication control means is recorded onto an information storage medium on which an identifier is stored. Hence, it is possible to collectively manage the contents or software with the identifier, in the information storage medium.

In the recording and reproduction apparatus according to the present invention, it is preferable that the communication control means connects with the public connection network by wireless communication.

According to the configuration, the recording and reproduction apparatus connects with the public connection network by wireless communication. This allows providing the recording and reproduction apparatus with less restriction in position, as compared to a connection connected by wired communication.

Moreover, the recording and reproduction apparatus may be realized by a computer. In this case, a control program of a recording and reproduction apparatus is also within the scope of the present invention, which control program causes the computer to realize the recording and reproduction apparatus by causing the computer to operate as each of means of sections of the recording and reproduction apparatus.

According to the control program, the recording and reproduction apparatus is realized on the computer by realizing the means by use of the computer.

A computer-readable storage medium storing the control section program can also be within the scope of the present invention. According to the storage medium, the control program read out from the storage medium can be realized on a general-purpose computer.

An information storage medium according to the present invention is an information storage medium being used in the recording and reproduction apparatus, and preferably stores the identifier.

According to the configuration, an identifier is stored in an information storage medium used by the recording and reproduction apparatus, as means to allot an identifier to the recording and reproduction apparatus. By inserting this information storage medium into the recording and reproduction apparatus, the recording and reproduction apparatus can confirm the identifier, and transmit the identifier to the telecommunications carrier. This allows the communication control means to activate the connection right of the recording and reproduction apparatus, by use of the identifier stored in the information storage medium.

Therefore, the information storage medium of the present information, by being used in the recording and reproduction apparatus (communication system) of the present invention, allows attainment of a state in which communication is possible with a specific information management server by use of a public connection network, without the user having to obtain a connection right and provide their personal information to the telecommunications carrier. Moreover, since there is no need for the user to provide their personal information to the telecommunications carrier, it is possible to prevent the occurrence of leakage of personal information via the telecommunications carrier.

It is preferable that the information storage medium according to the present invention at least include: a first information recording layer from which information can only be read out; and a second information recording layer on which information is additionally recordable or is rewritable, the first information recording layer storing the identifier, and the second information recording layer storing contents or software distributed from the information management server indicated by the connection destination information, the contents or software being stored by the recording and reproduction apparatus.

According to the configuration, the first information recording layer stores the identifier. Hence, it is not possible to additionally store or rewrite the identifier. This prevents establishment of an unauthorized connection when the information storage medium is used by the recording and reproduction apparatus, such as a use in which an identifier is rewritten and the rewritten identifier is used improperly in the communication system.

Moreover, the second information recording layer stores the contents or software distributed from the information management server. In this case, the contents or software is stored in the information storage medium in which an identifier is stored in its first information recording layer. Hence, it is possible to collectively manage the contents or software together with the identifier, in the information storage medium.

It is preferable that the information storage medium according to the present invention store operation identification information causing the recording and reproduction apparatus to recognize the information storage medium as an information storage medium causing the recording and reproduction apparatus to perform a commercial transaction over a network, the operation identification information serving as a trigger for causing the recording and reproduction apparatus to perform the commercial transaction.

According to the configuration, the information storage medium stores the operation identification information, so the recording and reproduction apparatus can perform a commercial transaction by reading out the operation identification information. Since there is no need to store a program in the information storage medium for connecting the recording and reproduction apparatus with the public connection network, which program serves as a trigger for executing commercial transaction, it is possible to increase the storage capacity of the information storage medium.

As described above, the recording and reproduction apparatus according to the present invention includes: identifier confirmation means confirming whether or not the identifier is present in the information storage medium or the recording and reproduction apparatus itself; and communication control means transmitting the identifier to the activation control means in a case where the presence of the identifier is confirmed by the identifier confirmation means.

Moreover, as described above, the method according to the present invention of controlling a recording and reproduction apparatus includes: an identifier confirming step for confirming whether or not the identifier is present in the information storage medium or the recording and reproduction apparatus; and a communication controlling step for transmitting the identifier to the activation control means in a case where the identifier confirming step confirms the presence of the identifier.

Moreover, as described above, in the communication system according to the present invention, the telecommunications carrier allots an identifier to the recording and reproduction apparatus, which identifier is used for activating a connection right that is a right required by the recording and reproduction apparatus to connect with the public connection network, and manages (i) connection destination information indicative of a connection destination of an information management server for which connection with the recording and reproduction apparatus is permitted and (ii) communications charges information indicative of (a) whether or not communications charges is charged due to the connection with the information management server indicated by the connection destination information and (b) a billing destination of the communications charges in a case where the communications charges is charged, the billing destination being a destination other than a user of the recording and reproduction apparatus, the (i) and (ii) being managed to be associated with the identifier, the telecommunications carrier including: activation control means activating the connection right by use of the identifier; connection destination determination means determining an information management server indicated by the connection destination information from among the plurality of information management servers as an information management server for which connection with the recording and reproduction apparatus is permitted; and communications charges collecting means determining, while the activation control means activates the connection right, whether or not the communications charges is charged for the connection between the information management server determined by the destination determination means and the recording and reproduction apparatus, and collecting the communications charges from the billing destination indicated by the communications charges information in a case where the charges has been charged, without having to obtain personal information that specifies a user of the recording and reproduction apparatus, and the recording and reproduction apparatus including: identifier confirmation means confirming whether or not the identifier is present in the information storage medium or the recording and reproduction apparatus itself; and communication control means, in a case where the identifier confirmation means confirms the presence of the identifier, transmitting the identifier to the activation control means.

Hence, the recording and reproduction apparatus (its control method) and the communication system, each of the present invention, allows attaining an effect that communication with an information management server is made possible by use of a public connection network, without the user having to obtain the connection right and provide their personal information to the telecommunications carrier.

Yet another expression of the Present Invention
The present invention may also be expressed as described below.

Namely, an information storage medium reproduction apparatus according to the present invention is an information storage medium reproduction apparatus including information reproduction means reproducing information stored in an information storage medium, the information storage medium reproduction apparatus further including connection means connecting to a public connection network to which a connection right to connect to the public connection network by a user is applicable (the recording and reproduction apparatus including communication means).

Moreover, the information storage medium reproduction apparatus according to the present invention is preferably configured in such a manner that the connection right is dynamically activated or inactivated by receiving a connection right activation signal or inactivation instruction signal from outside (configured in such a manner that the connection right is activated or inactivated based on information entered by a user).

Moreover, the information storage medium reproduction apparatus according to the present invention is preferably configured in such a manner that the connection right is dynamically activated or inactivated by a connection right activation signal or inactivation instruction signal stored in the information storage medium (configured in such a manner that the connection right is activated or inactivated based on information in the medium).

Moreover, the information storage medium reproduction apparatus according to the present invention is preferably configured in such a manner that the connection right is activated or inactivated in accordance with a set time interval (configured in such a manner that the connection right is provided or inactivated based on a set interval).

Moreover, the information storage medium reproduction apparatus according to the present invention is preferably configured in such a manner that the information storage medium reproduction apparatus is connected to the information distribution server through a public connection network based on information received by the apparatus from outside, the information instructing to connect to a connection destination server, and to transmit and receive information (configured to connect to a server based on information entered by the user).

Moreover, the information storage medium reproduction apparatus according to the present invention is preferably configured to connect to the information distribution server over the public connection network based on information of a connection destination server stored in the information storage medium, to receive and transmit information (configured to be connected to the server based on information in the storage medium).

Moreover, the information storage medium reproduction apparatus according to the present invention is preferably configured to connect to the information distribution server over the public connection network based on a set time interval, to receive and transmit information (configured to be automatically connected to the server at set intervals).

Moreover, an information storage medium according to the present invention is an information storage medium used in the information storage medium reproduction apparatus, and is preferably configured in such a manner that the information storage medium stores information for activating a connection right of the information reproduction apparatus (information storage medium in which information for activating a connection right is stored).

Moreover, an information storage medium according to the present invention is an information storage medium used in the information storage medium reproduction apparatus, and is preferably configured in such a manner that the information storage medium stores information indicative of a connection operation and a connection destination of the information storage medium reproduction apparatus (information storage medium in which information of a connection destination is recorded).

Moreover, the information storage medium reproduction apparatus according to the present invention is preferably configured so as to include recording means recording information on a storage medium having an information recording region (information storage medium recording and reproduction apparatus capable of recording).

Moreover, the information storage medium according to the present invention is preferably configured so as to be a storage medium used in the information storage medium reproduction apparatus, having a region on which information received through the public connection network is recordable.

Moreover, an information distribution system according to the present invention is preferably configured so that information is distributed from the information distribution server to the information storage medium reproduction apparatus (an information distribution system using the information recording and reproduction apparatus).

Supplementation
Finally, the blocks of the recording and reproduction apparatuses 1 and 1 a, particularly the recording and reproduction circuit control section 228, communication control section 240, identifier confirmation section 260, update control section 280, time measurement control section 290, and registration confirmation section 340 of the control section 20 may be realized by way of hardware or software as executed by a CPU as follows. Moreover, the blocks of the telecommunications carrier management terminal 350, particularly the activation control section 354, destination determination section 355, and communications charges collecting section 356 of the terminal control section 353 may also be realized by way of hardware or software as executed by a CPU as follows:

The recording and reproduction apparatuses 1 and 1a, and the telecommunications carrier management terminal 350 each include a CPU (central processing unit) and memory devices (memory media). The CPU (central processing unit) executes instructions in control programs realizing the functions. The memory devices include a ROM (read only memory) which contains programs, a RAM (random access memory) to which the programs are loaded, and a memory containing the programs and various data. The objective of the present invention can also be achieved by mounting to the recording and reproduction apparatuses 1 and 1a and the telecommunications carrier management terminal 350 a computer-readable storage medium containing control program code (executable program, intermediate code program, or source program) for the recording and reproduction apparatuses 1 and 1a, and telecommunications carrier management terminal 350, which is a software realizing the aforementioned functions, in order for the computer (or CPU, MPU) to retrieve and execute the program code contained in the storage medium.

The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The recording and reproduction apparatuses 1 and 1a, and telecommunications carrier management terminal 350 may be arranged connectable to a communications network so that the program code may be delivered over the communications network. The communications network is not limited in any particular manner, and may be, for example, the Internet, an intranet, extranet, LAN, ISDN, VAN, CATV communications network, virtual dedicated network (virtual private network), telephone line network, mobile communications network, or satellite communications network. The transfer medium which makes up the communications network is not limited in any particular manner, and may be, for example, wired line, such as IEEE 1394, USB, electric power line, cable TV line, telephone line, or ADSL line; or wireless, such as infrared radiation (IrDA, remote control), Bluetooth (Registered Trademark), 802.11 wireless, HDR, mobile telephone network, satellite line, or terrestrial digital network. The present invention encompasses a mode of a computer data signal in which a carrier wave is embedded, the computer data signal in which the program code is embodied electronically.

The server control section (not illustrated) of the information management server 250 and the management server control section (not illustrated) of the connection destination management server 500 may also be realized by way of hardware or software as executed by a CPU as aforementioned.

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

For instance, the information management server 250 is not restricted to just the distribution of contents or updating firmware to the recording and reproduction apparatus 1 and 1a, and may also have a function as a shopping server for managing products. In this case, the optical disk 100 is a prepaid disk, and stores catalog information managed by the shopping server. The user selects the product included in the catalog information in the optical disk 100, to purchase the product. In this case also, it is not required to provide the personal information to the telecommunications carrier management terminal 350 at the time when purchasing the optical disk 100; hence, it is possible to attain the same effect as the embodiment.

The present invention allows carrying out communication with a specific information management server by use of a public connection network, without the user having to obtain connection rights and provide their personal information to a telecommunications carrier. Hence, the present invention is suitably used in a recording and reproduction apparatus (BD recorder) or like apparatuses used by the user, which apparatus has a communication function.

The present invention may be expressed as follows.
(1st invention) An information storage medium being subjected to recording and/or reproduction by a recording and reproduction apparatus, the information storage medium being characterized in that:
the information storage medium stores operation identification information causing the recording and reproduction apparatus into which the information storage medium is inserted to recognize the information storage medium as an information storage medium causing the recording and reproduction apparatus to perform a commercial transaction over a network, the operation identification information serving as a trigger for causing the recording and reproduction apparatus to perform the commercial transaction.
   (2nd invention) The information storage medium according to the 1st invention, characterized in that:
the information storage medium is a prepaid-type information storage medium, causing a commercial transaction performed over the network to be performed after a user completes payment of prepaid charges, and
the operation identification information is information causing the recording and reproduction apparatus to recognize the information storage medium as the prepaid-type information storage medium.
   (3rd invention). The information storage medium according to the 2nd invention, characterized in that:
the information storage medium stores (i) balance information related to a balance of the prepaid charges and (ii) transaction information related to a transaction target of the commercial transaction.
   (4th invention). The information storage medium according to the 1st invention, characterized in that:
the information storage medium is a postpaid-type information storage medium, causing a commercial transaction performed over the network to be performed by having a user pay charges after the commercial transaction is performed, and
the operation identification information is information causing the recording and reproduction apparatus to recognize the information storage as the postpaid-type information storage medium.
   (5th invention). The information storage medium according to any one of the 1st invention to the 4th invention, comprising:
a reproduction-only region from which information can only be read out,
the reproduction-only region comprising:
   a specific information region storing (i) the operation identification information and (ii) medium-specific information unique to the information storage medium; and
   a common information region storing medium common information which is common in the information storage medium.
      (6th invention). The information storage medium according to the 5th invention, characterized in that:
the specific information region is stored in a BCA (Burst Cutting Area) region.
   (7th invention). A recording and reproduction apparatus into which an information storage medium as set forth in any one of the 1 st invention to the 6th invention is to be inserted, characterized in that:
the recording and reproduction apparatus comprises:
   communication means communicating with the network based on the operation identification information.
      (8th invention). The recording and reproduction apparatus according to the 7th invention, characterized in that:
the recording and reproduction apparatus further comprises reproduction permitting means,
the communication means receiving reproduction permission information from the network, the reproduction permission information being indicative of whether or not to permit reproduction of contents downloaded from the network by means of the commercial transaction , and
the reproduction permitting means permitting the reproduction of the contents in accordance with the reproduction permission information received.
   (9th invention). The recording and reproduction apparatus according to the 7th invention or the 8th invention, characterized in that:
the recording and reproduction apparatus further comprises deletion permitting means,
the communication means receiving deletion permission information from the network, the deletion permission information being indicative of whether or not contents downloaded from the network by means of the commercial transaction can be deleted, and
the deletion permitting means permitting deletion of the contents in accordance with the deletion permission information received.
   (10th invention). A recording and reproduction apparatus being used in a communication system including a telecommunications carrier providing a public connection network and a plurality of information management servers managing contents or software, the recording and reproduction apparatus being capable of controlling recording of information onto or reproduction of information stored on an information storage medium, into which an information storage medium as set forth in any one of the 1st invention to the 6th invention is inserted, characterized in that:
the telecommunications carrier allots an identifier to the recording and reproduction apparatus, the identifier being used for activating a connection right being a right required by the recording and reproduction apparatus to connect with the public connection network,
the telecommunications carrier manages (i) connection destination information indicative of a connection destination of an information management server for which connection with the recording and reproduction apparatus is permitted and (ii) communications charges information indicative of (a) whether or not communications charges is charged due to the connection with the information management server indicated by the connection destination information and (b) a billing destination of the communications charges in a case where the communications charges is charged, the billing destination being a destination other than a user of the recording and reproduction apparatus, the (i) and (ii) being managed to be associated with the identifier,
the telecommunications carrier comprising:
   activation control means activating the connection right by use of the identifier;
   connection destination determination means determining an information management server indicated by the connection destination information from among the plurality of information management servers as an information management server for which connection with the recording and reproduction apparatus is permitted; and
   communications charges collecting means determining, while the activation control means activates the connection right, whether or not the communications charges is charged for the connection between the information management server determined by the destination determination means and the recording and reproduction apparatus, and collecting the communications charges from the billing destination indicated by the communications charges information in a case where the charges is charged, without having to obtain personal information that specifies a user of the recording and reproduction apparatus,
said recording and reproduction apparatus comprising:
   identifier confirmation means confirming whether or not the identifier is present in the information storage medium or the recording and reproduction apparatus itself; and,
   communication control means, in a case where the identifier confirmation means confirms the presence of the identifier, transmitting the identifier to the activation control means.
      (11th invention). The recording and reproduction apparatus according to the 10th invention, characterized in that:
the activation control means inactivates the connection right, and
the communication control means, after the connection right is activated by the activation control means, requests the activation control means to inactivate the connection right.
   (12th invention). The recording and reproduction apparatus according to the 11 th invention, characterized in that:
the communication control means, after the connection right is inactivated by the activation control means, transmits the identifier to the activation control means.
   (13th invention). The recording and reproduction apparatus according to any one of the 10th invention to the 12th invention, wherein:
the communication control means sends a connection request to the information management server indicated by the connection destination information.
   (14th invention). The recording and reproduction apparatus according to the 13th invention, characterized in that:
the communication system includes a connection destination management server managing the connection destination information,
the telecommunications carrier manages management server connection destination information indicative of a connection destination of the connection destination management server so that the management server connection destination information is associated with the identifier,
the telecommunications carrier further comprises registration confirmation means confirming whether or not the connection destination information is registered on the connection destination management server indicated by the management server connection destination information, and
in a case where the registration confirmation means confirms the registration of the connection destination information, the communication control means sends a connection request to the information management server indicated by the connection destination information.
   (15th invention). The recording and reproduction apparatus according to any one of the 10th invention to the 14th invention, characterized in that:
the recording and reproduction apparatus further comprises recording control means,
the communication control means receiving contents or software distributed from the information management server indicated by the connection destination information, and
the recording control means recording the contents or software received by the communication control means onto the information storage medium.
   (16th invention). The recording and reproduction apparatus according to the 10th invention to the 15th invention, characterized in that:
the communication control means connects with the public connection network by wireless communication.
   (17th invention). A method of controlling a recording and reproduction apparatus being used in a communication system, the communication system including a telecommunications carrier providing a public connection network and a plurality of information management servers managing contents or software, the recording and reproduction apparatus being capable of controlling recording of information onto or reproduction of information stored on an information storage medium, into which an information storage medium as set forth in any one of the 1st invention to the 6th invention is inserted, characterized in that:
the telecommunications carrier allots an identifier to the recording and reproduction apparatus, the identifier being used for activating a connection right being a right required by the recording and reproduction apparatus to connect with the public connection network,
the telecommunications carrier manages (i) connection destination information indicative of a connection destination of an information management server for which connection with the recording and reproduction apparatus is permitted and (ii) communications charges information indicative of (a) whether or not communications charges is charged due to the connection with the information management server indicated by the connection destination information and (b) a billing destination of the communications charges in a case where the communications charges is charged, the billing destination being a destination other than a user of the recording and reproduction apparatus, the (i) and (ii) being managed to be associated with the identifier,
the telecommunications carrier comprising:
   activation control means activating the connection right by use of the identifier;
   connection destination determination means determining an information management server indicated by the connection destination information from among the plurality of information management servers as an information management server for which connection with the recording and reproduction apparatus is permitted; and
   communications charges collecting means determining, while the activation control means activates the connection right, whether or not the communications charges is charged for the connection between the information management server determined by the destination determination means and the recording and reproduction apparatus, and collecting the communications charges from the billing destination indicated by the communications charges information in a case where the charges is charged, without having to obtain personal information that specifies a user of the recording and reproduction apparatus,
said method comprising:
   an identifier confirmation step for confirming whether or not the identifier is present in the information storage medium or the recording and reproduction apparatus itself; and
   a communication control step for transmitting the identifier to the activation control means, in a case where the identifier confirmation step confirms the presence of the identifier.
      (18th invention). A control program causing a computer to function as each of means of a recording and reproduction apparatus as set forth in any one of the 10th invention to the 16th invention.
      (19th invention). An information storage medium being used in a recording and reproduction apparatus as set forth in any one of the 10th invention to the 16th invention, characterized in that:
the information storage medium stores the identifier.
   (20th invention). The information storage medium according to the 19th invention, characterized in that:
the information storage medium at least comprises:
   a first information recording layer from which information can only be read out; and
   a second information recording layer on which information is additionally recordable or is rewritable,
the first information recording layer storing the identifier, and
the second information recording layer storing contents or software distributed from the information management server indicated by the connection destination information, the contents or software being stored by the recording and reproduction apparatus.
   (21st invention). A communication system comprising:
   a telecommunications carrier providing a public connection network; a plurality of information management servers managing contents or software; and
   a recording and reproduction apparatus being capable of controlling recording of information onto or reproduction of information stored on an information storage medium, characterized in that:
the telecommunications carrier allots an identifier to the recording and reproduction apparatus, the identifier being used for activating a connection right being a right required by the recording and reproduction apparatus to connect with the public connection network,
the telecommunications carrier manages (i) connection destination information indicative of a connection destination of an information management server for which connection with the recording and reproduction apparatus is permitted and (ii) communications charges information indicative of (a) whether or not communications charges is charged due to the connection between the recording and reproduction apparatus and the information management server indicated by the connection destination information and (b) a billing destination of the communications charges in a case where the communications charges is charged, the billing destination being a destination other than a user of the recording and reproduction apparatus, the (i) and (ii) being managed to be associated with the identifier,
the telecommunications carrier comprising:
   activation control means activating the connection right by use of the identifier;
   connection destination determination means determining an information management server indicated by the connection destination information from among the plurality of information management servers as an information management server for which connection with the recording and reproduction apparatus is permitted; and
   communications charges collecting means determining, while the activation control means activates the connection right, whether or not the communications charges is charged for the connection between the information management server determined by the destination determination means and the recording and reproduction apparatus, and collecting the communications charges from the billing destination indicated by the communications charges information in a case where the charges is charged, without having to obtain personal information that specifies a user of the recording and reproduction apparatus, and
the recording and reproduction apparatus comprising:
   identifier confirmation means confirming whether or not the identifier is present in the information storage medium or the recording and reproduction apparatus itself; and
   communication control means, in a case where the identifier confirmation means confirms the presence of the identifier, transmitting the identifier to the activation control means.

### Industrial Applicability

[0537] The present invention is accomplished to solve the foregoing problems, and its object is related to an information storage medium, a recording and reproduction apparatus, a method of controlling a recording and reproduction apparatus, a control program, an information storage medium, and a communication system, each of which can improve security against information leakage.

### Reference Signs List

[0538]
- 1,1a,50: recording and reproduction apparatus
- 2: spindle
- 3: disk loading recognition section
- 4: storage section
- 5: memory
- 6: operational section
- 7: display apparatus
- 8: Internet terminal apparatus
- 10: recording and reproduction circuit group
- 12: light pick-up unit
- 13: pick-up drive circuit
- 14: laser drive circuit
- 15: detection circuit
- 16: spindle circuit
- 20,20a: control section
- 22: disk loading confirmation section
- 23: recording and reproduction circuit group control section
- 24: communication section (communication means)
- 25: reproduction permitting section (reproduction permitting means)
- 26: deletion permitting section (deletion permitting means)
- 100,110,120: optical disk
- 101: substrate
- 102: RE layer (second information recording layer)
- 102a, 104a: BCA region
- 102b, 104b: lead-in region
- 102c, 104c: user data region
- 102d, 104d: lead-out region
- 103: intermediate layer
- 104: ROM layer (first information recording layer)
- 104e: specific information region
- 104f: common information region
- 105: cover layer
- 200: contents server
- 210,310: server communication section
- 220,320: server storage section
- 230,330: server control section
- 232,332: optical disk information management section
- 228: recording and reproduction circuit control section (recording control means)
- 234: reproduction permission information generation section
- 236: deletion permission information generation section
- 240: communication control section (communication control means)
- 250: information management server
- 260: identifier confirmation section (identifier confirmation means)
- 280: update control section
- 290: time measurement control section
- 295: time measurement section
- 300: shopping server
- 340: registration confirmation section (registration confirmation means)
- 350: telecommunications carrier management terminal (telecommunications carrier)
- 351: terminal communication section
- 352: terminal storage section
- 353: terminal control section
- 354: activation control section (activation control means)
- 355: connection destination determination section (connection destination determination means)
- 356: communications charges collecting section (communications charges collecting means)
- 400,410: communication system
- 500: connection destination management server

## Claims

1. An information storage medium being subjected to recording and/or reproduction by a recording and reproduction apparatus, the information storage medium being **characterized in that**:
the information storage medium stores operation identification information causing the recording and reproduction apparatus into which the information storage medium is inserted to recognize the information storage medium as an information storage medium causing the recording and reproduction apparatus to perform a commercial transaction over a network, the operation identification information serving as a trigger for causing the recording and reproduction apparatus to perform the commercial transaction.

2. The information storage medium according to claim 1, **characterized in that**:
the information storage medium is a prepaid-type information storage medium, causing a commercial transaction performed over the network to be performed after a user completes payment of prepaid charges, and
the operation identification information is information causing the recording and reproduction apparatus to recognize the information storage medium as the prepaid-type information storage medium.

3. The information storage medium according to claim 2, **characterized in that**:
the information storage medium stores (i) balance information related to a balance of the prepaid charges and (ii) transaction information related to a transaction target of the commercial transaction.

4. The information storage medium according to claim 1 , **characterized in that**:
the information storage medium is a postpaid-type information storage medium, causing a commercial transaction performed over the network to be performed by having a user pay charges after the commercial transaction is performed, and
the operation identification information is information causing the recording and reproduction apparatus to recognize the information storage as the postpaid-type information storage medium.

5. The information storage medium according to any one of claims 1 to 4, comprising:
a reproduction-only region from which information can only be read out,
the reproduction-only region comprising:
a specific information region storing (i) the operation identification information and (ii) medium-specific information unique to the information storage medium; and
a common information region storing medium common information which is common in the information storage medium.

6. The information storage medium according to claim 5, **characterized in that**:
the specific information region is stored in a BCA (Burst Cutting Area) region.

7. A recording and reproduction apparatus into which an information storage medium as set forth in any one of claims 1 to 6 is to be inserted, **characterized in that**:
the recording and reproduction apparatus comprises:
communication means communicating with the network based on the operation identification information.

8. The recording and reproduction apparatus according to claim 7, **characterized in that**:
the recording and reproduction apparatus further comprises reproduction permitting means,
the communication means receiving reproduction permission information from the network, the reproduction permission information being indicative of whether or not to permit reproduction of contents downloaded from the network by means of the commercial transaction , and
the reproduction permitting means permitting the reproduction of the contents in accordance with the reproduction permission information received.

9. The recording and reproduction apparatus according to claim 7 or 8, **characterized in that**:
the recording and reproduction apparatus further comprises deletion permitting means,
the communication means receiving deletion permission information from the network, the deletion permission information being indicative of whether or not contents downloaded from the network by means of the commercial transaction can be deleted, and
the deletion permitting means permitting deletion of the contents in accordance with the deletion permission information received.

10. A recording and reproduction apparatus being used in a communication system including a telecommunications carrier providing a public connection network and a plurality of information management servers managing contents or software, the recording and reproduction apparatus being capable of controlling recording of information onto or reproduction of information stored on an information storage medium, into which an information storage medium as set forth in any one of claims 1 to 6 is inserted, **characterized in that**:
the telecommunications carrier allots an identifier to the recording and reproduction apparatus, the identifier being used for activating a connection right being a right required by the recording and reproduction apparatus to connect with the public connection network,
the telecommunications carrier manages (i) connection destination information indicative of a connection destination of an information management server for which connection with the recording and reproduction apparatus is permitted and (ii) communications charges information indicative of (a) whether or not communications charges is charged due to the connection with the information management server indicated by the connection destination information and (b) a billing destination of the communications charges in a case where the communications charges is charged, the billing destination being a destination other than a user of the recording and reproduction apparatus, the (i) and (ii) being managed to be associated with the identifier,
the telecommunications carrier comprising:
activation control means activating the connection right by use of the identifier;
connection destination determination means determining an information management server indicated by the connection destination information from among the plurality of information management servers as an information management server for which connection with the recording and reproduction apparatus is permitted; and
communications charges collecting means determining, while the activation control means activates the connection right, whether or not the communications charges is charged for the connection between the information management server determined by the destination determination means and the recording and reproduction apparatus, and collecting the communications charges from the billing destination indicated by the communications charges information in a case where the charges is charged, without having to obtain personal information that specifies a user of the recording and reproduction apparatus,
said recording and reproduction apparatus comprising:
identifier confirmation means confirming whether or not the identifier is present in the information storage medium or the recording and reproduction apparatus itself; and,
communication control means, in a case where the identifier confirmation means confirms the presence of the identifier, transmitting the identifier to the activation control means.

11. The recording and reproduction apparatus according to claim 10, **characterized in that**:
the activation control means inactivates the connection right, and
the communication control means, after the connection right is activated by the activation control means, requests the activation control means to inactivate the connection right.

12. The recording and reproduction apparatus according to claim 11, **characterized in that**:
the communication control means, after the connection right is inactivated by the activation control means, transmits the identifier to the activation control means.

13. The recording and reproduction apparatus according to any one of claims 10 to 12, wherein:
the communication control means sends a connection request to the information management server indicated by the connection destination information.

14. An information storage medium being used in a recording and reproduction apparatus as set forth in any one of claims 10 to 13, **characterized in that**:
the information storage medium stores the identifier.

15. A communication system comprising:
a telecommunications carrier providing a public connection network;
a plurality of information management servers managing contents or software; and
a recording and reproduction apparatus being capable of controlling recording of information onto or reproduction of information stored on an information storage medium, **characterized in that**:
the telecommunications carrier allots an identifier to the recording and reproduction apparatus, the identifier being used for activating a connection right being a right required by the recording and reproduction apparatus to connect with the public connection network,
the telecommunications carrier manages (i) connection destination information indicative of a connection destination of an information management server for which connection with the recording and reproduction apparatus is permitted and (ii) communications charges information indicative of (a) whether or not communications charges is charged due to the connection between the recording and reproduction apparatus and the information management server indicated by the connection destination information and (b) a billing destination of the communications charges in a case where the communications charges is charged, the billing destination being a destination other than a user of the recording and reproduction apparatus, the (i) and (ii) being managed to be associated with the identifier,
the telecommunications carrier comprising:
activation control means activating the connection right by use of the identifier;
connection destination determination means determining an information management server indicated by the connection destination information from among the plurality of information management servers as an information management server for which connection with the recording and reproduction apparatus is permitted; and
communications charges collecting means determining, while the activation control means activates the connection right, whether or not the communications charges is charged for the connection between the information management server determined by the destination determination means and the recording and reproduction apparatus, and collecting the communications charges from the billing destination indicated by the communications charges information in a case where the charges is charged, without having to obtain personal information that specifies a user of the recording and reproduction apparatus, and
the recording and reproduction apparatus comprising:
identifier confirmation means confirming whether or not the identifier is present in the information storage medium or the recording and reproduction apparatus itself; and
communication control means, in a case where the identifier confirmation means confirms the presence of the identifier, transmitting the identifier to the activation control means.
